# NEUE EUROPÄISCHE PATENTSCHRIFT

(11) **EP 3 468 363 B2**
(45) Veröffentlichungstag und Bekanntmachung des Hinweises auf die Entscheidung über den Einspruch: **17.12.2025**
(45) Hinweis auf die Patenterteilung: 04.03.2020
(21) Anmeldenummer: 17727510.4
(22) Anmeldetag: 19.05.2017
(51) Int. Cl.: A01N 25/06, A01N 25/30, A01N 33/18, A01N 37/42, A01N 43/54, A01N 43/56, A01N 43/653, A01N 43/707, A01N 43/90, A01N 47/24, A01N 47/36, A01N 47/40, A01P 15/00

(54) **VERWENDUNG VON N-SUBSTITUIERTEN PYRROLIDONEN ZUR FÖRDERUNG DER PENETRATION VON AGROCHEMISCHEN WIRKSTOFFEN**
USE OF N-SUBSTITUTED PYRROLIDONES TO PROMOTE THE PENETRATION OF AGROCHEMICAL ACTIVE AGENTS
UTILISATION DE PYRROLIDONES N-SUBSTITUÉES POUR PROMOUVOIR LA PÉNÉTRATION D'AGENTS ACTIFS AGROCHIMIQUES

(30) Priorität: 08.06.2016 DE 102016210164
(43) Veröffentlichungstag der Anmeldung: 17.04.2019
(73) Patentinhaber: Clariant International Ltd, 4132 Muttenz (CH)
(72) Erfinder: APONTE, John, Mount Holly , NC 28120 (US); BAUR, Peter, 86938 Schondorf (DE); SCHWEINITZER, Gerd, 65934 Frankfurt am Main (DE); MILBRADT, Robert, 65191 Wiesbaden (DE); ARNOLD, Roland, 65627 Elbtal (DE); BODELON, Luciana, 65934 Frankfurt am Main (DE); WEICK, Tanja, 65779 Kelkheim (DE)
(74) Vertreter: Rippel, Hans Christoph
(86) Internationale Anmeldenummer: PCT/EP2017/062180
(87) Internationale Veröffentlichungsnummer: WO 2017/211572

(56) Entgegenhaltungen:
- EP-A1- 0 391 168
- EP-A2- 2 260 702
- WO-A1-2010/023198
- WO-A1-2013/126947
- WO-A1-2016/034618
- CA-A1- 2 114 234
- US-A- 4 361 436
- US-A- 4 595 679
- US-A- 5 071 463
- US-A- 5 160 528
- US-A- 5 389 688
- US-A- 5 698 540
- US-A1- 2019 045 778
- G. Theodoridis in “Modern Crop Protection Compounds”, Vol. 1 (Hrsg. W. Krämer, U.Schirmer), WILEY-VCH Verlag GmbH & Co KGaA, Weinheim 2007, S. 161
- H. Sauter in “Modern Crop Protection Compounds“, Vol.2 (Hrsg. W.Krämer, U.Schirmer), WILEY-VCH Verlag GmbH & Co KGaA, Weinheim 2007, S. 472, 473 und 476
- H. Mollet, A. Grubenmann, Formulation Technology, 1st ed. WILEY-VCH Verlag GmbH, Weinheim 2001, S. 389-394
- D. Calvert, J. Bullock, in „Agrow: Formulations 2016“, AgribusinessIntellegence, Informa UK Ltd., London 2016, insbesondere S. 37-42 und 74-84
- C. Elsik, S. Tann, A. Kirby, in “Environmental Fate and Safety Management of Agrochemicals” (Hrsg. Clark and Ohkawa), Kapitel 26 “Pesticide Formulation Technology Innovation” ACS Symposium Series; American Chemical Society: Washington, DC, 2005, S 297- 308
- D. Leming et al., Journal of ASTM International, Vol. 7, No. 9, Paper ID JAI102800
- Randy Cush, Golf Course Management, 74 (2006) S. 143-145
- COURIER, The Bayer CropScience Magazine for modern Agriculture 1/05, S. 6 - 9
- Tomlin (ed.), C.D.S., "The Pesticide Manual" Hampshire: British Crop Production Council (BCPC), 2006, ed. 14
- Auszüge aus der Datenbank Gestis zurWassermischbarkeit vont N-Methyl-2-pyrroTidon und N-Butyl-2-pyrrohdon
- L. Schreiber, J. Schönherr, Water and Solute Permeability of Plant Cuticles,SpnngerVerlao. Berlin Heidelberg. 2009. Kapitel 9. S. 259-273
- P Baur, Plant. Cell and Environment (1997), 20. 167-177
- J. Bukovacetal., Pestic Sei. (1993),37, 179-194
- ch Ballmann et al, Planta (2011),234:9-20

## Beschreibung

Die Erfindung betrifft die Verwendung von bestimmten N-substituierten Pyrrolidonen zur Förderung der Penetration von agrochemischen Wirkstoffe n in Pflanzen oder in nicht-pflanzliche Schadorganismen bzw. ein entsprechendes Verfahren zur Förderung der Penetration agrochemischer Wirkstoffe in Pflanzen oder in nicht-pflanzliche Schadorganismen.

Ein generelles Problem bei der Anwendung von agrochemischen Wirkstoffen ist, dass nur ein Bruchteil der Wirkstoffe die gewünschte Aktivität entfaltet. Der größere Teil geht oft ungenutzt verloren, indem der Wirkstoff bei der Ausbringung beispielsweise einer Spritzbrühe nicht die Blätter oder die Wurzeln der Pflanze erreicht, sondern ungenutzt im Boden versickert, nicht gut an der Zielpflanze angelagert wird, durch Regen abgewaschen oder von der Pflanze einfach nicht richtig aufgenommen wird. Ein anderes Problem kann aber auch darin bestehen, dass der agrochemische Wirkstoff nicht oder nicht in ausreichender Menge in zu bekämpfende nicht-pflanzliche Schadorganismen eindringt und so nicht seine volle Wirksamkeit entfaltet.

Zur besseren Aufnahme von agrochemischen Wirkstoffen in Pflanzen kommt beispielsweise Substanzen, die die Penetration von agrochemischen Wirkstoffen in die Pflanzen fördern, eine wichtige Rolle zu. Typische Vertreter sind veresterte Pflanzenöle, welche die Penetrationsgeschwindigkeit durch die Blattoberfäche erhöhen oder Tenside und Mineralöle, welche die Kontaktfläche erhöhen. Oft sind Mittel mit diesen Wirkmechanismen aber aus Gründen wie unzureichender Pflanzenverträglichkeit, Problemen bei Verwendung bzw. Stabilität in Formulierungen oder Applikationsflüssigkeiten, ungenügender Wirkung, zu hoher Aufwandmengen oder Kosten verbesserungsbedürftig. Des Weiteren wäre es wünschenswert auch Substanzen zur Verfügung zu stellen, die die Penetration von agrochemischen Wirkstoffen in nicht-pflanzliche Schadorganismen fördern.

Es stellte sich somit die Aufgabe, Substanzen zur Verfügung zu stellen, die in vorteilhafter Weise zur Förderung der Penetration von agrochemischen Wirkstoffen in Pflanzen oder in nicht-pflanzliche Schadorganismen geeignet sind.

Es wurde nun überraschend gefunden, dass diese Aufgabe gelöst wird und N-substituierte Pyrrolidone der Formel (I) 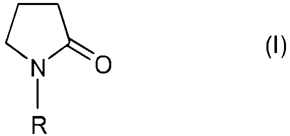 worin
- R: eine lineare oder verzweigte, gesättigte Alkylgruppe mit 3 bis 6, vorzugsweise 3 bis 5 und besonders bevorzugt 4 Kohlenstoffatomen, bedeutet, wobei in der Alkylgruppe ein Wasserstoff -H durch eine Methoxygruppe -OCH₃ ersetzt sein kann,
und wobei 1 bis 6 Wasserstoffe -H des Pyrrolidonrings durch Methyl -CH₃ ersetzt sein können,
in vorteilhafter Weise zur Förderung der Penetration eines oder mehrerer agrochemischer Wirkstoffe in Pflanzen oder in nicht-pflanzliche Schadorganismen geeignet sind.

Gegenstand der vorliegenden Erfindung ist daher die Verwendung eines oder mehrerer N-substituierter Pyrrolidone der Formel (I) 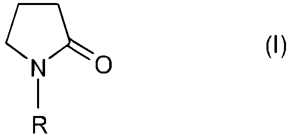 worin
- R: eine lineare oder verzweigte, gesättigte Alkylgruppe mit 3 bis 6, vorzugsweise 3 bis 5 und besonders bevorzugt 4 Kohlenstoffatomen, bedeutet, wobei in der Alkylgruppe ein Wasserstoff -H durch eine Methoxygruppe -OCH₃ ersetzt sein kann,
und wobei 1 bis 6 Wasserstoffe -H des Pyrrolidonrings durch Methyl -CH₃ ersetzt sein können,
zur Förderung der Penetration eines oder mehrerer agrochemischer Wirkstoffe in Pflanzen oder in nicht-pflanzliche Schadorganismen.

Bei dem einen oder den mehreren N-substituierten Pyrrolidonen der Formel (I) handelt es sich um entsprechend N-substituierte 2-Pyrrolidone, d.h. die Carbonylgruppe CO des Pyrrolidonrings ist benachbart zum Ring-Stickstoff N.

Durch die Wirkung der N-substituierten Pyrrolidone der Formel (I) als Penetrationsförderer wird die biologische Wirksamkeit von agrochemischen Wirkstoffen durch deren verstärktes Eindringen in die Pflanzen, wie beispielsweise in die Kutikula, oder in die nicht-pflanzlichen Schadorganismen erhöht. Insbesondere wird in Gegenwart einer oder mehrerer N-substituierter Pyrrolidone der Formel (I) mehr agrochemischer Wirkstoff in die Pflanze oder in den nicht-pflanzlichen Schadorganismus aufgenommen im Vergleich zu der Situation, dass bei der Anwendung des agrochemischen Wirkstoffs keine N-substituierten Pyrrolidone der Formel (I) zugegen sind.

Die N-substituierten Pyrrolidone der Formel (I) zeichnen sich durch ein sehr vorteilhaftes toxikologisches und ökologisches Profil aus. Mit Hilfe der N-substituierten Pyrrolidone der Formel (I) können Pflanzenschutzmittel-Formulierungen ohne fortpflanzungsgefährdende Wirkung und mit hoher biologischer Wirksamkeit hergestellt werden.

Die N-substituierten Pyrrolidone der Formel (I) besitzen gute lösevermögende Eigenschaften und ermöglichen eine hohe Beladung von Pflanzenschutzmitteln mit agrochemischem Wirkstoff. Hierbei können die N-substituierten Pyrrolidone insbesondere als polare aprotische Lösungsmittel dienen.

Beispielsweise lassen sich mit N-(n-Butyl)-2-Pyrrolidon Lösungen von Azoxystrobin in einer Menge von größer als 20 Gew.-%, Lösungen von Tebuconazol in einer Menge von größer als 50 Gew.-%, Lösungen von Prothioconazol in einer Menge von größer als 35 Gew.-%, Lösungen von Imidacloprid in einer Menge von größer als 15 Gew.-%, Lösungen von Metribuzin in einer Menge von größer als 50 Gew.-%, Lösungen von Saflufenacil in einer Menge von größer als 20 Gew.-% und Lösungen von Thiacloprid in einer Menge von größer als 15 Gew.-% herstellen, wobei die angegebene Menge an Wirkstoff jeweils auf das Gesamtgewicht der Lösung bezogen ist.

Aufgrund der hohen Wasserlöslichkeit der N-substituierten Pyrrolidone der Formel (I) können diese beispielsweise als einzige flüssige Phase in Pflanzenschutzmitteln verwendet werden oder auch z. B. in wasserlöslichen Konzentraten (SL) mit Wasser kombiniert werden.

Zusätzlich können die N-substituierten Pyrrolidone der Formel (I) auch in vorteilhafter Weise mit verschiedenen nicht-wassermischbaren Lösungsmitteln kombiniert werden und können als Cosolventien in Lösungsmittel enthaltenden Formulierungen wie beispielsweise in Emulsionskonzentraten (EC), Öldispersionen (OD), Suspoemulsionen (SE) und Mikroemulsionen (ME) dienen. Insbesondere das N-(n-Butyl)-2-Pyrrolidon ist mit vielen Lösungsmitteln in allen Verhältnissen mischbar, beispielsweise mit Wasser, Propylenglykol, Polyethylenglykol, Dimethylamid, Solvesso^{®} 200 ND, alkyliertem Pflanzenöl oder Mineralölen.

Mit Hilfe der N-substituierten Pyrrolidone der Formel (I) können lagerstabile Pflanzenschutzmittel und vorzugsweise lagerstabile flüssige Pflanzenschutzmittel hergestellt werden.

US 4361436 offenbart, dass N-Methyl-Pyrrolidon (NMP) die Penetration von Ethephon in Pflanzen fördert. US 4595679 offenbart, dass N-Methyl-Pyrrolidon die Penetration von Insektiziden in den Körper von Schadinsekten fördert.

Aus der WO 2013/107822 ist die Verwendung von N-substituierten Pyrrolidonen als "nicht-reprotoxische" Lösungsmittel bzw. Lösungsmittel ohne fortpflanzungsgefährdende Wirkung bekannt. In der WO 2013/107822 ist auch beschrieben, dass die Lösungsmittel in agrochemischen Formulierungen als lösende, verdünnende oder dispergierende Mittel verwendet werden können.

In der WO 2005/104844 ist die Verwendung von Carbonsäureamiden der Formel R¹-CO-NR²R³ worin R¹ C₃-C₁₉-Alkyl, R² C₁-C₆ Alkyl und R³ H oder C₁-C₆-Alkyl bedeuten, zur Förderung der Penetration von agrochemischen Wirkstoffen in Pflanzen beschrieben. Bei diesen Carbonsäureamiden handelt es sich um nichtcyclische Verbindungen.

EP 0 453 915 A1 offenbart die Verwendung von N-Alkyllactamen, die am Stickstoff N des Ringes mit einer Alkylgruppe mit 6 bis 18 Kohlenstoffatomen substituiert sind, zur Verhinderung der Kristallisation insbesondere von bestimmten Azolderivat-Wirkstoffen beim Ausbringen von wässrigen Spritzbrühen. Bei den N-Alkyllactamen kann es sich beispielsweise um die entsprechenden N-Alkylpyrrolidone handeln.

In einer besonders bevorzugten Ausführungsform der Erfindung wird das eine oder werden die mehreren N-substituierten Pyrrolidone der Formel (I) zur Förderung der Penetration eines oder mehrerer agrochemischer Wirkstoffe in Pflanzen, verwendet.

In einer weiteren besonders bevorzugten Ausführungsform der Erfindung wird das eine oder werden die mehreren N-substituierten Pyrrolidone der Formel (I) zur Förderung der Penetration eines oder mehrerer agrochemischer Wirkstoffe in nicht-pflanzliche Schadorganismen verwendet.

In einer weiteren besonders bevorzugten Ausführungsform der Erfindung wird das eine oder werden die mehreren N-substituierten Pyrrolidone der Formel (I) sowohl zur Förderung der Penetration eines oder mehrerer agrochemischer Wirkstoffe in Pflanzen als auch zur Förderung der Penetration eines oder mehrerer agrochemischer Wirkstoffe in nicht-pflanzliche Schadorganismen verwendet. Dies kann insbesondere dann eintreten, wenn die nicht-pflanzlichen Schadorganismen auf der Pflanze angesiedelt sind, welche mit dem einen oder den mehreren N-substituierten Pyrrolidonen der Formel (I) und dem einen oder den mehreren agrochemischen Wirkstoffen behandelt wurde, und so ebenfalls in Kontakt mit diesen Substanzen kommen. Die Förderung der Penetration in die Pflanze einerseits und in den nicht-pflanzlichen Schadorganismus andererseits kann entweder gleichzeitig geschehen oder zeitlich nacheinander, beispielsweise davon abhängig, ob der nicht-pflanzliche Schadorganismus bereits auf der Pflanze angesiedelt war als diese mit dem einen oder den mehreren N-substituierten Pyrrolidonen der Formel (I) und dem einen oder den mehreren agrochemischen Wirkstoffen behandelt wurde oder sich zeitlich erst danach auf der Pflanze angesiedelt hat.

Vorzugsweise ist das eine oder sind die mehreren N-substituierten Pyrrolidone der Formel (I) ausgewählt aus der Gruppe bestehend aus N-(n-Butyl)-2-Pyrrolidon, N-(iso-Butyl)-2-Pyrrolidon, N-(tert.-Butyl)-2-Pyrrolidon, N-(n-Pentyl)-2-Pyrrolidon, N-(Methyl-substituiertes Butyl)-2-Pyrrolidon, Ring-Methyl-substituiertes N-(Propyl)-2-Pyrrolidon, Ring-Methyl-substituiertes N-(Butyl)-2-Pyrrolidon und N-(Methoxypropyl)-2-Pyrrolidon.

Die erfindungsgemäß verwendeten N-substituierten Pyrrolidone der Formel (I) umfassen Verbindungen, in denen 1 bis 6 Wasserstoffe -H des Pyrrolidonrings durch Methyl -CH₃ ersetzt sein können. Im Rahmen der vorliegenden Anmeldung werden diese Verbindungen auch als "Ring-Methyl-substituierte N-substituierte Pyrrolidone" der Formel (I) bezeichnet. Die Ring-Methyl-Substitution kann dabei an der Position 3, 4 oder 5 des Pyrrolidonrings vorliegen. Die Ring-Methyl-Substitution kann eine Substitution des Rings mit einer Methylgruppe sein. Sie umfasst aber beispielsweise auch Ring-Dimethyl-Substitutionen, vorzugsweise an zwei verschiedenen Positionen des Pyrrolidonrings, wie z. B. an den Positionen 3 und 4, 3 und 5 oder 4 und 5 des Pyrrolidonrings. Die Ring-Methyl-Substitution umfasst darüber hinaus Ring-Trimethyl-Substitutionen, vorzugsweise die Trimethyl-Substitution an den Positionen 3, 4 und 5 des Pyrrolidonrings der Ring-Methyl-substituierten N-substituierten Pyrrolidone der Formel (I).

Unter den Ring-Methyl-substituierten N-substituierten Pyrrolidonen der Formel (I) sind die verschiedenen Ring-Methyl-substituierten N-(Propyl)-2-Pyrrolidone und Ring-Methyl-substituierten N-(Butyl)-2-Pyrrolidone der Formel (I) bevorzugt, die Ring-Methyl-substituierten N-(n-Propyl)-, N-(iso-Propyl)-, N-(n-Butyl)-, N-(isoButyl)-, N-(tert.-Butyl)-, N-(sec-Butyl)- und N-(1-Methylpropyl)-2-Pyrrolidone der Formel (I) besonders bevorzugt und die Ring-Methyl-substituierten N-(n-Butyl)-2-Pyrrolidone der Formel (I) insbesondere bevorzugt.

Vorzugsweise ist in dem einen oder den mehreren N-substituierten Pyrrolidonen der Formel (I) kein Wasserstoff -H des Pyrrolidonrings durch Methyl -CH₃ ersetzt.

Weiterhin bevorzugt ist in der Alkylgruppe des Restes R des einen oder der mehreren N-substituierten Pyrrolidone der Formel (I) kein Wasserstoff -H durch eine Methoxygruppe -OCH₃ ersetzt.

Besonders bevorzugt ist das N-substituierte Pyrrolidon der Formel (I) N-(n-Butyl)-2-Pyrrolidon.

Die N-substituierten Pyrrolidone der Formel (I) werden einzeln oder in Form von Gemischen erfindungsgemäß verwendet.

Die N-substituierten Pyrrolidone der Formel (I) sind entweder kommerziell erhältlich oder nach dem Fachmann geläufigen Methoden synthetisierbar.

In einer bevorzugten Ausführungsform der Erfindung wird das eine oder werden die mehreren N-substituierten Pyrrolidone der Formel (I) bei der erfindungsgemäßen Verwendung in einem Pflanzenschutzmittel enthaltend
a) 1 bis 90 Gew.-% und vorzugsweise 5 bis 70 Gew.-% an einem oder mehreren N-substituierten Pyrrolidonen der Formel (I) und
b) 1 bis 90 Gew.-% und vorzugsweise 2,5 bis 70 Gew.-% an einem oder mehreren agrochemischen Wirkstoffen
eingesetzt.

Die soeben genannten und bei der erfindungsgemäßen Verwendung eingesetzten Pflanzenschutzmittel können ein oder mehrere Zusatzstoffe enthalten. Sie enthalten vorzugsweise 0 bis 98 Gew.-% und besonders bevorzugt 1 bis 60 Gew.-% an einem oder mehreren Zusatzstoffen.

In einer weiteren bevorzugten Ausführungsform der Erfindung wird das eine oder werden die mehreren N-substituierten Pyrrolidone der Formel (I) bei der erfindungsgemäßen Verwendung in einem Pflanzenschutzmittel enthaltend
a) 1 bis 50 Gew.-%, vorzugsweise 5 bis 40 Gew.-% und besonders bevorzugt 5 bis 30 Gew.-% an einem oder mehreren N-substituierten Pyrrolidonen der Formel (I) und
b) 1 bis 90 Gew.-%, vorzugsweise 5 bis 60 Gew.-% und besonders bevorzugt 2,5 bis 50 Gew.-% an einem oder mehreren agrochemischen Wirkstoffen
eingesetzt.

Die soeben genannten und bei der erfindungsgemäßen Verwendung eingesetzten Pflanzenschutzmittel können ein oder mehrere Zusatzstoffe enthalten. Sie enthalten vorzugsweise 0 bis 98 Gew.-% und besonders bevorzugt 1 bis 50 Gew.-% an einem oder mehreren Zusatzstoffen.

In einer bevorzugten Ausführungsform der Erfindung enthalten die bei der erfindungsgemäßen Verwendung eingesetzten Pflanzenschutzmittel Wasser.

Das eine oder die mehreren N-substituierten Pyrrolidone der Formel (I) können bei der erfindungsgemäßen Verwendung auch in einem Tankmixadditiv angewendet werden, d. h. sie stellen keinen integrierten Bestandteil des Pflanzenschutzmittels dar. Vielmehr liegen u.a. der eine oder die mehreren agrochemischen Wirkstoffe einerseits und die N-substituierten Pyrrolidone der Formel (I) andererseits getrennt voneinander vor. Beide Komponenten werden vor dem Ausbringen, in der Regel kurz vorher, miteinander vermischt. Es können vor dem Ausbringen auch weitere Komponenten zugegeben werden wie z.B. gegebenenfalls ein oder mehrere Zusatzstoffe und/oder Wasser. Hierbei entsteht im Prinzip ein Pflanzenschutzmittel enthaltend ein oder mehrere agrochemische Wirkstoffe, ein oder mehrere N-substituierte Pyrrolidone der Formel (I) und gegebenenfalls ein oder mehrere Zusatzstoffe und/oder Wasser, wenn auch nur kurzzeitig.

In einer weiteren bevorzugten Ausführungsform der Erfindung wird das eine oder werden die mehreren N-substituierten Pyrrolidone der Formel (I) bei der erfindungsgemäßen Verwendung in einem Tankmixadditiv enthaltend 1 bis 90 Gew.-%, vorzugsweise 5 bis 50 Gew.-% und besonders bevorzugt 5 bis 20 Gew.-% an einem oder mehreren N-substituierten Pyrrolidonen der Formel (I), und zusätzlich ein oder mehrere Zusatzstoffe und gegebenenfalls Wasser eingesetzt. Die Menge an dem einen oder den mehreren Zusatzstoffen beträgt in dem Tankmixadditiv vorzugsweise 5 bis 95 Gew.-%, besonders bevorzugt 10 bis 90 Gew.-% und insbesondere bevorzugt 20 bis 80 Gew.-%.

Die jeweilige flächen- und/oder objektbezogene Aufwandmenge der Pflanzenschutzmittel unterschiedlichster Formulierungstypen zum Einsatz für die erfindungsgemäße Verwendung variiert sehr stark. Im Allgemeinen werden hierfür die dem Fachmann als gebräuchlich für das jeweilige Einsatzgebiet bekannten Applikationsmedien in den gebräuchlichen Mengen eingesetzt, wie beispielsweise von fünfzig bis mehreren hundert Liter Wasser pro Hektar bei Standard-Spritzverfahren über wenige Liter Öl pro Hektar bei der "Ultra Low Volume"-Flugzeugapplikation bis hin zu wenigen Millilitern einer physiologischen Lösung bei Injektionsverfahren. Die Konzentrationen der Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind.

Die Pflanzenschutzmittel können z. B. in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z. B. durch Verspritzen, Giessen oder Injizieren.

Die Aufwandmenge an den Pflanzenschutzmitteln kann innerhalb eines grösseren Bereiches variiert werden. Sie richtet sich nach den jeweiligen agrochemischen Wirkstoffen und nach deren Gehalt in den Formulierungen.

In einer weiteren bevorzugten Ausführungsform der Erfindung wird das eine oder werden die mehreren N-substituierten Pyrrolidone der Formel (I) bei der erfindungsgemäßen Verwendung in einem Pflanzenschutzmittel in der Form einer wässrigen Spritzbrühe eingesetzt. Diese wässrigen Spritzbrühen enthalten vorzugsweise
a) 0,001 bis 99 Gew.-%, besonders bevorzugt 0,01 bis 50 Gew.-% und insbesondere bevorzugt 0,02 bis 1 Gew.-% an einem oder mehreren N-substituierten Pyrrolidonen der Formel (I) und
b) 0,001 bis 10 Gew.-%, besonders bevorzugt 0,002 bis 5 Gew.-% und insbesondere bevorzugt 0,0025 bis 3 Gew.-% an einem oder mehreren agrochemischen Wirkstoffen.

Die soeben genannten und bei der erfindungsgemäßen Verwendung eingesetzten wässrigen Spritzbrühen können ein oder mehrere Zusatzstoffe enthalten. Sie enthalten vorzugsweise 0 bis 99 Gew.-% und besonders bevorzugt 0,01 bis 80 Gew.-% an einem oder mehreren Zusatzstoffen.

Die Mengenangaben betreffend die N-substituierten Pyrrolidone der Formel (I), die agrochemischen Wirkstoffe und die Zusatzstoffe beziehen sich auf das Gesamtgewicht der bei der erfindungsgemäßen Verwendung engesetzten Pflanzenschutzmittel und im Falle von agrochemischen Wirkstoffen, die in protonierter Form Säuren darstellen, aber in Form ihrer wasserlöslichen Salze eingesetzt werden, auf die Menge an freier Säure, dem sogenannten Säureäquivalent ("acid equivalent", a.e.).

Unter agrochemischen Wirkstoffen sind im Rahmen der vorliegenden Beschreibung alle Wirkstoffe zu verstehen, deren biologische Wirksamkeit durch ein verstärktes Eindringen in eine Kultur- oder Schadpflanze oder in einen nicht-pflanzlichen Schadorganismus erhöht werden kann.

Bevorzugte agrochemische Wirkstoffe sind ausgewählt aus Pestiziden. Pestizide, unter denen Herbizide den größten Anteil einnehmen, sind chemische Substanzen, synthetisch hergestellt oder natürlichen Ursprungs, die in Pflanzenzellen, Pflanzengewebe oder in parasitäre Organismen bzw. nicht-pflanzliche Schadorganismen in oder auf der Pflanze eindringen und diese schädigen und/oder zerstören. Bevorzugte Pestizide sind ausgewählt aus der Gruppe bestehend aus Fungiziden, Bakteriziden, Insektiziden, Akariziden, Nematiziden, Herbiziden, Pflanzenwuchsregulatoren, Pflanzennährstoffen, Repellents, Molluskiden und Rodentiziden. Besonders bevorzugte Pestizide sind ausgewählt aus der Gruppe bestehend aus Herbiziden, Fungiziden und Insektiziden.

Als Beispiele für Herbizide seien genannt:
Wirkstoffe, die auf einer Inhibition von beispielsweise Acetolaktat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, wie sie z. B. aus Weed Research 26 (1986) 441 445 oder "The Pesticide Manual", 16th edition, The British Crop Protection Council and the Royal Soc. of Chemistry, 2012 und dort zitierter Literatur beschrieben sind. Als bekannte Herbizide oder Pflanzenwachstumsregulatoren sind z. B. folgende Wirkstoffe zu nennen (die Verbindungen sind entweder mit dem "common name" nach der International Organization for Standardization (ISO) oder mit dem chemischen Namen oder mit der Codenummer bezeichnet) und umfassen stets sämtliche Anwendungsformen wie Säuren, Salze, Ester und Isomere wie Stereoisomere und optische Isomere. Dabei sind beispielhaft eine und zum Teil auch mehrere Anwendungsformen genannt: Acetochlor, Acibenzolar, Acibenzolar-S-methyl, Acifluorfen, Acifluorfen-sodium, Aclonifen, Alachlor, Allidochlor, Alloxydim, Alloxydim-sodium, Ametryn, Amicarbazone, Amidochlor, Amidosulfuron, Aminocyclopyrachlor, Aminocyclopyrachlorkalium, Aminocyclopyrachlormethyl, Aminopyralid, Amitrole, Ammoniumsulfamat, Ancymidol, Anilofos, Asulam, Atrazine, Aviglycin, Azafenidin, Azimsulfuron, Aziprotryn, Beflubutamid, Benazolin, Benazolinethyl, Bencarbazone, Benfluralin, Benfuresate, Bensulide, Bensulfuron, Bensulfuronmethyl, Bentazone, Benzfendizone, Benzobicyclon, Benzofenap, Benzofluor, Benzoylprop, Benzyladenin, Bicyclopyrone, Bifenox, Bilanafos, Bilanafosnatrium, Bispyribac, Bispyribacnatrium, Bromacil, Bromobutide, Bromofenoxim, Bromoxynil, Bromuron, Buminafos, Busoxinone, Butachlor, Butafenacil, Butamifos, Butenachlor, Butralin, Butroxydim, Butylate, Cafenstrole, Carbaryl, Carbetamide, Carfentrazone, Carfentrazoneethyl, Carvone, Chlorcholinchlorid, Chlomethoxyfen, Chloramben, Chlorazifop, Chlorazifopbutyl, Chlorbromuron, Chlorbufam, Chlorfenac, Chlorfenacnatrium, Chlorfenprop, Chlorflurenol, Chlorflurenolmethyl, Chloridazon, Chlorimuron, Chlorimuronethyl, Chlormequatchlorid, Chlornitrofen, 4-Chlorophenoxyacetic acid, Chlorophthalim, Chlorpropham, Chlorthaldimethyl, Chlorotoluron, Chlorsulfuron, Cinidon, Cinidonethyl, Cinmethylin, Cinosulfuron, Clethodim, Clodinafop, Clodinafoppropargyl, Clofencet, Clomazone, Clomeprop, Cloprop, Clopyralid, Cloransulam, Cloransulammethyl, Cloxyfonac, Cumyluron, Cyanamide, Cyanazine, Cyclanilide, Cycloate, Cyclosulfamuron, Cycloxydim, Cycluron, Cyhalofop, Cyhalofopbutyl, Cyperquat, Cyprazine, Cyprazole, Cytokinine, 2,4-D, 2,4-DB, Daimuron/Dymron, Dalapon, Daminozide, Dazomet, n-Decanol, Desmedipham, Desmetryn, Detosyl-Pyrazolate (DTP), Diallate, Diaminozid, Dicamba, Dichlobenil, Dichlorprop, Dichlorprop-P, Diclofop, Diclofopmethyl, Diclofop-P-methyl, Diclosulam, Diethatyl, Diethatylethyl, Difenoxuron, Difenzoquat, Diflufenican, Diflufenzopyr, Diflufenzopyrnatrium, Dikegulac-sodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Diisopropylnaphthalene, Dipropetryn, Diquat, Diquatdibromide, Dithiopyr, Diuron, DNOC, Eglinazineethyl, Endothal, EPTC, Esprocarb, Ethalfluralin, Ethametsulfuron, Ethametsulfuronmethyl, Ethylnaphthylacetat, Ethephon, Ethidimuron, Ethiozin, Ethofumesate, Ethoxyfen, Ethoxyfenethyl, Ethoxysulfuron, Etobenzanid, F-5331, d.h. N-[2-Chlor-4-fluor-5-[4-(3-fluorpropyl)-4,5-dihydro-5-oxo-1H-tetrazol-1-yl]-phenyl]-ethansulfonamid, F-7967, d. h. 3-[7-Chlor-5-fluor-2-(trifluormethyl)-1H-benzimidazol-4-yl]-1-methyl-6-(trifluormethyl) pyrimidin-2,4(1H,3H)-dion, Fenoprop, Fenoxaprop, Fenoxaprop-P, Fenoxapropethyl, Fenoxaprop-P-ethyl, Fenoxasulfone, Fentrazamide, Fenuron, Flamprop, Flamprop-M-isopropyl, Flamprop-M-methyl, Flazasulfuron, Florasulam, Fluazifop, Fluazifop-P, Fluazifopbutyl, Fluazifop-P-butyl, Fluazolate, Flucarbazone, Flucarbazonesodium, Flucetosulfuron, Fluchloralin, Flufenacet (Thiafluamide), Flufenpyr, Flufenpyrethyl, Flumetralin, Flumetsulam, Flumiclorac, Flumicloracpentyl, Flumioxazin, Flumipropyn, Fluometuron, Fluorodifen, Fluoroglycofen, Fluoroglycofenethyl, Flupoxam, Flupropacil, Flupropanate, Flupyrsulfuron, Flupyrsulfuronmethylsodium, Flurenol, Flurenol-butyl, Fluridone, Flurochloridone, Fluroxypyr, Fluroxypyr-meptyl, Flurprimidol, Flurtamone, Fluthiacet, Fluthiacetmethyl, Fluthiamide, Fomesafen, Foramsulfuron, Forchlorfenuron, Fosamine, Furyloxyfen, Gibberellinsäure, Glufosinate, Glufosinateammonium, Glufosinate-P, Glufosinate-P-ammonium, Glufosinate-P-natrium, Glyphosate, Glyphosate-isopropylammonium, H-9201, d. h. O-(2,4-Dimethyl-6-nitrophenyl)-O-ethylisopropylphosphor amidothioat, Halosafen, Halosulfuron, Halosulfuronmethyl, Haloxyfop, Haloxyfop-P, Haloxyfopethoxyethyl, Haloxyfop-P-ethoxyethyl, Haloxyfopmethyl, Haloxyfop-P-methyl, Hexazinone, HW-02, d. h. 1-(Dimethoxyphosphoryl)-ethyl-(2,4-dichlorphenoxy)acetat, Imazamethabenz, Imazamethabenzmethyl, Imazamox, Imazamoxammonium, Imazapic, Imazapyr, Imazapyrisopropylammonium, Imazaquin, Imazaquinammonium, Imazethapyr, Imazethapyrammonium, Imazosulfuron, Inabenfide, Indanofan, Indaziflam, Indolessigsäure (IAA), 4-Indol-3-ylbuttersäure (IBA), lodosulfuron, lodosulfuronmethyl-natrium, lofensulfuron, lofensulfuronnatrium, loxynil, Ipfencarbazone, Isocarbamid, Isopropalin, Isoproturon, Isouron, Isoxaben, Isoxachlortole, Isoxaflutole, Isoxapyrifop, KUH-043, d. h. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, Karbutilate, Ketospiradox, Lactofen, Lenacil, Linuron, Maleinsäurehydrazid, MCPA, MCPB, MCPB-methyl, -ethyl und -natrium, Mecoprop, Mecopropnatrium, Mecopropbutotyl, Mecoprop-P-butotyl, Mecoprop-P-dimethylammonium, Mecoprop-P-2-ethylhexyl, Mecoprop-P-kalium, Mefenacet, Mefluidide, Mepiquat-chlorid, Mesosulfuron, Mesosulfuronmethyl, Mesotrione, Methabenzthiazuron, Metam, Metamifop, Metamitron, Metazachlor, Metazasulfuron, Methazole, Methiopyrsulfuron, Methiozolin, Methoxyphenone, Methyldymron, 1-Methylcyclopropen, Methylisothiocyanat, Metobenzuron, Metobromuron, Metolachlor, S-Metolachlor, Metosulam, Metoxuron, Metribuzin, Metsulfuron, Metsulfuronmethyl, Molinate, Monalide, Monocarbamide, Monocarbamidedihydrogensulfat, Monolinuron, Monosulfuron, Monosulfuronester, Monuron, MT-128, d. h. 6-Chlor-N-[(2E)-3-chlorprop-2-en-1-yl]-5-methyl-N-phenylpyridazin-3-amin, MT-5950, d. h. N-[3-Chlor-4-(1-methylethyl)-phenyl]-2-methylpentanamid, NGGC-011, 1-Naphtylacetic Acid (NAA), Naphthylacetamid (NAAm), 2-Naphtoxyacetic Acid, Naproanilide, Napropamide, Naptalam, NC-310, d. h. 4-(2,4-Dichlorobenzoyl)-1-methyl-5-benzyloxypyrazole, Neburon, Nicosulfuron, Nipyraclofen, Nitralin, Nitrofen, Nitroguaiacolate, Nitrophenolatnatrium (Isomerengemisch), Nitrofluorfen, Nonansäure, Norflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquatdichlorid, Pelargonsäure (Nonansäure), Pendimethalin, Pendralin, Penoxsulam, Pentanochlor, Pentoxazone, Perfluidone, Pethoxamid, Phenisopham, Phenmedipham, Phenmediphamethyl, Picloram, Picolinafen, Pinoxaden, Piperophos, Pirifenop, Pirifenopbutyl, Pretilachlor, Primisulfuron, Primisulfuronmethyl, Probenazole, Profluazol, Procyazine, Prodiamine, Prifluraline, Profoxydim, Prohexadione, Prohexadionecalcium, Prohydrojasmone, Prometon, Prometryn, Propachlor, Propanil, Propaquizafop, Propazine, Propham, Propisochlor, Propoxycarbazone, Propoxycarbazonenatrium, Propyrisulfuron, Propyzamide, Prosulfalin, Prosulfocarb, Prosulfuron, Prynachlor, Pyraclonil, Pyraflufen, Pyraflufenethyl, Pyrasulfotole, Pyrazolynate (Pyrazolate), Pyrazosulfuron, Pyrazosulfuronethyl, Pyrazoxyfen, Pyribambenz, Pyribambenz-isopropyl, Pyribambenzpropyl, Pyribenzoxim, Pyributicarb, Pyridafol, Pyridate, Pyriftalid, Pyriminobac, Pyriminobac-methyl, Pyrimisulfan, Pyrithiobac, Pyrithiobacnatrium, Pyroxasulfone, Pyroxsulam, Quinclorac, Quinmerac, Quinoclamine, Quizalofop, Quizalofopethyl, Quizalofop-P, Quizalofop-P-ethyl, Quizalofop-P-tefuryl, Rimsulfuron, Saflufenacil, Secbumeton, Sethoxydim, Siduron, Simazine, Simetryn, SN-106279, d. h. Methyl-(2R)-2-({7-[2-chlor-4-(trifluormethyl)phenoxy]-2-naphthyl}oxy)propanoat, Sulcotrione, Sulfallate (CDEC), Sulfentrazone, Sulfometuron, Sulfometuronmethyl, Sulfosate (Glyphosate-trimesium), Sulfo-sulfuron, SW-065, SYN-523, SYP-249, d. h. 1-Ethoxy-3-methyl-1-oxobut-3-en-2-yl-5-[2-chlor-4-(trifluormethyl)phenoxy]-2-nitrobenzoat, SYP-300, d.h. 1-[7-Fluor-3-oxo-4-(prop-2-in-1-yl)-3,4-dihydro-2H-1,4-benzoxazin-6-yl]-3-propyl-2-thioxoimidazolidin-4,5-dion, Tebutam, Tebuthiuron, Tecnazene, Tefuryltrione, Tembotrione, Tepraloxydim, Terbacil, Terbucarb, Terbuchlor, Terbumeton, Terbuthylazine, Terbutryn, Thenylchlor, Thiafluamide, Thiazafluron, Thiazopyr, Thidiazimin, Thidiazuron, Thiencarbazone, Thiencarbazonemethyl, Thifensulfuron, Thifensulfuronmethyl, Thiobencarb, Tiocarbazil, Topramezone, Tralkoxydim, Triafamone, Triallate, Triasulfuron, Triaziflam, Triazofenamide, Tribenuron, Tribenuronmethyl, Tribufos, Trichloressigsäure (TCA), Triclopyr, Tridiphane, Trietazine, Trifloxysulfuron, Trifloxysulfuronnatrium, Trifluralin, Triflusulfuron, Triflusulfuronmethyl, Trimeturon, Trinexapac, Trinexapacethyl, Tritosulfuron, Tsitodef, Uniconazole, Uniconazole-P, Vernolate, ZJ-0862, d. h. 3,4-Dichlor-N-{2-[(4,6-dimethoxypyrimidin-2-yl)oxy]benzyl}anilin, sowie die folgenden Verbindungen:

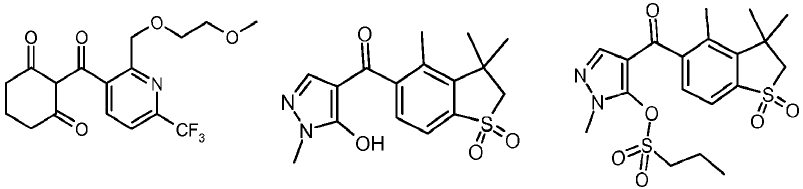

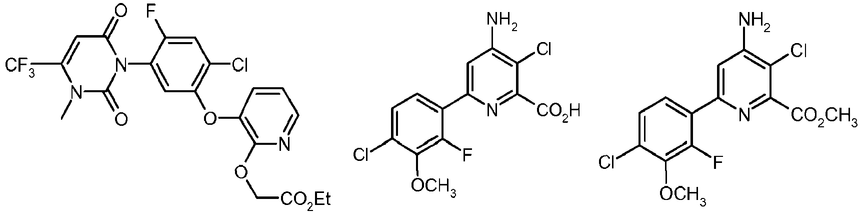

Als Beispiele für Pflanzenwuchsregulatoren seien ferner genannt: Abszissinsäure, Amidochlor, Ancymidol, 6-Benzylaminopurin, Brassinolid, Brassinosteroide, Butralin, Chlormequat (Chlormequatchlorid), Cholinchlorid, Cyclanilid, Daminozid, Dikegulac, Dimethipin, 2,6-Dimethylpyridin, Ethephon, Flumetralin, Flurprimidol, Fluthiacet, Forchlorfenuron, Gibberellinsäure, Inabenfid, Indol-3-essigsäure, Jasmonsäure, Kinetin, Maleinhydrazid, Mefluidide, Mepiquat (Mepiquatchlorid), 1-Naphthylessigsäure, N-6-Benzyladenin, Paclobutrazol, Prohexadion (Prohexadion-Calcium), Prohydrojasmon, Salicylsäure und ihre Ester, Thidiazuron, Triapenthenol, Tributyl-phosphorotrithioat, 2,3,5-Triiodbenzoesäure, Trinexapacethyl und Uniconazole.

Weiter seien Substanzen genannt, die als Pflanzenwuchsregulatoren und/oder Pflanzenstärkungsmittel wirken können, um den Einfluss von Stressfaktoren wie Hitze, Kälte, Trockenheit, Salz, Sauerstoffmangel bzw.- Überschwemmung auf das Pflanzenwachstum zu mindern. Hier seien beispielhaft genannt Glycinbetain (Betain), Cholin, Kaliumphosphat oder andere Phosphatsalze, sowie Silikate.

Als Beispiele für Pflanzennährstoffe seien übliche anorganische oder organische Dünger zur Versorgung von Pflanzen mit Makro- und/oder Mikronährstoffen genannt.

Als Beispiele für Fungizide seien genannt:
(1) Inhibitoren der Ergosterol-Biosynthese, wie beispielsweise Aldimorph, Azaconazol, Bitertanol, Bromuconazol, Cyproconazol, Diclobutrazol, Difenoconazol, Diniconazol, Diniconazol-M, Dodemorph, Dodemorph Acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-Cis, Hexaconazol, Imazalil, Imazalil Sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Prothioconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Uniconazol-p, Viniconazol, Voriconazol, 1-(4-Chlorphenyl)-2-(1H-1,2,4-triazol-1-yl)cycloheptanol, Methyl-1-(2,2-dimethyl-2,3-dihydro-1H-inden-1-yl)-1H-imidazol-5-carboxylat, N'-{5-(Difluormethyl)-2-methyl-4-[3-(trimethylsilyl)propoxy]phenyl}-N-ethyl-N-methylimidoformamid, N-Ethyl-N-methyl-N'-{2-methyl-5-(trifluormethyl)-4-[3-(trimethylsilyl)propoxy]phenyl}imidoformamid und O-[1-(4-Methoxyphenoxy)-3,3-dimethylbutan-2-yl]-1H-imidazol-1-carbothioat.
(2) Inhibitoren der Respiration (Atmungsketten-Inhibitoren), wie beispielsweise Bixafen, Boscalid, Carboxin, Diflumetorim, Fenfuram, Fluopyram, Flutolanil, Fenpicoxamid, Fluxapyroxad, Furametpyr, Furmecyclox, Isopyrazam Mischung des synepimeren Razemates 1RS,4SR,9RS und des anti-empimeren Razemates 1RS,4SR,9SR, Isopyrazam (anti-epimeres Razemat), Isopyrazam (anti-epimeres Enantiomer 1R,4S,9S), Isopyrazam (anti-epimeres Enantiomer 1S,4R,9R), Isopyrazam (synepimeres Razemat 1RS,4SR,9RS), Isopyrazam (synepimeres Enantiomer 1R,4S,9R), Iso-pyrazam (syn-epimeres Enantiomer 1S,4R,9S), Mepronil, Oxycarboxin, Penflufen, Penthiopyrad, Sedaxane, Thifluzamid, 1-Methyl-N-[2-(1,1,2,2-tetrafluorethoxy)phenyl]-3-(trifluormethyl)-1H-pyrazol-4-carboxamid, 3-(Difluormethyl)-1-methyl-N-[2-(1,1,2,2-tetrafluorethoxy)phenyl]-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, N-[1-(2,4-Dichlorphenyl)-1-methoxypropan-2-yl]-3-(difluormethyl)-1-methyl-1H-pyrazol-4-carboxamid, 5,8-Difluor-N-[2-(2-fluor-4-{[4-(trifluormethyl)pyridin-2-yl]oxy}phenyl)ethyl]quinazolin-4-amin, N-[9-(Dichlormethylen)-1,2,3,4-tetrahydro-1,4-methanonaphthalen-5-yl]-3-(difluormethyl)-1-methyl-1H-pyrazol-4-carboxamid, N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid und N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid.
(3) Inhibitoren der Respiration (Atmungsketten-Inhibitoren) am Komplex III der Atumungskette, wie beispielsweise Ametoctradin, Amisulbrom, Azoxystrobin, Cyazofamid, Coumethoxystrobin, Coumoxystrobin, Dimoxystrobin, Enestroburin, Famoxadon, Fenamidon, Fenoxystrobin, Fluoxastrobin, Kresoxim-Methyl, Metominostrobin, Orysastrobin, Picoxystrobin, Pyraclostrobin, Pyrametostrobin, Pyraoxystrobin, Pyribencarb, Triclopyricarb, Trifloxystrobin, (2E)-2-(2-{[6-(3-Chlor-2-methylphenoxy)-5-fluorpyrimidin-4-yl]oxy}phenyl)-2-(methoxyimino)-N-methylethanamid, (2E)-2-(Methoxyimino)-N-methyl-2-(2-{[({(1E)-1-[3-(trifluormethyl)phenyl]ethyliden}amino)oxy]methyl}phenyl)ethanamid, (2E)-2-(Methoxyimino)-N-methyl-2-{2-[(E)-({1-[3-(trifluormethyl)phenyl]ethoxy}imino)methyl]phenyl}ethanamid, (2E)-2-{2-[({[(1E)-1-(3-{[(E)-1-Fluor-2-phenylethenyl]oxy}phenyl)ethyliden]-amino}oxy)methyl]phenyl}-2-(methoxyimino)-N-methylethanamid, (2E)-2-{2-[({[(2E,3E)-4-(2,6-Dichlorphenyl)but-3-en-2-yliden]amino}oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, 5-Methoxy-2-methyl-4-(2-{[({(1E)-1-[3-(trifluormethyl)phenyl]ethyliden}amino)oxy]methyl}phenyl)-2,4-dihydro-3H-1,2,4-triazol-3-on, Methyl-(2E)-2-{2-[({cyclopropyl[(4-methoxyphenyl)imino]methyl}sulfanyl)methyl]phenyl}-3-methoxyprop-2-enoat, N-(3-Ethyl-3,5,5-trimethylcyclohexyl)-3-(formylamino)-2-hydroxybenzamid, 2-{2-[(2,5-Dimethylphenoxy)methyl]phenyl}-2-methoxy-N-methylacetamid und (2R)-2-{2-[(2,5-Dimethylphenoxy)methyl]phenyl}-2-methoxy-N-methylacetamid.
(4) Inhibitoren der Mitose und Zellteilung, wie beispielsweise Benomyl, Carbendazim, Chlorfenazol, Diethofencarb, Ethaboxam, Fluopicolid, Fuberidazol, Pencycuron, Thiabendazol, Thiophanat-Methyl, Thiophanat, Zoxamid, 5-Chlor-7-(4-methylpiperidin-1-yl)-6-(2,4,6-trifluorphenyl)[1,2,4]triazolo[1,5-a]pyrimidin und 3-Chlor-5-(6-chlorpyridin-3-yl)-6-methyl-4-(2,4,6-trifluorphenyl)pyridazin.
(5) Verbindungen mit Multisite-Aktivität, wie beispielsweise Bordeauxmischung, Captafol, Captan, Chlorothalonil, Kupferzubereitungen wie Kupferhydroxid, Kupfernaphthenat, Kupferoxid, Kupferoxychlorid, Kupfersulfat, Dichlofluanid, Dithianon, Dodine, Dodine freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Zinkmetiram, Kupfer-Oxin, Propamidin, Propineb, Schwefel und Schwefelzubereitungen wie beispielsweise Calciumpolysulfid, Thiram, Tolylfluanid, Zineb und Ziram.
(6) Resistenzinduktoren, wie beispielsweise Acibenzolar-S-Methyl, Isotianil, Probenazol und Tiadinil.
(7) Inhibitoren der Aminosäure- und Protein-Biosynthese, wie beispielsweise Andoprim, Blasticidin-S, Cyprodinil, Kasugamycin, Kasugamycin Hydrochlorid Hydrat, Mepanipyrim, Pyrimethanil und 3-(5-Fluor-3,3,4,4-tetramethyl-3,4-dihydroisoquinolin-1-yl)quinolin.
(8) Inhibitoren der ATP Produktion, wie beispielsweise Fentin Acetat, Fentin Chlorid, Fentin Hydroxid und Silthiofam.
(9) Inhibitoren der Zellwandsynthese, wie beispielsweise Benthiavalicarb, Dimethomorph, Flumorph, Iprovalicarb, Mandipropamid, Polyoxins, Polyoxorim, Validamycin A und Valifenalat.
(10) Inhibitoren der Lipid- und Membran-Synthese, wie beispielsweise Biphenyl, Chloroneb, Dicloran, Edifenphos, Etridiazol, Iodocarb, Iprobenfos, Isoprothiolan, Propamocarb, Propamocarb Hydrochlorid, Prothiocarb, Pyrazophos, Quintozen, Tecnazene und Tolclofos-Methyl.
(11) Inhibitoren der Melanin-Biosynthese, wie beispielsweise Carpropamid, Diclocymet, Fenoxanil, Fthalid, Pyroquilon, Tricyclazol und 2,2,2-Trifluorethyl {3-methyl-1-[(4-methylbenzoyl)amino]butan-2-yl}carbamat.
(12) Inhibitoren der Nukleinsäuresynthese, wie beispielsweise Benalaxyl, Benalaxyl-M (Kiralaxyl), Bupirimat, Clozylacon, Dimethirimol, Ethirimol, Furalaxyl, Hymexazol, Metalaxyl, Metalaxyl-M (Mefenoxam), Ofurace, Oxadixyl und Oxolinsäure.
(13) Inhibitoren der Signaltransduktion, wie beispielsweise Chlozolinat, Fenpiclonil, Fludioxonil, Iprodion, Procymidon, Quinoxyfen und Vinclozolin.
(14) Entkoppler, wie beispielsweise Binapacryl, Dinocap, Ferimzon, Fluazinam und Meptyldinocap.
(15) Weitere Verbindungen, wie beispielsweise Benthiazol, Bethoxazin, Capsimycin, Carvon, Chinomethionat, Pyriofenon (Chlazafenon), Cufraneb, Cyflufenamid, Cymoxanil, Cyprosulfamide, Dazomet, Debacarb, Dichlorophen, Diclomezin, Difenzoquat, Difenzoquat Methylsulphat, Diphenylamin, Ecomat, Fenpyrazamin, Flumetover, Fluoromid, Flusulfamid, Flutianil, Fosetyl-Aluminium, Fosetyl-Calcium, Fosetyl-Natrium, Hexachlorbenzol, Irumamycin, Methasulfocarb, Methylisothiocyanat, Metrafenon, Mildiomycin, Natamycin, Nickel Dimethyldithiocarbamat, Nitrothal-Isopropyl, Octhilinone, Oxamocarb, Oxyfenthiin, Pentachlorphenol und dessen Salze, Phenothrin, Phosphorsäure und deren Salze, Propamocarb-Fosetylat, Propanosin-Natrium, Proquinazid, Pyrimorph, (2E)-3-(4-Tert-butylphenyl)-3-(2-chlorpyridin-4-yl)-1-(morpholin-4-yl)prop-2-en-1-on, (2Z)-3-(4-Tert-butylphenyl)-3-(2-chlorpyridin-4-yl)-1-(morpholin-4-yl)prop-2-en-1-on, Pyrrolnitrin, Tebufloquin, Tecloftalam, Tolnifanid, Triazoxid, Trichlamid, Zarilamid, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat, 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-Methoxyphenoxy)-3,3-dimethylbutan-2-yl-1H-imidazol-1-carboxylat, 2,3,5,6-Tetrachlor-4-(methylsulfonyl)pyridin, 2,3-Dibutyl-6-chlorthieno[2,3-d]pyrimidin-4(3H)-on, 2,6-Dimethyl-1H,5H-[1,4]dithiino[2,3-c:5,6-c']dipyrrol-1 ,3,5,7(2H,6H)-tetron, 2-[5-Methyl-3-(trifluormethyl)-1 H-pyrazol-1-yl]-1-(4-{4-[(5R)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-{4-[4-(5-phenyl-4,5-dihydro-1,2-oxazol-3-yl)-1,3-thiazol-2-yl]piperidin-1-yl}ethanon, 2-Butoxy-6-iod-3-propyl-4H-chromen-4-on, 2-Chlor-5-[2-chlor-1-(2,6-difluor-4-methoxyphenyl)-4-methyl-1H-imidazol-5-yl]pyridin, 2-Phenylphenol und dessen Salze, 3-(4,4,5-Trifluor-3,3-dimethyl-3,4-dihydroisoquinolin-1-yl)quinolin, 3,4,5-Trichlorpyridin-2,6-dicarbonitril, 3-[5-(4-Chlorphenyl)-2,3-dimethyl-1,2-oxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 5-Amino-1,3,4-thiadiazol-2-thiol, 5-Chlor-N'-phenyl-N'-(prop-2-in-1-yl)thiophen-2-sulfonohydrazid, 5-Fluor-2-[(4-fluorbenzyl)oxy]pyrimidin-4-amin, 5-Fluor-2-[(4-methylbenzyl)oxy]pyrimidin-4-amin, 5-Methyl-6-octyl[1,2,4]triazolo[1,5-a]pyrimidin-7-amin, Ethyl-(2Z)-3-amino-2-cyan-3-phenylprop-2-enoat, N'-(4-{[3-(4-Chlorbenzyl)-1,2,4-thiadiazol-5-yl]oxy}-2,5-dimethylphenyl)-N-ethyl-N-methylimidoformamid, N-(4-Chlorbenzyl)-3-[3-methoxy-4-(prop-2-in-1-yloxy)phenyl]propanamid, N-[(4-Chlorphenyl)(cyan)methyl]-3-[3-methoxy-4-(prop-2-in-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(E)-[(Cyclopropylmethoxy)imino][6-(difluormethoxy)-2,3-difluorphenyl]methyl}-2-phenylacetamid, N-{(Z)-[(Cyclopropylmethoxy)¬imino][6-(difluormethoxy)-2,3-difluorphenyl]methyl}-2-phenylacetamid, N'-{4-[(3-Tert-butyl-4-cyano-1,2-thiazol-5-yl)oxy]-2-chlor-5-methylphenyl}-N-ethyl-N-methylimidoformamid, N-Methyl-2-(1-{[5-methyl-3-(trifluormethyl)-1H-pyrazol-1-yl]acetyl}piperidin-4-yl)-N-(1,2,3,4-tetrahydronaphthalen-1-yl)-1,3-thiazol-4-carboxamid, N-Methyl-2-(1-{[5-methyl-3-(trifluormethyl)-1H-pyrazol-1-yl]acetyl}¬piperidin-4-yl)-N-[(1R)-1,2,3,4-tetrahydronaphthalen-1-yl]-1,3-thiazol-4-carboxamid, N-Methyl-2-(1-{[5-methyl-3-(trifluormethyl)-1H-pyrazol-1-yl]acetyl}piperidin-4-yl)-N-[(1S)-1,2,3,4-tetrahydronaphthalen-1-yl]-1 ,3-thiazol-4-carboxamid, Pentyl-{6-[({[(1-methyl-1H-tetrazol-5-yl)(phenyl)methyliden]amino}oxy)methyl]pyridin-2-yl}carbamat, Phenazin-1-carbonsäure, Chinolin-8-ol, Chinolin-8-olsulfat(2:1) und Tert-butyl {6-[({[(1-methyl-1H-tetrazol-5-yl)(phenyl)methylen]amino}oxy)methyl]pyridin-2-yl}carbamat.
(16) Weitere Verbindungen, wie beispielsweise 1-Methyl-3-(trifluormethyl)-N-[2'-(trifluormethyl)biphenyl-2-yl]-1H-pyrazol-4-carboxamid, N-(4'-Chlorbiphenyl-2-yl)-3-(difluormethyl)-1-methyl-1H-pyrazol-4-carboxamid, N-(2',4'-Dichlorbiphenyl-2-yl)-3-(difluormethyl)-1-methyl-1H-pyrazol-4-carboxamid, 3-(Difluormethyl)-1-methyl-N-[4'-(trifluormethyl)biphenyl-2-yl]-1H-pyrazol-4-carboxamid, N-(2',5'-Difluorbiphenyl-2-yl)-1-methyl-3-(trifluormethyl)-1H-pyrazol-4-carboxamid, 3-(Difluormethyl)-1-methyl-N-[4'-(prop-1-in-1-yl)biphenyl-2-yl]-1H-pyrazol-4-carboxamid, 5-Fluor-1 ,3-dimethyl-N-[4'-(prop-1-in-1-yl)biphenyl-2-yl]-1H-pyrazol-4-carboxamid, 2-Chlor-N-[4'-(prop-1-in-1-yl)biphenyl-2-yl]pyridin-3-carboxamid, 3-(Difluormethyl)-N-[4'-(3,3-dimethylbut-1-in-1-yl)biphenyl-2-yl]-1-methyl-1H-pyrazol-4-carboxamid, N-[4'-(3,3-Dimethylbut-1-in-1-yl)biphenyl-2-yl]-5-fluor-1,3-dimethyl-1H-pyrazol-4-carboxamid, 3-(Difluormethyl)-N-(4'-ethinylbiphenyl-2-yl)-1-methyl-1H-pyrazol-4-carboxamid, N-(4'-Ethinylbiphenyl-2-yl)-5-fluor-1,3-dimethyl-1H-pyrazol-4-carboxamid, 2-Chlor-N-(4'-ethinylbiphenyl-2-yl)pyridin-3-carboxamid, 2-Chlor-N-[4'-(3,3-dimethylbut-1-in-1-yl)biphenyl-2-yl]pyridin-3-carboxamid, 4-(Difluormethyl)-2-methyl-N-[4'-(trifluormethyl)biphenyl-2-yl]-1,3-thiazol-5-carboxamid, 5-Fluor-N-[4'-(3-hydroxy-3-methylbut-1-in-1-yl)biphenyl-2-yl]-1,3-dimethyl-1 H-pyrazol-4-carboxamid, 2-Chlor-N-[4'-(3-hydroxy-3-methylbut-1-in-1-yl)biphenyl-2-yl]pyridin-3-carboxamid, 3-(Difluormethyl)-N-[4'-(3-methoxy-3-methylbut-1-in-1-yl)biphenyl-2-yl]-1-methyl-1H-pyrazol-4-carboxamid, 5-Fluor-N-[4'-(3-methoxy-3-methylbut-1-in-1-yl)biphenyl-2-yl]-1,3-dimethyl-1H-pyrazol-4-carboxamid, 2-Chlor-N-[4'-(3-methoxy-3-methylbut-1-in-1-yl)biphenyl-2-yl]pyridin-3-carboxamid, (5-Brom-2-methoxy-4-methylpyridin-3-yl)(2,3,4-trimethoxy-6-methylphenyl)methanon, N-[2-(4-{[3-(4-Chlorphenyl)prop-2-in-1-yl]oxy}-3-methoxyphenyl)ethyl]-N2-(methylsulfonyl)valinamid, 4-Oxo-4-[(2-phenylethyl)amino]butansäure und But-3-yn-1-yl {6-[({[(Z)-(1-methyl-1H-tetrazol-5-yl)(phenyl)methylen]amino}oxy)methyl]pyridin-2-yl}carbamat.

Alle genannten Pestizide (1) bis (16) können, wenn sie aufgrund ihrer funktionellen Gruppen dazu imstande sind, gegebenenfalls mit geeigneten Basen oder Säuren Salze bilden.

Als Beispiele für Bakterizide seien genannt:
Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
(1) Acetylcholinesterase (AChE) Inhibitoren, wie beispielsweise Carbamate, z. B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb; oder Organophosphate, z. B. Acephate, Azamethiphos, Azinphosethyl, Azinphosmethyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphosmethyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Antagonisten, wie beispielsweise Cyclodienorganochlorine, z. B. Chlordane und Endosulfan; oder Phenylpyrazole (Fiprole), z. B. Ethiprole und Fipronil.
(3) Natrium-Kanal-Modulatoren / Spannungsabhängige Natrium-Kanal-Blocker, wie beispielsweise Pyrethroide, z.B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)- Isomere)], Tralomethrin und Transfluthrin; oder DDT; oder Methoxychlor.
(4) Nikotinerge Acetylcholin-Rezeptor (nAChR) Agonisten, wie beispielsweise Neonikotinoide, z. B. Acetamiprid, Clothianidin, Dinotefuran, Imidacloprid, Nitenpyram, Thiacloprid und Thiamethoxam; oder Nikotin.
(5) Nikotinerge Acetylcholin-Rezeptor (nAChR) allosterische Aktivatoren, wie beispielsweise Spinosine, z. B. Spinetoram und Spinosad.
(6) Chlorid-Kanal-Aktivatoren, wie beispielsweise Avermectine/Milbemycine, z. B. Abamectin, Emamectin-benzoat, Lepimectin und Milbemectin.
(7) Juvenilhormon-Imitatoren, wie beispielsweise Juvenilhormon-Analoge, z. B. Hydroprene, Kinoprene und Methoprene; oder Fenoxycarb; oder Pyriproxyfen.
(8) Wirkstoffe mit unbekannten oder nicht spezifischen Wirkmechanismen, wie beispielsweise Alkylhalide, z. B. Methylbromid und andere Alkylhalide; oder Chloropicrin; oder Sulfurylfluorid; oder Borax; oder Brechweinstein.
(9) Selektive Fraßhemmer, z. B. Pymetrozine; oder Flonicamid.
(10) Milbenwachstumsinhibitoren, z. B. Clofentezine, Hexythiazox und Diflovidazin; oder Etoxazole.
(11) Mikrobielle Disruptoren der Insektendarmmembran, z. B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1Fa, Cry2Ab, mCry3A, Cry3Ab, Cry3Bb, Cry34/35Ab1.
(12) Inhibitoren der oxidativen Phosphorylierung, ATP-Disruptoren, wie beispielsweise Diafenthiuron; oder Organozinnverbindungen, z. B. Azocyclotin, Cyhexatin und Fenbutatin-oxid; oder Propargite; oder Tetradifon.
(13) Entkoppler der oxidativen Phoshorylierung durch Unterbrechung des H-Protongradienten, wie beispielsweise Chlorfenapyr, DNOC und Sulfluramid.
(14) Nikotinerge Acetylcholin-Rezeptor-Antagonisten, wie beispielsweise Bensultap, Cartaphydrochlorid, Thiocyclam und Thiosultap-Natrium.
(15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, Dipteran, wie beispielsweise Cyromazine.
(18) Ecdyson-Rezeptor Agonisten, wie beispielsweise Chromafenozide, Halofenozide, Methoxyfenozide und Tebufenozide.
(19) Oktopaminerge Agonisten, wie beispielsweise Amitraz.
(20) Komplex-III-Elektronentransportinhibitoren, wie beispielsweise Hydramethylnon; oder Acequinocyl; oder Fluacrypyrim.
(21) Komplex-I-Elektronentransportinhibitoren, beispielsweise METI-Akarizide, z. B. Fenazaquin, Fenpyroximate, Pyrimidifen, Pyridaben, Tebufenpyrad und Tolfenpyrad; oder Rotenone (Derris).
(22) Spannungsabhängige Natriumkanal-Blocker, z. B. Indoxacarb; oder Metaflumizone.
(23) Inhibitoren der Acetyl-CoA-Carboxylase, wie beispielsweise Tetron- und Tetramsäurederivate, z. B. Spirodiclofen, Spiromesifen und Spirotetramat.
(24) Komplex-IV-Elektronentransportinhibitoren, wie beispielsweise Phosphine, z. B. Aluminiumphosphid, Calciumphosphid, Phosphin und Zinkphosphid; oder Cyanid.
(25) Komplex-II-Elektronentransportinhibitoren, wie beispielsweise Cyenopyrafen.
(26) Ryanodinrezeptor-Effektoren, wie beispielsweise Diamide, z. B. Chlorantraniliprole und Flubendiamide.

Weitere Wirkstoffe mit unbekanntem Wirkmechanismus, wie beispielsweise Amidoflumet, Azadirachtin, Benclothiaz, Benzoximate, Bifenazate, Bromopropylate, Chinomethionat, Cryolite, Cyantraniliprole (Cyazypyr), Cyflumetofen, Dicofol, Diflovidazin, Fluensulfone, Flufenerim, Flufiprole, Fluopyram, Fufenozide, Imidaclothiz, Iprodione, Pyridalyl, Pyrifluquinazon und lodmethan; desweiteren Präparate auf Basis von Bacillus firmus (I-1582, BioNeem, Votivo) sowie folgende bekannte wirksame Verbindungen:
3-Brom-N-{2-brom-4-chlor-6-[(1-cyclopropylethyl)carbamoyl]phenyl}-1-(3-chlorpyridin-2-yl)-1H-pyrazol-5-carboxamid, 4-{[(6-Brompyrid-3-yl)methyl](2-fluorethyl)amino}furan-2(5H)-on, 4-{[(6-Fluorpyrid-3-yl)methyl](2,2-difluorethyl)amino}furan-2(5H)-on, 4-{[(2-Chlor-1,3-thiazol-5-yl)methyl](2-fluorethyl)amino}furan-2(5H)-on, 4-{[(6-Chlorpyrid-3-yl)methyl](2-fluorethyl)amino}furan-2(5H)-on, 4-{[(6-Chlorpyrid-3-yl)methyl](2,2-difluorethyl)amino}furan-2(5H)-on, 4-{[(6-Chlor-5-fluorpyrid-3-yl)methyl](methyl)amino}furan-2(5H)-on, 4-{[(5,6-Dichlorpyrid-3-yl)methyl](2-fluorethyl)amino}furan-2(5H)-on, 4-{[(6-Chlor-5-fluorpyrid-3-yl)methyl](cyclopropyl)-amino}furan-2(5H)-on, 4-{[(6-Chlorpyrid-3-yl)methyl](cyclopropyl)amino}furan-2(5H)-on, 4-{[(6-Chlorpyrid-3-yl)methyl](methyl)amino}furan-2(5H)-on, {[1-(6-Chlorpyridin-3-yl)ethyl](methyl)oxido-λ4-sulfanyliden}cyanamid und seine Diastereomere {[(1R)-1-(6-Chlorpyridin-3-yl)ethyl](methyl)oxido-λ4-sulfanyliden}cyanamid (A) und {[(1S)-1-(6-Chlorpyridin-3-yl)ethyl](methyl)oxido-λ4-sulfanyliden}cyanamid (B) sowie Sulfoxaflor und seine Diastereomere [(R)-Methyl(oxido){(1R)-1-[6-(trifluormethyl)pyridin-3-yl]ethyl}-λ4-sulfanyliden]cyanamid (A1) und [(S)-Methyl(oxido){(1S)-1-[6-(trifluormethyl)pyridin-3-yl]ethyl}-λ4-sulfanyliden]cyanamid (A2), bezeichnet als Diastereomerengruppe A, [(R)-Methyl(oxido){(1S)-1-[6-(trifluormethyl)pyridin-3-yl]ethyl}-λ4-sulfanyliden]cyanamid (B1) und [(S)-Methyl(oxido){(1R)-1-[6-(trifluormethyl)pyridin-3-yl]ethyl}-λ4-sulfanyliden]cyanamid (B2), bezeichnet als Diastereomerengruppe B und 11-(4-Chlor-2,6-dimethylphenyl)-12-hydroxy-1,4-dioxa-9-azadispiro[4.2.4.2]tetradec-11-en-10-on, 3-(4'-Fluor-2,4-dimethylbiphenyl-3-yl)-4-hydroxy-8-oxa-1-azaspiro[4.5]dec-3-en-2-on, 1-{2-Fluor-4-methyl-5-[(2,2,2-trifluorethyl)sulfinyl]phenyl}-3-(trifluormethyl)-1H-1,2,4-triazol-5-amin, [(3S,4aR,12R,12aS,12bS)-3-[(Cyclopropylcarbonyl)oxy]-6,12-dihydroxy-4,12b-dimethyl-11-oxo-9-(pyridin-3-yl)-1,3,4,4a,5,6,6a,12,12a,12b-decahydro-2H,11H-benzo[f]pyrano[4,3-b]chromen-4-yl]methylcyclopropancarboxylat, 2-Cyan-3-(difluormethoxy)-N,N-dimethylbenzolsulfonamid, 2-Cyan-3-(difluormethoxy)-N-methylbenzolsulfonamid, 2-Cyan-3-(difluormethoxy)-N-ethylbenzolsulfonamid, 4-(Difluormethoxy)-N-ethyl-N-methyl-1,2-benzothiazol-3-amin-1,1-dioxid, N-[1-(2,3-Dimethylphenyl)-2-(3,5-dimethylphenyl)ethyl]-4,5-dihydro-1,3-thiazol-2-amin, {1'-[(2E)-3-(4-Chlorphenyl)prop-2-en-1-yl]-5-fluorspiro[indol-3,4'-piperidin]-1(2H)-yl}(2-chlorpyridin-4-yl)methanon, 3-(2,5-Dimethylphenyl)-4-hydroxy-8-methoxy-1,8-diazaspiro[4.5]dec-3-en-2-on, 3-(2,5-Dimethylphenyl)-8-methoxy-2-oxo-1,8-diazaspiro[4.5]dec-3-en-4-yl-ethylcarbonat, 4-(But-2-in-1-yloxy)-6-(3,5-dimethylpiperidin-1-yl)-5-fluorpyrimidin, (2,2,3,3,4,4,5,5-Octafluorpentyl)(3,3,3-trifluorpropyl)malononitril, (2,2,3,3,4,4,5,5-Octafluorpentyl)(3,3,4,4,4-pentafluorbutyl)malononitril, 8-[2-(Cyclopropylmethoxy)-4-(trifluormethyl)phenoxy]-3-[6-(trifluormethyl)pyridazin-3-yl]-3-azabicyclo[3.2.1]octan, 2-Ethyl-7-methoxy-3-methyl-6-[(2,2,3,3-tetrafluor-2,3-dihydro-1,4-benzodioxin-6-yl)oxy]chinolin-4-yl-methylcarbonat, 2-Ethyl-7-methoxy-3-methyl-6-[(2,2,3,3-tetrafluor-2,3-dihydro-1,4-benzodioxin-6-yl)oxy]chinolin-4-ylacetat, PF1364 (CAS-Reg.Nr. 1204776-60-2), 5-[5-(3,5-Dichlorphenyl)-5-(trifluormethyl)-4,5-dihydro-1,2-oxazol-3-yl]-2-(1H-1,2,4-triazol-1-yl)benzonitril, 5-[5-(2-Chlorpyridin-4-yl)-5-(trifluormethyl)-4,5-dihydro-1,2-oxazol-3-yl]-2-(1H-1,2,4-triazol-1-yl)benzonitril, 4-[5-(3,5-Dichlorphenyl)-5-(trifluormethyl)-4,5-dihydro-1,2-oxazol-3-yl]-2-methyl-N-{2-oxo-2-[(2,2,2-trifluorethyl)amino]ethyl}benzamid, 4-{[(6-Chlorpyridin-3-yl)methyl](cyclopropyl)amino}-1,3-oxazol-2(5H)-on, 4-{[(6-Chlorpyridin-3-yl)methyl]¬(2,2-difluorethyl)amino}-1,3-oxazol-2(5H)-on, 4-{[(6-Chlorpyridin-3-yl)methyl](ethyl)amino}-1,3-oxazol-2(5H)-on, 4-{[(6-Chlorpyridin-3-yl)methyl](methyl)amino}-1,3-oxazol-2(5H)-on, NNI-0711, 1-Acetyl-N-[4-(1,1,1,3,3,3-hexafluor-2-methoxypropan-2-yl)-3-isobutylphenyl]-N-isobutyryl-3,5-dimethyl-1 H-pyrazol-4-carboxamid, Methyl-2-[2-({[3-brom-1-(3-chlorpyridin-2-yl)-1H-pyrazol-5-yl]carbonyl}amino)-5-chlor-3-methylbenzoyl]-2-methylhydrazincarboxylat, Methyl-2-[2-({[3-brom-1-(3-chlorpyridin-2-yl)-1H-pyrazol-5-yl]carbonyl}amino)-5-cyan-3-methylbenzoyl]-2-ethylhydrazincarboxylat, Methyl-2-[2-({[3-brom-1-(3-chlorpyridin-2-yl)-1H-pyrazol-5-yl]carbonyl}amino)-5-cyan-3-methylbenzoyl]-2-methylhydrazincarboxylat, Methyl-2-[3,5-dibrom-2-({[3-brom-1-(3-chlorpyridin-2-yl)-1H-pyrazol-5-yl]carbonyl}amino)benzoyl]-1,2-diethylhydrazincarboxylat, Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat, (5RS,7RS;5RS,7SR)-1-(6-Chlor-3-pyridylmethyl)-1,2,3,5,6,7-hexahydro-7-methyl-8-nitro-5-propoxyimidazo[1,2-a]pyridin, 2-{6-[2-(5-Fluorpyridin-3-yl)-1,3-thiazol-5-yl]pyridin-2-yl}pyrimidin, 2-{6-[2-(Pyridin-3-yl)-1,3-thiazol-5-yl]pyridin-2-yl}pyrimidin, 1-(3-Chlorpyridin-2-yl)-N-[4-cyan-2-methyl-6-(methylcarbamoyl)phenyl]-3-{[5-(trifluormethyl)-1H-tetrazol-1-yl]methyl}-1H-pyrazol-5-carboxamid, 1-(3-Chlorpyridin-2-yl)-N-[4-cyan-2-methyl-6-(methylcarbamoyl)phenyl]-3-{[5-(trifluormethyl)-2H-tetrazol-2-yl]methyl}-1H-pyrazol-5-carboxamid, N-[2-(tert-Butylcarbamoyl)-4-cyan-6-methylphenyl]-1-(3-chlorpyridin-2-yl)-3-{[5-(trifluormethyl)-1H-tetrazol-1-yl]methyl}-1H-pyrazol-5-carboxamid, N-[2-(tert-Butylcarbamoyl)-4-cyan-6-methylphenyl]-1-(3-chlorpyridin-2-yl)-3-{[5-(trifluormethyl)-2H-tetrazol-2-yl]methyl}-1H-pyrazol-5-carboxamid und (1E)-N-[(6-Chlorpyridin-3-yl)methyl]-N'-cyan-N-(2,2-difluorethyl)ethanimidamid.

Die hier mit ihrem "common name" genannten Wirkstoffe sind bekannt und beispielsweise im Pestizidhandbuch ("The Pesticide Manual" 16th Ed., British Crop Protection Council 2012) beschrieben oder im Internet recherchierbar (z. B. http://www.alanwood.net/pesticides).

In einer bevorzugten Ausführungsform der Erfindung, nämlich insbesondere dann, wenn das eine oder die mehreren N-substituierten Pyrrolidone der Formel (I) zur Förderung der Penetration eines oder mehrerer agrochemischer Wirkstoffe in Pflanzen verwendet werden, wird der eine oder werden die mehreren agrochemischen Wirkstoffe bei der erfindungsgemäßen Verwendung ausgewählt aus systemischen agrochemischen Wirkstoffen, d.h. agrochemischen Wirkstoffen, die von der Pflanze durch die Blätter oder über die Wurzeln aufgenommen und im Saftstrom, dem Transportsystem der Pflanze, weitergeleitet werden.

Hierunter bevorzugt wird der eine oder werden die mehreren agrochemischen Wirkstoffe insbesondere bei der erfindungsgemäßen Verwendung zur Förderung der Penetration in Pflanzen ausgewählt aus agrochemischen Wirkstoffen mit einem Log P Wert ≤ 4,5 (bestimmt gemäß EEC-Directive 79/831 Annex V. A8 durch HPLC, Gradientenmethode, Acetonitril / 0,1 Gew.-%ige wässrige Phosphorsäure). Besonders bevorzugt wird das eine oder werden die mehreren agrochemischen Wirkstoffe bei der erfindungsgemäßen Verwendung zur Förderung der Penetration in Pflanzen ausgewählt aus agrochemischen Wirkstoffen mit einem Log P Wert ≤ 4,5 und ≥ -2,0, insbesondere bevorzugt mit einem Log P Wert ≤ 4,5 und ≥ 0,1, außerordentlich bevorzugt mit einem Log P Wert ≤ 4,5 und ≥ 0,5 und ganz besonders bevorzugt mit einem Log P Wert ≤ 3,0 und ≥ 0,5.

In einer besonders bevorzugten Ausführungsform wird der eine oder werden die mehreren agrochemischen Wirkstoffe bei der erfindungsgemäßen Verwendung, und insbesondere bei der erfindungsgemäßen Verwendung zur Förderung der Penetration in Pflanzen, ausgewählt aus der Gruppe bestehend aus Strobilurin Fungiziden, vorzugsweise Azoxystrobin, Pyraclostrobin, Pycoxystrobin, Fluoxastrobin, Oryzastrobin, Picoxystrobin, Trifloxystrobin, Azol Fungiziden, vorzugsweise Prothioconazol, Tebuconazol, Cyproconazol, Difeconazol, Metconazol, Propiconazol, Tetraconazol, Tricyclazol und weiteren Wirkstoffen, vorzugsweise Fluxapyroxad, Boscalid, Bitertanol, Prochloraz, Thiophanate, Chlorothalonil, Dimethomorph, Fenpropimorph, Spiroxamin, Trifluralin, Metribuzin, Saflufenacil, Fenoxaprop-ethyl, Acetolachlor, S-Metolachlor, Pendimethalin, Pinoxaden, Fluroxypyr, Imidacloprid, Thiacloprid, Thiamethoxam, Clothianidin, Acetamiprid, Emamectinbenzoat, Lamda-cyhalothrin, Pymetrozine, Chloantraniliprole, Gibberellinsäure, Benzylaminopyrin, Trinexapacethyl, Etephon, Thidiazuron.

Unter den soeben genannten agrochemischen Wirkstoffen wiederum bevorzugt wird der eine oder werden die mehreren agrochemischen Wirkstoffe bei der erfindungsgemäßen Verwendung, und insbesondere bei der erfindungsgemäßen Verwendung zur Förderung der Penetration in Pflanzen, ausgewählt aus der Gruppe bestehend aus Strobilurin Fungiziden, vorzugsweise Azoxystrobin, Pyraclostrobin, Fluoxastrobin, Picoxystrobin, Trifloxystrobin, Azol Fungiziden, vorzugsweise Prothioconazol, Tebuconazol, Cyproconazol, Propiconazol, und weiteren Wirkstoffen, vorzugsweise Fluxapyroxad, Bitertanol, Prochloraz, Chlorothalonil, Fenpropimorph, Trifluralin, Metribuzin, Saflufenacil, Fenoxapropethyl, Acetolachlor, S-Metolachlor, Pendimethalin, Pinoxaden, Fluroxypyr, Imidacloprid, Thiacloprid, Thiamethoxam, Clothianidin, Acetamiprid, Gibberellinsäure, Benzylaminopyrin.

Hierunter wiederum bevorzugt wird der eine oder werden die mehreren agrochemischen Wirkstoffe bei der erfindungsgemäßen Verwendung, und insbesondere bei der erfindungsgemäßen Verwendung zur Förderung der Penetration in Pflanzen, ausgewählt aus der Gruppe bestehend aus Azoxystrobin, Pyraclostrobin, Fluoxastrobin, Trifloxystrobin, Prothioconazol, Tebuconazol, Fluxapyroxad, Bitertanol, Prochloraz, Chlorothalonil, Fenpropimorph, Trifluralin, Metribuzin, Saflufenacil, Pendimethalin, Fenoxaprop-ethyl, Imidacloprid, Thiacloprid, Thiamethoxam, Acetamiprid, Gibberellinsäure, Benzylaminopyrin. In einer weiteren besonders bevorzugten Ausführungsform wird der eine oder werden die mehreren agrochemischen Wirkstoffe bei der erfindungsgemäßen Verwendung, und insbesondere bei der erfindungsgemäßen Verwendung zur Förderung der Penetration in nicht-pflanzliche Schadorganismen, ausgewählt aus der Gruppe bestehend aus

Insektiziden der Pyrethroid-Familie, vorzugsweise Cypermethrin, Deltamethrin, Permethrin, Cyfluthrin, Bifenthrin, Lambda Cyhalothrin, Gamma Cyhalothrin; Organophosphat-Insektiziden, vorzugsweise Chlorpyrifos; Benzoylharnstoff-Insektiziden, vorzugsweise Diflubenzuron, lufenuron; anderen Insektiziden, vorzugsweise Abamectin, Emamectinbenzoat, Flubendiamid, Fipronil, Rynaxypyr, Spiromesifen, Spirodiclofen, Fipronil, Indoxacarb; und/oder Amid-Fungiziden, vorzugsweise Prochloraz; anderen Fungiziden, vorzugsweise Trifloxystrobin, Mancozeb, Chlorothalonil; Herbiziden, vorzugsweise Acetochlor, Propanil, Glufosinate.

Unter den soeben genannten agrochemischen Wirkstoffen wiederum bevorzugt wird der eine oder werden die mehreren agrochemischen Wirkstoffe bei der erfindungsgemäßen Verwendung, und insbesondere bei der erfindungsgemäßen Verwendung zur Förderung der Penetration in nicht-pflanzliche Schadorganismen, ausgewählt aus der Gruppe bestehend aus
Insektiziden der Pyrethroid-Familie, vorzugsweise Cypermethrin, Deltamethrin, Cyfluthrin, Bifenthrin, Lambda Cyhalothrin, Gamma Cyhalothrin; Organophosphat-Insektiziden, vorzugsweise Chlorpyrifos; Benzoylharnstoff-Insektiziden, vorzugsweise Diflubenzuron, lufenuron; anderen Insektiziden, vorzugsweise Abamectin, Emamectinbenzoat, Flubendiamid, Fipronil, Rynaxypyr, Spiromesifen, Spirodiclofen, Fipronil; Amid-Fungiziden, vorzugsweise Prochloraz;
anderen Fungiziden, vorzugsweise Trifloxystrobin, Mancozeb, Chlorothalonil; Herbiziden, vorzugsweise Acetochlor, Propanil, Glufosinate.

Zu weiteren besonders bevorzugten agrochemischen Wirkstoffen bei der erfindungsgemäßen Verwendung zählen Fenpicoxamid, Bixafen, Isopyrazam Fluopyram, Penthiopyrad und Abamectin.

Die bei der erfindungsgemäßen Verwendung eingesetzten Pflanzenschutzmittel können ein oder mehrere Zusatzstoffe enthalten.

Bevorzugte Zusatzstoffe sind Tenside, unpolare oder polare Lösungsmittel, Co-Solventien, Haftmittel, Netzmittel, Dispergiermittel, Emulgiermittel, weitere Penetrationsmittel, Konservierungsmittel, Driftretardantien, Füllstoffe, Trägerstoffe, Farbstoffe, Verdunstungshemmer, den pH-Wert beeinflussende Mittel (Puffer, Säuren und Basen), die Viskosität beeinflussende Mittel (z. B. Verdicker), funktionelle Polymere, Adjuvants und/oder Entschäumer.

In einer bevorzugten Ausführungsform enthalten die bei der erfindungsgemäßen Verwendung eingesetzten Pflanzenschutzmittel ein oder mehrere der vorstehend genannten Zusatzstoffe.

Eine bevorzugte Gruppe von Zusatzstoffen sind Tenside. Dabei handelt es sich um anionaktive, nichtionogene, kationaktive und/oder zwitterionische Tenside. Beispiele für solche Tenside sind nachstehend aufgeführt (wobei jeweils EO = Ethylenoxid-Einheiten, PO = Propylenoxid-Einheiten und BO = Butylenoxid-Einheiten von Seiten der Herstellung bzw. entsprechende Alkylenoxy-Einheiten in den Tensidmolekülen bedeuten):
Eingesetzt werden können anionaktive Tenside wie beispielsweise:
1) Anionische Derivate von Fettalkoholen mit 10 - 24 Kohlenstoffatomen mit 0 - 60 EO und/oder 0 - 20 PO und/oder 0 - 15 BO in beliebiger Reihenfolge in Form von Ethercarboxylaten, Sulfonaten, Sulfaten und Phosphaten und deren anorganischen (z. B. Alkali und Erdalkali) und organischen Salzen (z. B. auf Amin- oder Alkanolaminbasis) wie Genapol^{®} LRO, Sandopan^{®}-Marken, Hostaphat/Hordaphos^{®}-Marken von Clariant;
2) anionische Derivate von Copolymeren bestehend aus EO-, PO- und/oder BO-Einheiten mit einem Molekulargewicht von 400 bis 10⁸ in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis);
3) anionische Derivate von Alkylenoxydaddukten von C₁- C₉ Alkoholen in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis), anionische Derivate von Fettsäurealkoxylaten in Form von Ethercarboxylaten, Sulfonaten, Sulfaten und Phosphaten und deren anorganischen (z. B. Alkali und Erdalkali) und organischen Salzen (z. B. auf Amin- oder Alkanolaminbasis);
4) Salze von alkylierten aromatischen Sulfonsäuren wie beispielsweise Phenylsulfonat^{®} oder Calsogen^{®} Marken.

Eingesetzt werden können kationaktive oder zwitterionische Tenside wie beispielsweise:
1) Alkylenoxidaddukte von Fettaminen, quartäre Ammonium-Verbindungen mit 8 bis 22 Kohlenstoffatomen (C₈-C₂₂) wie z. B. die Genamin^{®} C-, L-, O-, T-Marken;
2) oberflächenaktive, zwitterionische Verbindungen wie Tauride, Betaine und Sulfobetaine in Form von Tegotain^{®}-Marken, Hostapon^{®} T-Marken und Arkopon^{®} T-Marken.

Eingesetzt werden können auch nichtionogene Tenside wie beispielsweise:
1) Endgruppen-verschlossene und nicht Endgruppen-verschlossene Fettalkohole mit 8 - 24 Kohlenstoffatomen mit 0 - 60 EO und/oder 0 - 20 PO und/oder 0 - 15 BO in beliebiger Reihenfolge. Beispiele für derartige Verbindungen sind Genapol^{®} C-, L-, O-, T-, UD-, UDD-, X-, XM-Marken, Plurafac^{®}- und Lutensol^{®} A-, AT-, ON-, TO-Marken, Marlipal^{®}24 und 013 Marken, Dehypon^{®}-Marken, Ethylan^{®}-Marken, wie Ethylan CD 120;
2) Fettsäure- und Triglyceridalkoxylate wie die Serdox^{®}NOG-Marken oder die Emulsogen^{®}-Marken;
3) Fettsäureamidalkoxylate wie die Comperlan^{®}-Marken;
4) Alkylenoxydaddukte von Alkindiolen wie die Surfynol^{®}-Marken; Zuckerderivate wie Amino- und Amidozucker;
5) Glukitole;
6) oberflächenaktive Verbindungen auf Silikon- bzw Silanbasis wie die Tegopren^{®}-Marken und die SE^{®}-Marken, sowie die Bevaloid^{®}-, Rhodorsil^{®}- und Silcolapse^{®}-Marken;
7) grenzflächenaktive Sulfonamide;
8) grenzflächenaktive Polyacryl- und Polymethacrylderivate wie die Sokalan^{®}-Marken;
9) oberflächenaktive Polyamide wie modifizierte Gelatine oder derivatisierte Polyasparginsäure und deren Derivate;
10) tensidische Polyvinylverbindungen wie modifiziertes PVP wie die Luviskol^{®}-Marken und die Agrimer^{®}-Marken oder die derivatisierten Polyvinylacetate wie die Mowilith^{®}-Marken oder die Polyvinyl butyrate wie die Lutonal(9)-Marken, die Vinnapas^{®}- und die Pioloform^{®}-Marken oder modifizierten Polyvinylalkohole wie die Mowiol^{®}-Marken;
11) oberflächenaktive Polymere auf Basis von Maleinsäureanhydrid und/oder Umsetzungsprodukten von Maleinsäureanhydrid sowie Maleinsäureanhydrid und/oder Umsetzungsprodukte von Maleinsäureanhydrid beinhaltende Copolymere wie die Agrimer^{®}-VEMA-Marken;
12) oberfächenaktive Derivate von Montan-, Polyethylen-, und Polypropylenwachsen wie die Hoechst^{®}-Wachse oder die Licowet^{®} und Licowax^{®} Marken;
13) Alkylenoxydaddukte auf Polyolbasis wie Polyglykol^{®}-Marken;
14) grenzflächenaktive Polyglyceride und deren Derivate;
15) Alkylpolysaccharide und deren Mischungen wie beispielsweise aus der Atplus^{®} -Reihe, vorzugsweise Atplus^{®} 435;
16) Alkylpolyglucoside in Form der Agnique^{®}-PG Marken, beispielsweise Agnique^{®}-PG 8107 (Fettalkohol C₈-C₁₀-Glucosid);
17) Sorbitanester in Form der Span^{®}- oder Tween^{®}-Marken;
18) Cyclodextrinester oder -ether;
19) oberflächenaktive Cellulose-und Algin-, Pektin- und Guarderivate wie die Tylose^{®}-Marken, die Manutex^{®}-Marken und Guarderivate;
20) Alkylpolyglykosid-Alkylpolysaccharid-Mischungen auf Basis C₈-C₁₀-Fettalkohol wie Glucopon^{®} 225 DK und Glucopon^{®} 215 CSUP;
21) Alkoxylierte Polyarylphenolverbindungen wie tristyrylsubstituierte Phenole, beispielsweise in Form der Emulsogen^{®} TS-Marken;
22) Alkylierte Copolymerisate aus Ethylen- und Propylenoxid wie beispielsweise Emulsogen^{®} 3510;
23) Di- und Tri-block-copolymere aus Alkylenoxiden, die auf Basis von Ethylen- und Propylenoxid aufgebaut sind, mit mittleren Molmassen zwischen 200 und 10000, vorzugsweise 1000 bis 4000 g/mol, wobei der Massenanteil des polyethoxylierten Blocks zwischen 10 und 80% variiert, wie z. B. aus der Synperonic^{®} PE-Reihe (Uniqema), Pluronic^{®} PE-Reihe (BASF), VOP^{®} 32- oder Genapol^{®} PF-Reihe (Clariant), besonders bevorzugt sind z. B. Produkte wie Genapol^{®} 10500.

Bevorzugte nichtionogene Tenside sind auch Alkylglucamide und vorzugsweise N-Methylglucamide aus Fettsäuren mit 12 bis 22 Kohlenstoffatomen.

Als unpolare Lösungsmittel können unpolare organische Lösungsmittel und/oder unpolare anorganische Lösungsmittel oder Gemische davon eingesetzt werden.

Beispiele für unpolare Lösungsmittel im Sinne der Erfindung sind
- aliphatische oder aromatische Kohlenwasserstoffe, wie z. B. Mineralöle bzw. Toluol, Xylole und Naphthalinderivate,
- halogenierte aliphatische oder aromatische Kohlenwasserstoffe wie Methylenchlorid bzw. Chlorbenzol,
- Öle, z. B. auf pflanzlicher Basis wie Maiskeimöl und Rapsöl, oder Ölderivate wie Rapsölmethylester.

Bei den Co-Solventien kann es sich um ein einziges Lösemittel oder ein Gemisch zweier oder mehrerer Lösemittel handeln. Dazu eignen sich alle polaren Lösemittel, die mit der wässrigen Pestizidzusammensetzung kompatibel sind und eine homogene Phase bilden. Geeignete Co-Solventien sind beispielsweise einwertige Alkohole, wie Methanol, Ethanol, Propanole, Butanole, Tetrahydrofurfurylalkohol, Benzylalkohol oder weitere mehrwertige Alkohole wie Ethylenglykol, Diethylenglykol oder Glycerin oder Polyglykole wie Polyethylenglykole, Polypropylenglykole oder gemischte Polyalkylenglykole (PAGs). Weitere geeignete Lösemittel sind Ether wie beispielsweise Diethylenglykoldiethylether (Ethyldiglyme), Tetraethylenglykoldimethylether (Tetraglyme), Propylenglykolmonomethylether, Propylenglykoldimethylether, Dipropylenglykolmonomethylether oder Dipropylenglykoldimethylether, Amide wie beispielsweise Dimethylformamid, Dimethylacetamid, N-Methylpyrrolidon oder N-Ethylpyrrolidon, Milchsäuredimethylamid, Caprylsäuredimethylamid, Pelargonsäure-dimethylamid oder Decansäuredimethylamid, Dimethyllactamid, Carbonate wie beispielsweise Ethylencarbonat, Propylencarbonat, Butylencarbonat oder Glycerincarbonat oder andere Co-Solventien wie Methylcaprylatecaprat, Methyl-5-(Dimethylamino)-2-methyl-5-oxopentanoate (z. B. Rhodiasolv Polarclean), 1,3-Dioxolan, γ-Butyrolacton, Cyclohexanon.

In einer bevorzugten Ausführungsform enthält das bei der erfindungsgemäßen Verwendung eingesetzte Pflanzenschutzmittel kein Co-Solvens.

Die bei der erfindungsgemäßen Verwendung eingesetzten Pflanzenschutzmittel können als Zusatzstoffe gegebenenfalls Konservierungsmittel enthalten. Bei den Konservierungsmitteln kann es sich um ein einziges Konservierungsmittel oder um ein Gemisch zweier oder mehrerer Konservierungsmittel handeln. Als Konservierungsmittel können organische Säuren und ihre Ester, beispielsweise Ascorbinsäure, Ascorbinpalmitat, Sorbat, Benzoesäure, Methyl-4-hydroxybenzoat, Propyl-4-hydroxybenzoat, Propionate, Phenol, 2-Phenylphenat, 1,2-Benzisothiazolin-3-on, Formaldehyd, schwefelige Säure und deren Salze eingesetzt werden. Als Beispiele seien Mergal^{®} K9N (Riedel) oder Cobate^{®} C genannt.

Die bei der erfindungsgemäßen Verwendung eingesetzten Pflanzenschutzmittel können als Zusatzstoffe gegebenenfalls Driftretardantien enthalten. Bei den Driftretardantien kann es sich um ein einziges Driftretardans oder um ein Gemisch zweier oder mehrerer Driftretardantien handeln. Als Driftretardantien können wasserlösliche Polymere, beispielsweise Polyglycerol ester, Polyacrylamide, Acrylamid / Acrylsäurepolymere, Natriumpolyacrylat, Carboxymethylcellulose, Hydroxyethylcellulose, Methylcellulose, Polysaccharide, natürlicher und synthetischer guar gum eingesetzt werden. Darüber hinaus können auch bestimmte Emulsionen oder selbstemulgierende Systeme als Driftretardantien eingesetzt werden. Als Beispiel sei hier Synergen^{®} OS von Clariant oder InterLock^{®} (Winfield) genannt.

Bei den funktionellen Polymeren, die als Zusatzstoff in dem bei der erfindungsgemäßen Verwendung eingesetzten Pflanzenschutzmittel enthalten sein können, handelt es sich um hochmolekulare Verbindungen synthetischen oder natürlichen Ursprungs mit einer Molmasse von größer als 10.000. Die funktionellen Polymere können beispielsweise als Anti-Drift-Agent wirken oder die Regenfestigkeit steigern.

In einer weiteren bevorzugten Ausführungsform der Erfindung enthalten die bei der erfindungsgemäßen Verwendung eingesetzten Pflanzenschutzmittel als Zusatzstoff ein oder mehrere Adjuvants, wie sie bekanntermaßen in wässrigen Wirkstoff-Zusammensetzungen verwendet werden können.

Bevorzugt sind dies Fettaminethoxylate, Etheraminethoxylate, Alkylbetaine oder Amidoalkylbetaine, Aminoxide oder Amidoalkylaminoxide, Alkylpolylglycoside oder Copolymere aus Glycerin, Kokosfettsäure und Phthalsäure.

Diese Adjuvants sind aus der Literatur als Adjuvants in wässrigen Pestizid-Zusammensetzungen bekannt und beispielsweise in der WO 2009/029561 beschrieben.

Die bei der erfindungsgemäßen Verwendung eingesetzten Pflanzenschutzmittel können als Zusatzstoffe gegebenenfalls Entschäumer enthalten. Bei den Entschäumern kann es sich um einen einzigen Entschäumer oder um ein Gemisch zweier oder mehrerer Entschäumer handeln. Als Entschäumer eignen sich Fettsäurealkylesteralkoxylate, Organopolysiloxane wie Polydimethylsiloxane und deren Gemische mit mikrofeiner, gegebenenfalls silanierter Kieselsäure, Perfluoralkylphosphonate, Perfluoralkylphosphinate, Paraffine, Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder Wachsen.

Wie bereits erwähnt kann das eine oder können mehreren N-substituierten Pyrrolidone der Formel (I) bei der erfindungsgemäßen Verwendung in einem Pflanzenschutzmittel eingesetzt werden.

Dies kann beispielsweise in Form von flüssigen oder festen konzentrierten Pflanzenschutzmitteln (beispielsweise "ready-to-use"-, "in-can"- oder "built-in"-Formulierungen) stattfinden, wobei die Konzentrat-Formulierungen üblicherweise vor dem Gebrauch verdünnt werden, insbesondere mit Wasser, und anschließend durch Sprühapplikation als Spritzbrühen auf die Felder ausgebracht werden.

Wasserlösliche Konzentrate (Soluble Liquids, abgekürzt mit SL) sind dabei eine wichtige Form von Pflanzenschutzmitteln. Sie spielen insbesondere bei Herbiziden eine große Rolle, wobei diese oftmals als wasserlösliche Salze, die durch Neutralisation der Säureform der Herbizide mit geeigneten Basen in ihre Alkali- oder Ammoniumsalze überführt werden, eingesetzt werden. Unter Umständen ist auch ein zweiter nicht wasserlöslicher agrochemischer Wirkstoff in dem Pflanzenschutzmittel enthalten. Dann handelt es sich um ein Suspensionskonzentrat (SC), auch wenn in der wässrigen Phase ein agrochemischer Wirkstoff gelöst ist.

Zu den in Frage kommenden Formulierungstypen gehören alle Formulierungen, die auf Pflanzen oder deren Vermehrungsgut ausgebracht werden. Die zu deren Herstellung verwendeten Verfahren sind dem Fachmann allgemein geläufig und beispielsweise beschrieben in Winnacker-Küchler, "Chemische Technologie" Band 7, C. Hanser Verlag München, 4. Aufl., 1986 ; J.W. van Valkenburg, "Pesticide Formulations", Marcel Dekker N. Y., 1973, K. Martens, "Spray Drying Handbook", 3rd Ed. 1979, G. Goodwin Ltd., London, oder Mollet, Grubenmann, "Formulierungstechnik", Wiley-VCH-Verlag, Weinheim, 2000.

Beispiele für Formulierungstypen sind alle die im "Manual on development and use of FAO and WHO specifications for pesticides" (FAO and WHO, 2002, appendix E) erwähnten (jeweils Verwendung der GCPF-Formulierungskodes mit englischer Abkürzung und Bezeichnung): AB Grain bait; AE Aerosol dispenser; AL Any other liquid; AP Any other powder; CF Capsule Suspension for Seed Treatment; CG Encapsulated granule; CL Contact liquid or gel; CP Contact powder; CS Capsule suspension; DC Dispersible concentrate; DP Dustable powder; DS Powder for dry seed treatment; DT Tablet for direct application; EC Emulsifiable concentrate; ED Electrochargeable liquid; EG Emulsifiable Granule; EO Emulsion, water in oil; EP emulsifiable powder, ES Emulsion for seed treatment; EW Emulsion, oil in water; FG Fine granule; FS Flowable concentrate for seed treatment; GF Gel for Seed Treatment; GC Macrogranule; GL Emulsifiable gel; GP Flo-dust; GR Granule; GS Grease; GW Water soluble gel; HN Hot fogging concentrate; KK Combi-pack solid/liquid; KL Combi-pack liquid/liquid; KN Cold fogging concentrate; KP Combi-pack solid/solid; LA Lacquer; LS Solution for seed treatment; ME Microemulsion; MG Microgranule; OD oil dispersion; OF Oil miscible flowable concentrate/oil miscible suspension; OL Oil miscible liquid; OP Oil dispersible powder; PA Paste; PC Gel or paste concentrate; PO Pour-on; PR Plant rodlet; PS Seed coated with a pesticide; PT Pellet; RB Bait (ready for use); SA Spot-on; SC suspension concentrate, SD suspension concentrate for direct application, SE Suspo-emulsion; SG Water soluble granule; SL Soluble concentrate; SO Spreading oil; SP Water soluble powder; SS Water soluble powder for seed treatment; ST Water soluble tablet; SU Ultra-low volume (ULV) suspension; TB Tablet; TC Technical material; TK Technical concentrate; UL Ultra-low volume (ULV) liquid; VP Vapour releasing product; WG Water dispersible granules; WP Wettable powder; WS Water dispersible powder for slurry seed treatment; WT Water dispersible tablet; XX Others.

Bevorzugt sind flüssige Formulierungstypen. Hierzu gehören die Formulierungstypen DC (GCPF- Formulierungskode für dispergierbares Konzentrat); EC (GCPF-Formulierungskode für Emulsionskonzentrat); EW (GCPF-Formulierungskode für Öl-in-Wasser-Emulsion); ES (GCPF-Formulierungskode für Emulsionsbeize); FS (GCPF-Formulierungskode für Mehrphasenkonzentrat zur Saatgutbehandlung); EO (GCPF-Formulierungskode für Wasser in Öl Emulsion); ME (GCPF-Formulierungskode für Mikroemulsion); OD (GCPF-Formulierungskode für Öldispersion); SE (GCPF-Formulierungskode für Suspoemulsion); SL (GCPF-Formulierungskode für wasserlösliches Konzentrat); CS (GCPF-Formulierungskode für Kapselsuspension) und AL (GCPF-Formulierungskode für gebrauchsfertige Flüssigformulierung, sonstige Flüssigkeiten zur unverdünnten Anwendung).

Besonders bevorzugt sind Emulsionskonzentrate (Formulierungstyp EC), wasserlösliche Konzentrate (Formulierungstyp SL), Öldispersionen (Formulierungstyp OD), Suspoemulsionen (Formulierungstyp SE), Mikroemulsionen (Formulierungstyp ME) und Öl-in-Wasser-Emulsionen (Formulierungstyp EW).

Wie ebenfalls bereits erwähnt kann die erfindungsgemäße Verwendung des einen oder der mehreren N-substituierten Pyrrolidone der Formel (I) aber auch im sogenannten Tankmix-Verfahren stattfinden.

Bei der erfindungsgemäßen Verwendung des einen oder der mehreren N-substituierten Pyrrolidone der Formel (I) zur Förderung der Penetration von agrochemischen Wirkstoffen in Pflanzen oder in nicht-pflanzliche Schadorganismen wird das eine oder werden die mehreren agrochemischen Wirkstoffe gleichzeitig vorzugsweise zur Kontrolle und/oder zur Bekämpfung von unerwünschtem Pflanzenwuchs, Pilzerkrankungen oder Insektenbefall bei Pflanzen eingesetzt und besonders bevorzugt zur Kontrolle und/oder zur Bekämpfung von unerwünschtem Pflanzenwuchs.

Bei den erfindungsgemäß behandelten Pflanzen kann es sich um Kulturpflanzen, d.h. um Nutz- und Zierpflanzen, oder um Schadpflanzen handeln. Die Schadpflanzen umfassen dabei z. B. alle Arten von Unkräutern. Unter den Kulturpflanzen sind wirtschaftlich bedeutende Kulturen von Nutzpflanzen, z. B. von Obst, wie Apfel oder Birne, von Getreide, wie Weizen, Gerste, Roggen, Hafer, Hirse, Reis, Maniok und Mais, oder auch Kulturen von Erdnuss, Zuckerrübe, Baumwolle, Soja, Raps, Kartoffel, Tomate, Erbse und anderen Gemüsesorten und Kulturen von Zierpflanzen, wie Schnittblumen oder Zierbäumen, bevorzugt. Bei den Kulturen von Nutz- und Zierpflanzen kann es sich beispielsweise auch um transgene Kulturen handeln wie z. B. transgener Mais oder transgene Sojabohnen.

Die erfindungsgemäß behandelten nicht-pflanzlichen Schadorganismen sind Insekten, Nematoden, Phytoplasmen, Bakterien wie Pseudomonadaceae, Rhizobiaceae, Enterobacteriaceae, Corynebacteriaceae und Streptomycetaceae, Phytopathogene Pilze, Viren und Viroide.

Die Temperatur hat einen grossen Einfluss auf die Stoffaufnahme in die Pflanze, wobei eine Erhöhung der Temperatur zu einer Zunahme der Mobilität in der Kutikula führt. Insbesondere bei der Stoffaufnahme in Pflanzen ist die Stoffbeweglichkeit in der Kutikula ein sehr stark temperaturabhängiger Prozess, aber auch bei der Stoffaufnahme in nicht-pflanzliche Schadorganismen bei der Diffusion durch die Haut von Insekten oder die Zellwand von Pilzen und generell bei der meist vorliegenden, sogenannten passiven Diffusion durch Biomembranen spielt die Temperatur eine Rolle. Lösungsmittel wie Carbonsäureamide oder Alkylester von Fettsäuren wie Ölsäuremethylester können wie eine Erhöhung der Temperatur wirken, weil sie sehr schnell in die Kutikula penetrieren und dadurch diese quellen können. Damit wirken Sie aber vor allem in der Kutikula der Pflanze und lassen oft auf der Pflanzenoberfläche einen Großteil des Wirkstoffes zurück. Dieser liegt dann häufig kristallin, verkrustet mit Mineralien des verwendeten Wassers oder anders fixiert vor, und ist nicht mehr für einen Transport zum Zielort in die Pflanze oder den nicht-pflanzlichen Schadorganismus verfügbar. Generell ist unmittelbar nach Applikation die Penetration wegen der höheren Wirkstoffkonzentrationen bzw. - konzentrationsgradienten am höchsten und wegen der temperaturabhängigen Diffusion durch die Hautstrukturen von Pflanzen oder nicht-pflanzlichen Schadorganismen bei niedrigen Temperaturen oft unzureichend. Somit ist die Penetration agrochemischer Wirkstoffe in Pflanzen oder in nicht-pflanzliche Schadorganismen insbesondere bei kalten Temperaturen im Vergleich zu höheren Temperaturen wesentlich niedriger. Da generell wegen Verlustprozessen wie etwa Abbau im Licht oder Flüchtigkeit oder Regenfestigkeit aber auch zur Minimierung des notwendigen Stoffeintrages aus Kosten- und Umweltgründen meist eine beschleunigte Aufnahme wünschenswert ist, sind Möglichkeiten zur Föderung der Stoffaufnahme insbesondere bei niedrigen Temperaturen gesucht.

Im Rahmen der vorliegenden Erfindung wurde überaschenderweise zudem gefunden, dass das eine oder die mehreren N-substituierten Pyrrolidone der Formel (I) auch bei niedrigen Temperaturen in vorteilhafter Weise zur Förderung der Penetration eines oder mehrerer agrochemischer Wirkstoffe in Pflanzen oder in nicht-pflanzliche Schadorganismen und vorzugsweise in Pflanzen, geeignet sind.

Dies ist beispielsweise bei dauerhaft kalter Witterung von Vorteil, aber auch dann, wenn die Temperaturen bei den ausser in Tropen vorherrschenden Tagesgängen in der Landwirtschaft zeitweise in einem kalten Bereich angesiedelt sind, also wenn es tagsüber vergleichsweise warm ist aber die Temperaturen nachts deutlich abfallen.

Die Erfindung ermöglicht deshalb insbesondere auch die Verwendung eines oder mehrerer N-substituierter Pyrrolidone der Formel (I) zur Förderung der Penetration eines oder mehrerer agrochemischer Wirkstoffe in Pflanzen oder in nicht-pflanzliche Schadorganismen, vorzugsweise zur Föderung der Penetration in Pflanzen, wenn die Penetration zumindest zeitweise bei einer Temperatur kleiner oder gleich 25°C, besonders bevorzugt zumindest zeitweise bei einer Temperatur kleiner oder gleich 20°C, insbesondere bevorzugt zumindest zeitweise bei einer Temperatur kleiner oder gleich 15°C und außerordentlich bevorzugt zumindest zeitweise bei einer Temperatur kleiner oder gleich 10°C stattfindet.

In einer bevorzugten Ausführungsform der Erfindung findet daher die Penetration bei der erfindungsgemäßen Verwendung des einen oder der mehreren N-substituierten Pyrrolidone der Formel (I) zur Förderung der Penetration eines oder mehrerer agrochemischer Wirkstoffe in Pflanzen oder in nicht-pflanzliche Schadorganismen, und vorzugsweise zur Föderung der Penetration eines oder mehrerer agrochemischer Wirkstoffe in Pflanzen, zumindest zeitweise bei einer Temperatur kleiner oder gleich 25°C, vorzugsweise zumindest zeitweise bei einer Temperatur kleiner oder gleich 20°C, besonders bevorzugt zumindest zeitweise bei einer Temperatur kleiner oder gleich 15°C und insbesondere bevorzugt zumindest zeitweise bei einer Temperatur kleiner oder gleich 10°C statt.

Weiterer Gegenstand der Erfindung ist auch ein Verfahren zur Förderung der Penetration agrochemischer Wirkstoffe in Pflanzen oder in nicht-pflanzliche Schadorganismen, wobei ein oder mehrere agrochemische Wirkstoffe gleichzeitig oder sequentiell mit einem oder mehreren N-substituierten Pyrrolidonen der Formel (I) auf die Pflanzen aufgebracht werden. In diesem erfindungsgemäßen Verfahren sind wiederum diejenigen N-substituierten Pyrrolidone der Formel (I), agrochemischen Wirkstoffe, Anwendungsformen (z.B. Pflanzenschutzmittel oder Tank-Mix-Anwendungen und Spritzbrühen), Zusatzstoffe, Pflanzen und nicht-pflanzlichen Schadorganismen bevorzugt, die auch bei der erfindungsgemäßen Verwendung des einen oder der mehreren N-substituierten Pyrrolidone der Formel (I) zur Förderung der Penetration von agrochemischen Wirkstoffen in Pflanzen oder nicht-pflanzliche Schadorganismen bevorzugt sind.

Wie bei der erfindungsgemäßen Verwendung findet auch die Penetration bei dem erfindungsgemäßen Verfahren zur Förderung der Penetration agrochemischer Wirkstoffe in Pflanzen oder in nicht-pflanzliche Schadorganismen, und vorzugsweise zur Förderung der Penetration agrochemischer Wirkstoffe in Pflanzen, in einer bevorzugten Ausführungsform der Erfindung zumindest zeitweise bei einer Temperatur kleiner oder gleich 25°C, vorzugsweise zumindest zeitweise bei einer Temperatur kleiner oder gleich 20°C, besonders bevorzugt zumindest zeitweise bei einer Temperatur kleiner oder gleich 15°C und insbesondere bevorzugt zumindest zeitweise bei einer Temperatur kleiner oder gleich 10°C statt. mehreren agrochemischen Wirkstoffen.

Überraschenderweise wurde gefunden, dass die bei der erfindungsgemäßen Verwendung eingesetzten Pflanzenschutzmittel sich zur Herstellung von hochwirksamen Spritzbrühen mit sehr geringem Wirkstoffgehalt eignen. Diese können wässrige Spritzbrühen enthaltend die oben beschriebenen Komponenten a) und b) sein, wobei der Gehalt an Komponente b) weniger als 0,05 g/l beträgt, beispielsweise 0,01 bis 0,03 g/l.

In einem Beispiel dieser Spritzbrühe mit geringem Wirkstoffgehalt beträgt der Gehalt an Komponente a) weniger als 0,1 Gew.-%, beispielsweise 0,015 bis 0,05 Gew.-%, bezogen auf die Gesamtmenge der Spritzbrühe.

Bevorzugte Komponenten b) sind ausgewählt aus der Gruppe bestehend aus Fungiziden, Bakteriziden, Insektiziden, Akariziden, Nematiziden, Herbiziden, Pflanzenwuchsregulatoren, Pflanzennährstoffen, Repellents, Molluskiden und Rodentiziden. Besonders bevorzugte Komponenten b) sind ausgewählt aus der Gruppe bestehend aus Herbiziden, Fungiziden, Insektiziden, Nematiziden und/oder Planzenwachstumregulatoren.

Die neben der Komponente a) als Komponente b) verwendeten einen oder mehrere agrochemische Wirkstoffe können ausgewählt sein aus der Gruppe bestehend aus Strobilurin Fungiziden, vorzugsweise Azoxystrobin, Pyraclostrobin, Pycoxystrobin, Fluoxastrobin, Oryzastrobin, Picoxystrobin, Trifloxystrobin, und/oder Azol Fungiziden, vorzugsweise Prothioconazol, Tebuconazol, Cyproconazol, Difeconazol, Metconazol, Propiconazol, Tetraconazol, Tricyclazol und/oder weiteren Wirkstoffen, vorzugsweise Fenpicoxamid, Fluxapyroxad, Boscalid, Bitertanol, Prochloraz, Thiophanate, Chlorothalonil, Bixafen, Isopyrazam, Fluopyram, Penthiopyrad, Dimethomorph, Fenpropimorph, Spiroxamin, Trifluralin, Metribuzin, Saflufenacil, Fenoxaprop-ethyl, Acetolachlor, S-Metolachlor, Pendimethalin, Pinoxaden, Fluroxypyr, Abamectin, Imidacloprid, Thiacloprid, Thiamethoxam, Clothianidin, Acetamiprid, Emamectinbenzoat, Lamda-cyhalothrin, Pymetrozine, Chloantraniliprole, Gibberellinsäure, Benzylaminopyrin, Trinexapacethyl, Etephon, Thidiazuron.

Ganz besonders bevorzugt als Komponente b) eingesetzte agrochemische Wirkstoffe werden ausgewählt aus der Gruppe bestehend aus
Strobilurin Fungiziden, vorzugsweise Azoxystrobin, Pyraclostrobin, Fluoxastrobin, Picoxystrobin, Trifloxystrobin, und/oder
Azol Fungiziden, vorzugsweise Prothioconazol, Tebuconazol, Cyproconazol, Propiconazol, Metconazol und/oder weiteren Wirkstoffen, vorzugsweise Fenpicoxamid, Fluxapyroxad, Bitertanol, Prochloraz, Chlorothalonil, Bixafen, Isopyrazam, Fluopyram, Penthiopyrad, Fenpropimorph, Trifluralin, Metribuzin, Saflufenacil, Fenoxaprop-ethyl, Acetolachlor, S-Metolachlor, Pendimethalin, Pinoxaden, Fluroxypyr, Abamectin, Imidacloprid, Thiacloprid, Thiamethoxam, Clothianidin, Acetamiprid, Gibberellinsäure, Trinexapac ethyl, Benzylaminopyrin.

Insbesondere bevorzugt als Komponente b) eingesetzte agrochemische Wirkstoffe werden ausgewählt aus der Gruppe bestehend aus Azoxystrobin, Pyraclostrobin, Fluoxastrobin, Trifloxystrobin, Prothioconazol, Tebuconazol, Fluxapyroxad, Bitertanol, Metconazol, Prochloraz, Chlorothalonil, Fenpropimorph, Trifluralin, Metribuzin, Saflufenacil, Pendimethalin, Fenoxaprop-ethyl, Imidacloprid, Thiacloprid, Thiamethoxam, Acetamiprid, Benzylaminopyrin; und/oder werden ausgewählt aus der Gruppe bestehend aus
Insektiziden der Pyrethroid-Familie, vorzugsweise Cypermethrin, Deltamethrin, Permethrin, Cyfluthrin, Bifenthrin, Lambda Cyhalothrin, Gamma Cyhalothrin; und/oder
Organophosphat-Insektiziden, vorzugsweise Chlorpyrifos; und/oder Benzoylharnstoff-Insektiziden, vorzugsweise Diflubenzuron, lufenuron; und/oder anderen Insektiziden, vorzugsweise Abamectin, Emamectinbenzoat, Flubendiamid, Fipronil, Rynaxypyr, Spiromesifen, Spirodiclofen, Fipronil, Indoxacarb; und/oder
Amid-Fungiziden, vorzugsweise Prochloraz; und/oder
anderen Fungiziden, vorzugsweise Trifloxystrobin, Mancozeb, Chlorothalonil; Bixafen, Isopyrazam, Fluopyram, Penthiopyrad-;, und/oder
Herbiziden, vorzugsweise Acetochlor, Propanil, Glufosinate-; und/oder Pflanzenwachstumregulatoren, insbesondere Trinexapac ethyl oder Gibberellinsäure.

Die Erfindung wird im Folgenden durch Beispiele näher erläutert ohne sie darauf einzuschränken.

Prozentangaben betreffend Stoff- oder Substanzmengen sind als Gewichtsprozent (Gew.-%) zu verstehen, sofern nicht etwas anderes explizit angegeben ist.

### Beispiele

### Penetrationstest (Penetration in Pflanzen)

In diesem Test wurde die Penetration von Wirkstoffen durch enzymatisch isolierte Kutikeln von Apfel- oder Birnbaumblättern gemessen.

Verwendet wurden Blätter, die in voll entwickeltem Zustand von Apfelbäumen der Sorte Golden Delicious oder Birnbäumen abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 Gew.-%ig) gefüllt wurden,
- dann Natriumazid hinzugefügt wurde und
- die so behandelten Blattscheiben bis zur Auflösung der ursprünglichen Blattstruktur und zur Ablösung der nicht-zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt.

Zur Bestimmung der Penetration wurden jeweils 9 µI einer Spritzbrühe der in den Beispielen genannten Zusammensetzung auf die Außenseite einer Kutikula appliziert.

In den Spritzbrühen wurde jeweils CIPAC-Wasser verwendet.

Nach dem Auftragen der Spritzbrühen ließ man jeweils das Wasser verdunsten, drehte dann jeweils die Kammern um und stellte sie in thermostatisierte Wannen, wobei auf die Außenseite der Kutikula Luft mit einer definierten Temperatur und Luftfeuchtigkeit geblasen wurde. Die einsetzende Penetration fand daher bei einer relativen Luftfeuchtigkeit von 60 % und einer eingestellten Temperatur wie angegeben statt. Die Wirkstoffpenetration wurde mittels Hochleistungsflüssigchromatographie (HPLC) gemessen.

Wie anhand der in den Tabellen 1 bis 20 aufgeführten Beispielen zu erkennen ist, führt die Anwesenheit von N-(n-Butyl)-2-Pyrrolidon zu einer beträchtlichen Aufnahmesteigerung gegenüber den Formulierungen, bei denen N-(n-Butyl)-2-Pyrrolidon nicht vorhanden ist. Bei den eingesetzten Alternativen zum N-(n-Butyl)-2-Pyrrolidon handelt es sich um Beispiele von handelsüblichen Einsatzstoffen für Formulierungen.

Die in den folgenden Tabellen angegebenen Werte für "% Penetration" geben an, welcher Prozentsatz der auf die Pflanze applizierten Menge an Substanz in die Pflanze penetriert. Die angegebenen Werte stellen Mittelwerte dar.

Die in den Tabellen verwendeten Abkürzungen haben folgende Bedeutung:
20 SG: Kurzform für "Mospilan^{®} 20 SG"
Calypso^{®} SC 480: Kommerzielle Formulierung von Thiacloprid
Custodia^{®} SC 320: Kommerzielle Formulierung von Azoxystrobin und Tebuconazole
DAT: Tage nach Applikation ("Days After Treatment")
DF75: Kurzform für "Dimetric^{®} DF75"
Dimetric^{®} DF75: Kommerzielle Formulierung von Metribuzin
DMSO: Dimethylsufoxid
EC 540: Kommerzielle Formulierung von Trifluralin
Galaster^{®} BL97: Butyllactat
Genagen^{®} NBP: NBP (100%ig)
Mospilan^{®} 20 SG: Kommerzielle Formulierung von Acetamiprid
n: Anzahl der Behandlungen und der dazuhörigen Messungen
NBP: N-(n-Butyl)-2-Pyrrolidon
NMP: N-Methylpyrrolidon
Orkestra^{®} SC 500: Kommerzielle Formulierung von Fluxapyroxad und Pyraclostrobin
RT: Raumtemperatur (23 bis 25°C)
SC320: Kurzform für "Custodia^{®} SC 320"
SC480: Kurzform für "Calypso^{®} SC 480"
SC500: Kurzform für "Orkestra^{®} SC 500"
EC 18: Kommerzielle Formulierung von Abamectin (Emulsionskonzentrat)
SC 200: Kommerzielle Formulierung von Rynaxypyr (Suspensionskonzentrat)
Akzeptor medium: Lösung von Forchlorfenuron in einem Wasser-Diethylenglykol-Medium
Prothioconazole x % RW: Prothioconazole-Pulver mit x Gew.% Wirkstoffgehalt
Genagen^{®} PA: Pelargonsäuredimethylamid
Genagen^{®} 4296: Decansäuredimethylamid
Agsolex^{®} 08: N-Octylpyrrolidon
Solvesso^{®} 200 ND: Gemisch aromatischer Kohlenwasserstoffe
Emulsogen^{®} 3510: alkylierte Copolymerisate aus Ethylen- und Propylenoxid
Synergen^{®} 848: alkylierte Copolymerisate aus Ethylen- und Propylenoxid
Synergen^{®} W03: Alkylsulfosuccinat, Na-Salz in Kohlenwasserstoffen
Synergen^{®} W09: Alkylsulfosuccinat, Na-Salz in Weissöl
Genapol^{®} X 090: Isotridecylalkohol mit 9 Ethylenoxideinheiten
Emulsogen^{®} MTP 070: alkylierte Copolymerisate aus Ethylen- und Propylenoxid
Emulsogen^{®} EL 300: Rizinusöl mit 30 Ethylenoxideinheiten
Emulsogen^{®} EL 360: Rizinusöl mit 36 Ethylenoxideinheiten
Momentive^{®} SAG 1571: Polydimethylsiloxanemulsion
Trinexapac Ethyl x % RW: Trinexapac Ethyl-Pulver mit x Gew.% Wirkstoffgehalt
Hostaphat^{®} 1306: Isotridecylphosphat mit 6 Ethylenoxideinheiten
Emulsogen^{®} ELO 200: modifizierte Rizinusölethoxylate
Synergen^{®} SOC: Tank-mix Adjuvant
MSO: Sonnenblumenölmethylester

### Beispiel 1: Penetrationsversuche mit Metribuzin bei 10°C in Birne

**Tabelle 1: Ergebnisse der Penetration nach 6 Stunden und nach 2 Tagen von Beispiel 1**

| Beispiel | Formulierung / Testsubstanz in der wässrigen Spritzbrühe (Gew.-%) | | Wirkstoff | Metribuzin Konzentration (g/l) in der wässrigen Spritzbrühe | % Penetration Metribuzin bei 10 °C in Birne nach 6 h // n = 5 - 7 | % Penetration Metribuzin bei 10 °C in Birne nach 2 DAT // n = 5 - 7 |
|---|---|---|---|---|---|---|
| 1-1 | Dimetric^{®} DF75 | | Metribuzin | 2,25 | 0,57 | 1,28 |
| 1-2 | DF75 / NMP | (0,1) | Metribuzin | 2,25 | 0,48 | 1,25 |
| 1-3 | DF75 / NMP | (0,5) | Metribuzin | 2,25 | 0,83 | 3,51 |
| 1-4 | DF75 / DMSO | (0,1) | Metribuzin | 2,25 | 0,28 | 1 |
| 1-5 | DF75 / DMSO | (0,5) | Metribuzin | 2,25 | 0,64 | 2,02 |
| 1-6 | DF75 / NBP | (0,1) | Metribuzin | 2,25 | 1,88 | 3,54 |
| 1-7 | DF75 / NBP | (0,3) | Metribuzin | 2,25 | 8,93 | 11,64 |
| 1-8 | DF75 / NBP | (0,5) | Metribuzin | 2,25 | 16,88 | 21,05 |

### Durchführung der Beispiele 1-1 bis 1-8:

Die Formulierung (Dimetric^{®} DF75 bzw. DF75) wurde mit Wasser verdünnt, so dass die Verdünnung eine Metribuzin-Konzentration von 4,50 g/l enhielt. Durch Vermischen dieser verdünnten Formulierung mit der entsprechenden Menge an Testsubstanz (NMP, DMSO oder NBP) in Wasser wurde die gewünschte Konzentration an Testsubstanz (0,1 Gew.-%, 0,3 Gew.-% oder 0,5 Gew.-%) und dem agrochemischen Wirkstoff Metribuzin (2,25 g/l) in der wässrigen Spritzbrühe eingestellt. Die Penetration durch isolierte Birnenkutikula wurde bei einer Temperatur von 10°C nach 6 h und nach 2 Tagen nach Applikation (2 DAT) gemessen.

Die Versuche der Beispiele 2 bis 17 und 20 bis 22 wurden analog zu Beispiel 1 durchgeführt, jedoch unter Berücksichtigung der in den Tabellen 2 bis 20 angegebenen Daten und Bedingungen.

### Beispiel 2: Penetrationsversuche mit Metribuzin bei Raumtemperatur in Birne

**Tabelle 2: Ergebnisse der Penetration nach 6 Stunden und nach 2 Tagen von Beispiel 2**

| Beispiel | Formulierung / Testsubstanz in der wässrigen Spritzbrühe (Gew.-%) | | Wirkstoff | Metribuzin Konzentration (g/l) in der wässrigen Spritzbrühe | % Penetration Metribuzin bei RT in Birne nach 6 h // n = 5 - 7 | % Penetration Metribuzin bei RT in Birne nach 2 DAT // n = 5 - 7 |
|---|---|---|---|---|---|---|
| 2-1 | Dimetric^{®} DF75 | | Metribuzin | 2,25 | 2,93 | 26,81 |
| 2-2 | DF75 / NMP | (0,1) | Metribuzin | 2,25 | 1,82 | 7,61 |
| 2-3 | DF75 / NMP | (0,5) | Metribuzin | 2,25 | 5 | 15,84 |
| 2-4 | DF75 / DMSO | (0,1) | Metribuzin | 2,25 | 1,82 | 6,9 |
| 2-5 | DF75 / DMSO | (0,5) | Metribuzin | 2,25 | 0,94 | 5,47 |
| 2-6 | DF75 / NBP | (0,1) | Metribuzin | 2,25 | 3,43 | 13,46 |
| 2-7 | DF75 / NBP | (0,3) | Metribuzin | 2,25 | 8,78 | 18,14 |
| 2-8 | DF75 / NBP | (0,5) | Metribuzin | 2,25 | 18,6 | 32,41 |

### Beispiel 3: Penetrationsversuche mit Metribuzin bei 10°C in Birne

**Tabelle 3: Ergebnisse der Penetration nach 6 Stunden und nach 2 Tagen von Beispiel 3**

| Beispiel | Formulierung / Testsubstanz in der wässrigen Spritzbrühe (Gew.-%) | | Wirkstoff | Metribuzin Konzentration (g/l) in der wässrigen Spritzbrühe | % Penetration Metribuzin bei 10 °C in Birne nach 6 h // n = 5 - 7 | % Penetration Metribuzin bei 10 °C in Birne nach 2 DAT // n = 5 - 7 |
|---|---|---|---|---|---|---|
| 3-1 | Dimetric^{®} DF75 | | Metribuzin | 2,25 | 0,1 | 1,14 |
| 3-2 | DF75 / Isophoron | (0,1) | Metribuzin | 2,25 | 0,27 | 1,87 |
| 3-3 | DF75 / Isophoron | (0,3) | Metribuzin | 2,25 | 0,24 | 1,54 |
| 3-4 | DF75 / Isophoron | (0,5) | Metribuzin | 2,25 | 0,45 | 4,13 |
| 3-5 | DF75 / NBP | (0,1) | Metribuzin | 2,25 | 0,86 | 1,86 |
| 3-6 | DF75 / NBP | (0,3) | Metribuzin | 2,25 | 6,63 | 11,45 |
| 3-7 | DF75 / NBP | (0,5) | Metribuzin | 2,25 | 14,7 | 20,79 |

### Beispiel 4: Penetrationsversuche mit Azoxystrobin bei 10°C in Apfel

**Tabelle 4: Ergebnisse der Penetration nach 6 Stunden und nach 3 Tagen von Beispiel 4**

| Beispiel | Formulierung / Testsubstanz in der wässrigen Spritzbrühe (Gew.-%) | | Wirkstoffe | Azoxstrobin Konzentration (g/l) in der wässrigen Spritzbrühe | % Penetration Azoxystrobin bei 10 °C in Apfel nach 6 h // n = 5 - 7 | % Penetration Azoxystrobin bei 10 °C in Apfel nach 3 DAT // n = 5 - 7 |
|---|---|---|---|---|---|---|
| 4-1 | Custodia^{®} SC 320 | | Azoxystrobin und Tebuconazole | 0,45 | 0,21 | 0,88 |
| 4-2 | SC320 / NMP | (0,1) | Azoxystrobin und Tebuconazole | 0,45 | 0 (= nicht detektierbar) | 0,72 |
| 4-3 | SC320 / NMP | (0,5) | Azoxystrobin und Tebuconazole | 0,45 | 0 | 0,61 |
| 4-4 | SC320 / NBP | (0,1) | Azoxystrobin und Tebuconazole | 0,45 | 0 | 0,46 |
| 4-5 | SC320 / NBP | (0,5) | Azoxystrobin und Tebuconazole | 0,45 | 0,32 | 3,04 |

### Zur Penetration von Tebuconazole bei 10°C in Apfel siehe Beispiel 6

### Beispiel 5: Penetrationsversuche mit Azoxystrobin bei Raumtemperatur in Apfel

**Tabelle 5: Ergebnisse der Penetration nach 6 Stunden und nach 3 Tagen von Beispiel 5**

| Beispiel | Formulierung / Testsubstanz in der wässrigen Spritzbrühe (Gew.-%) | | Wirkstoffe | Azoxstrobin Konzentration (g/l) in der wässrigen Spritzbrühe | % Penetration Azoxystrobin bei RT in Apfel nach 6 h // n = 5 - 7 | % Penetration Azoxystrobin bei RT in Apfel nach 3 DAT // n = 5 - 7 |
|---|---|---|---|---|---|---|
| 5-1 | Custodia^{®} SC 320 | | Azoxystrobin und Tebuconazole | 0,45 | 0,54 | 3,61 |
| 5-2 | SC320 / NMP | (0,1) | Azoxystrobin und Tebuconazole | 0,45 | 0,47 | 2,47 |
| 5-3 | SC320 / NMP | (0,5) | Azoxystrobin und Tebuconazole | 0,45 | 1,28 | 8,76 |
| 5-4 | SC320 / NBP | (0,1) | Azoxystrobin und Tebuconazole | 0,45 | 0,33 | 1,43 |
| 5-5 | SC320 / NBP | (0,5) | Azoxystrobin und Tebuconazole | 0,45 | 5,06 | 13,85 |

### Zur Penetration von Tebuconazole bei Raumtemperatur in Apfel siehe Beispiel 7

### Beispiel 6: Penetrationsversuche mit Tebuconazole bei 10°C in Apfel

**Tabelle 6: Ergebnisse der Penetration nach 6 Stunden und nach 3 Tagen von Beispiel 6**

| Beispiel | Formulierung / Testsubstanz in der wässrigen Spritzbrühe (Gew.-%) | | Wirkstoffe | Tebuconazole Konzentration (g/l) in der wässrigen Spritzbrühe | % Penetration Tebuconazole bei 10 °C in Apfel nach 6 h // n = 5 - 7 | % Penetration Tebuconazole bei 10°C in Apfel nach 3 DAT // n = 5 - 7 |
|---|---|---|---|---|---|---|
| 6-1 | Custodia^{®} SC 320 | | Azoxystrobin und Tebuconazole | 0,75 | 0,37 | 0,91 |
| 6-2 | SC320 / NMP | (0,1) | Azoxystrobin und Tebuconazole | 0,75 | 0,12 | 1,55 |
| 6-3 | SC320 / NMP | (0,5) | Azoxystrobin und Tebuconazole | 0,75 | 0,12 | 3,85 |
| 6-4 | SC320 / NBP | (0,1) | Azoxystrobin und Tebuconazole | 0,75 | 0,06 | 2,14 |
| 6-5 | SC320 / NBP | (0,5) | Azoxystrobin und Tebuconazole | 0,75 | 7,01 | 18,17 |

### Zur Penetration von Azoxystrobin bei 10°C in Apfel siehe Beispiel 4

### Beispiel 7: Penetrationsversuche mit Tebuconazole bei Raumtemperatur in Apfel

**Tabelle 7: Ergebnisse der Penetration nach 6 Stunden und nach 3 Tagen von Beispiel 7**

| Beispiel | Formulierung / Testsubstanz in der wässrigen Spritzbrühe (Gew.-%) | | Wirkstoffe | Tebuconazole Konzentration (g/l) in der wässrigen Spritzbrühe | % Penetration Tebuconazole bei RT in Apfel nach 6 h // n = 5 - 7 | % Penetration Tebuconazole bei RT in Apfel nach 3 DAT // n = 5 - 7 |
|---|---|---|---|---|---|---|
| 7-1 | Custodia^{®} SC 320 | | Azoxystrobin und Tebuconazole | 0,75 | 2,54 | 22,72 |
| 7-2 | SC320 / NMP | (0,1) | Azoxystrobin und Tebuconazole | 0,75 | 3,67 | 20,73 |
| 7-3 | SC320 / NMP | (0,5) | Azoxystrobin und Tebuconazole | 0,75 | 9,2 | 71,3 |
| 7-4 | SC320 / NBP | (0,1) | Azoxystrobin und Tebuconazole | 0,75 | 4,27 | 12,41 |
| 7-5 | SC320 / NBP | (0,5) | Azoxystrobin und Tebuconazole | 0,75 | 30,4 | 79,6 |

### Zur Penetration von Azoxystrobin bei Raumtemperatur in Apfel siehe Beispiel 5

### Beispiel 8: Penetrationsversuche mit Fluxapyroxad bei 10°C in Apfel

**Tabelle 8: Ergebnisse der Penetration nach 1 Tag und nach 3 Tagen von Beispiel 8**

| Beispiel | Formulierung / Testsubstanz in der wässrigen Spritzbrühe (Gew.-%) | | Wirkstoffe | Fluxapyroxad Konzentration (g/l) in der wässrigen Spritzbrühe | % Penetration Fluxapyroxad bei 10 °C in Apfel nach 1 DAT // n = 5 - 7 | % Penetration Fluxapyroxad bei 10 °C in Apfel nach 3 DAT // n = 5 - 7 |
|---|---|---|---|---|---|---|
| 8-1 | Orkestra^{®} SC 500 | | Fluxapyroxad und Pyraclostrobin | 0,285 | 0,12 | 0,25 |
| 8-2 | SC500 / Isophoron | (0,3) | Fluxapyroxad und Pyraclostrobin | 0,285 | 0 | 0,23 |
| 8-3 | SC500 / NBP | (0,3) | Fluxapyroxad und Pyraclostrobin | 0,285 | 1,45 | 3,0 |

### Beispiel 9: Penetrationsversuche mit Fluxapyroxad bei Raumtemperatur in Apfel

**Tabelle 9: Ergebnisse der Penetration nach 1 Tag und nach 3 Tagen von Beispiel 9**

| Beispiel | Formulierung / Testsubstanz in der wässrigen Spritzbrühe (Gew.-%) | Wirkstoffe | Fluxapyroxad Konzentration (g/l) in der wässrigen Spritzbrühe | % Penetration Fluxapyroxad bei RT in Apfel nach 1 DAT // n = 5 - 7 | % Penetration Fluxapyroxad bei RT in Apfel nach 3 DAT // n = 5 - 7 |
|---|---|---|---|---|---|
| 9-1 | Orkestra^{®} SC 500 | Fluxapyroxad und Pyraclostrobin | 0,285 | 1,99 | 3,84 |
| 9-2 | SC500 / (0,3) Isophoron | Fluxapyroxad und Pyraclostrobin | 0,285 | 1,01 | 3,16 |
| 9-3 | SC500 / NBP (0,3) | Fluxapyroxad und Pyraclostrobin | 0,285 | 10,14 | 21,39 |

### Beispiel 10: Penetrationsversuche mit Pyraclostrobin bei 10°C in Birne

**Tabelle 10: Ergebnisse der Penetration nach 1 Tag und nach 3 Tagen von Beispiel 10**

| Beispiel | Formulierung / Testsubstanz in der wässrigen Spritzbrühe (Gew.-%) | Wirkstoffe | Pyraclostrobin Konzentration (g/l) in der wässrigen Spritzbrühe | % Penetration Pyraclostrobin bei 10 °C in Birne nach 1 DAT // n = 5 - 7 | % Penetration Pyraclostrobin bei 10 °C in Birne nach 3 DAT // n = 5 - 7 |
|---|---|---|---|---|---|
| 10-1 | Orkestra^{®} SC 500 | Fluxapyroxad und Pyraclostrobin | 0,566 | 0,04 | 0,12 |
| 10-2 | SC500 / (0,3) NMP | Fluxapyroxad und Pyraclostrobin | 0,566 | 0,05 | 0,29 |
| 10-3 | SC500 / (0,3) DMSO | Fluxapyroxad und Pyraclostrobin | 0,566 | 0,02 | 0,06 |
| 10-4 | SC500 / (0,3) NBP | Fluxapyroxad und Pyraclostrobin | 0,566 | 3,77 | 5,45 |

### Beispiel 11: Penetrationsversuche mit Pyraclostrobin bei Raumtemperatur in Birne

**Tabelle 11: Ergebnisse der Penetration nach 1 Tag und nach 3 Tagen von Beispiel 11**

| Beispiel | Formulierung / Testsubstanz in der wässrigen Spritzbrühe (Gew.-%) | Wirkstoffe | Pyraclostrobin Konzentration (g/l) in der wässrigen Spritzbrühe | % Penetration Pyraclostrobin bei RT in Birne nach 1 DAT // n = 5 - 7 | % Penetration Pyraclostrobin bei RT in Birne nach 3 DAT // n = 5 - 7 |
|---|---|---|---|---|---|
| 11-1 | Orkestra^{®} SC 500 | Fluxapyroxad und Pyraclostrobin | 0,566 | 0,56 | 2,18 |
| 11-2 | SC500 / (0,3) NMP | Fluxapyroxad und Pyraclostrobin | 0,566 | 2,51 | 9,65 |
| 11-3 | SC500 / (0,3) DMSO | Fluxapyroxad und Pyraclostrobin | 0,566 | 0,72 | 2,62 |
| 11-4 | SC500 / (0,3) NBP | Fluxapyroxad und Pyraclostrobin | 0,566 | 13,43 | 29,44 |

### Beispiel 12: Penetrationsversuche mit Thiacloprid bei 10°C in Birne

**Tabelle 12: Ergebnisse der Penetration nach 6 Stunden und nach 2 Tagen von Beispiel 12**

| Beispiel | Formulierung / Testsubstanz in der wässrigen Spritzbrühe (Gew.-%) | Wirkstoff | Thiacloprid Konzentration (g/l) in der wässrigen Spritzbrühe | % Penetration Thiacloprid bei 10 °C in Birne nach 6 h // n = 5 - 7 | % Penetration Thiacloprid bei 10 °C in Birne nach 2 DAT // n = 5 - 7 |
|---|---|---|---|---|---|
| 12-1 | Calypso^{®} SC 480 | Thiacloprid | 0,3 | 0,2 | 0,2 |
| 12-2 | SC480 / (0,1) NMP | Thiacloprid | 0,3 | 0,16 | 0,24 |
| 12-3 | SC480 / (0,3) NMP | Thiacloprid | 0,3 | 0,13 | 0,4 |
| 12-4 | SC480 / (0,5) NMP | Thiacloprid | 0,3 | 0,36 | 0,68 |
| 12-5 | SC480 / (0,1) DMSO | Thiacloprid | 0,3 | 0 | 0,2 |
| 12-6 | SC480 / (0,3) DMSO | Thiacloprid | 0,3 | 0 | 0,11 |
| 12-7 | SC480 / (0,5) DMSO | Thiacloprid | 0,3 | 0,06 | 0,17 |
| 12-8 | SC480 / (0,1) NBP | Thiacloprid | 0,3 | 2,16 | 2,78 |
| 12-9 | SC480 / (0,3) NBP | Thiacloprid | 0,3 | 18,25 | 20,96 |
| 12-10 | SC480 / (0,5) NBP | Thiacloprid | 0,3 | 27,29 | 31,53 |

### Beispiel 13: : Penetrationsversuche mit Thiacloprid bei Raumtemperatur in Birne

**Tabelle 13: Ergebnisse der Penetration nach 6 Stunden und nach 2 Tagen von Beispiel 13**

| Beispiel | Formulierung / Testsubstanz in der wässrigen Spritzbrühe (Gew.-%) | Wirkstoff | Thiacloprid Konzentration (g/l) in der wässrigen Spritzbrühe | % Penetration Thiacloprid bei RT in Birne nach 6 h // n = 5 - 7 | % Penetration Thiacloprid bei RT in Birne nach 2 DAT // n = 5 - 7 |
|---|---|---|---|---|---|
| 13-1 | Calypso^{®} SC 480 | Thiacloprid | 0,3 | 0,04 | 0,59 |
| 13-2 | SC480 / (0,1) NMP | Thiacloprid | 0,3 | 0,08 | 0,54 |
| 13-3 | SC480 / (0,3) NMP | Thiacloprid | 0,3 | 0,51 | 1,25 |
| 13-4 | SC480 / (0,5) NMP | Thiacloprid | 0,3 | 1,02 | 2,69 |
| 13-5 | SC480 / (0,1) DMSO | Thiacloprid | 0,3 | 0,14 | 1,33 |
| 13-6 | SC480 / (0,3) DMSO | Thiacloprid | 0,3 | 0,01 | 0,54 |
| 13-7 | SC480 / (0,5) DMSO | Thiacloprid | 0,3 | 0 | 0,44 |
| 13-8 | SC480 / (0,1) NBP | Thiacloprid | 0,3 | 2,16 | 3,52 |
| 13-9 | SC480 / (0,3) NBP | Thiacloprid | 0,3 | 23,37 | 29,85 |
| 13-10 | SC480 / (0,5) NBP | Thiacloprid | 0,3 | 34,8 | 44,33 |

### Beispiel 14: : Penetrationsversuche mit Thiacloprid bei 10°C in Apfel

**Tabelle 14: Ergebnisse der Penetration nach 1 Tag und nach 3 Tagen von Beispiel 14**

| Beispiel | Formulierung / Testsubstanz in der wässrigen Spritzbrühe (Gew.-%) | Wirkstoff | Thiacloprid Konzentration (g/l) in der wässrigen Spritzbrühe | % Penetration Thiacloprid bei 10 °C in Apfel nach 1 DAT // n = 5 - 7 | % Penetration Thiacloprid bei 10 °C in Apfel nach 3 DAT // n = 5 - 7 |
|---|---|---|---|---|---|
| 14-1 | Calypso^{®} SC 480 | Thiacloprid | 0,3 | 0,31 | 0,77 |
| 14-2 | SC480 / (0,1) Isophoron | Thiacloprid | 0,3 | 0,31 | 0,76 |
| 14-3 | SC480 / (0,3) Isophoron | Thiacloprid | 0,3 | 0,14 | 0,44 |
| 14-4 | SC480 / (0,5) Isophoron | Thiacloprid | 0,3 | 0,31 | 0,85 |
| 14-5 | SC480 / (0,1) NBP | Thiacloprid | 0,3 | 0,83 | 1,34 |
| 14-6 | SC480 / (0,3) NBP | Thiacloprid | 0,3 | 6,89 | 8,57 |
| 14-7 | SC480 / (0,5) NBP | Thiacloprid | 0,3 | 18,57 | 20,77 |

### Beispiel 15: Penetrationsversuche mit Thiacloprid bei Raumtemperatur in Apfel

**Tabelle 15: Ergebnisse der Penetration nach 1 Tag und nach 3 Tagen von Beispiel 15**

| Beispiel | Formulierung / Testsubstanz in der wässrigen Spritzbrühe (Gew.-%) | Wirkstoff | Thiacloprid Konzentration (g/l) in der wässrigen Spritzbrühe | % Penetration Thiacloprid bei RT in Apfel nach 1 DAT // n = 5 - 7 | % Penetration Thiacloprid bei RT in Apfel nach 3 DAT // n = 5 - 7 |
|---|---|---|---|---|---|
| 15-1 | Calypso^{®} SC 480 | Thiacloprid | 0,3 | 0,46 | 1,48 |
| 15-2 | SC480 / (0,1) Isophoron | Thiacloprid | 0,3 | 0,6 | 1,62 |
| 15-3 | SC480 / (0,3) Isophoron | Thiacloprid | 0,3 | 0,62 | 1,71 |
| 15-4 | SC480 / (0,5) Isophoron | Thiacloprid | 0,3 | 0,33 | 0,87 |
| 15-5 | SC480 / (0,1) NBP | Thiacloprid | 0,3 | 2,68 | 4,69 |
| 15-6 | SC480 / (0,3) NBP | Thiacloprid | 0,3 | 8,86 | 11,62 |
| 15-7 | SC480 / (0,5) NBP | Thiacloprid | 0,3 | 31,27 | 42,15 |

### Beispiel 16: Penetrationsversuche mit Acetamiprid bei 10°C in Apfel

**Tabelle 16: Ergebnisse der Penetration nach 8 Stunden und nach 1 Tag von Beispiel 16**

| Beispiel | Formulierung / Testsubstanz in der wässrigen Spritzbrühe (Gew.-%) | Wirkstoff | Acetamiprid Konzentration (g/l) in der wässrigen Spritzbrühe | % Penetration Acetamiprid bei 10 °C in Apfel nach 8 h // n = 5 -7 | % Penetration Acetamiprid bei 10 °C in Apfel nach 1 DAT // n = 5 - 7 |
|---|---|---|---|---|---|
| 16-1 | Mospilan^{®} 20 SG | Acetamiprid | 0,3 | 0,6 | 13,7 |
| 16-2 | 20SG / (0,1) NMP | Acetamiprid | 0,3 | 0,6 | 14,4 |
| 16-3 | 20SG / (0,3) NMP | Acetamiprid | 0,3 | 1,4 | 18,8 |
| 16-4 | 20SG / (0,5) NMP | Acetamiprid | 0,3 | 3,6 | 24,2 |
| 16-5 | 20SG / (0,1) DMSO | Acetamiprid | 0,3 | 1,6 | 15,9 |
| 16-6 | 20SG / (0,3) DMSO | Acetamiprid | 0,3 | 1,5 | 13,4 |
| 16-7 | 20SG / (0,5) DMSO | Acetamiprid | 0,3 | 2,8 | 22,2 |
| 16-8 | 20 SG / (0,1) Isophoron | Acetamiprid | 0,3 | 4,2 | 18,1 |
| 16-9 | 20 SG / (0,3) Isophoron | Acetamiprid | 0,3 | 4,1 | 24,1 |

| Beispiel | Formulierung / Testsubstanz in der wässrigen Spritzbrühe (Gew.-%) | Wirkstoff | Acetamiprid Konzentration (g/l) in der wässrigen Spritzbrühe | % Penetration Acetamiprid bei 10 °C in Apfel nach 8 h // n = 5 - 7 | % Penetration Acetamiprid bei 10 °C in Apfel nach 1 DAT // n = 5 - 7 |
|---|---|---|---|---|---|
| 16-10 | 20 SG / (0,5) Isophoron | Acetamiprid | 0,3 | 4,5 | 16,2 |
| 16-11 | 20 SG / (0,1) Galaster^{®} BL97 | Acetamiprid | 0,3 | 5,4 | 23 |
| 16-12 | 20 SG / (0,3) Galaster^{®} BL97 | Acetamiprid | 0,3 | 5,5 | 19,3 |
| 16-13 | 20 SG / (0,5) Galaster^{®} BL97 | Acetamiprid | 0,3 | 6,6 | 22,8 |
| 16-14 | 20 SG / (0,1) NBP | Acetamiprid | 0,3 | 6,9 | 22,8 |
| 16-15 | 20 SG / (0,3) NBP | Acetamiprid | 0,3 | 23,9 | 48,1 |
| 16-16 | 20 SG / (0,5) NBP | Acetamiprid | 0,3 | 46,1 | 57,7 |

### Beispiel 17: Penetrationsversuche mit Trifluralin bei 10 °C in Birne

**Tabelle 17: Ergebnisse der Penetration nach 1 Tag und nach 3 Tagen von Beispiel 17**

| Beispiel | Formulierung / Testsubstanz in der wässrigen Spritzbrühe (Gew.-%) | Wirkstoff | Trifluralin Konzentration (g/l) in der wässrigen Spritzbrühe | % Penetration Trifluralin bei 10 °C in Birne nach 1 DAT // n = 5 - 7 | % Penetration Trifluralin bei 10 °C in Birne nach 3 DAT // n = 5 - 7 |
|---|---|---|---|---|---|
| 17-1 | EC 540 | Trifluralin | 3,5 | 0,53 | 1,31 |
| 17-2 | EC 540 / (0,1) NMP | Trifluralin | 3,5 | 0,64 | 1,67 |
| 17-3 | EC 540 / (0,3) NMP | Trifluralin | 3,5 | 0,56 | 1,33 |
| 17-4 | EC 540 / (0,5) NMP | Trifluralin | 3,5 | 0,81 | 2,06 |
| 17-5 | EC 540 / (0,1) Isophorone | Trifluralin | 3,5 | 0,76 | 1,97 |
| 17-6 | EC 540 / (0,3) Isophorone | Trifluralin | 3,5 | 0,9 | 2,29 |
| 17-7 | EC 540 / (0,5) Isophorone | Trifluralin | 3,5 | 0,79 | 2,13 |
| 17-8 | EC 540 / (0,1) NBP | Trifluralin | 3,5 | 0,8 | 1,74 |
| 17-9 | EC 540 / (0,3) NBP | Trifluralin | 3,5 | 2,43 | 4,49 |
| 17-10 | EC 540 / (0,5) NBP | Trifluralin | 3,5 | 3,66 | 6,19 |

### Beispiel 18: Penetrationsversuche mit Prothioconazole bei 10 °C und 20 °C in Birne

Es wurden Versuche mit dem Wirkstoff Prothioconazole in Kombination mit entweder Genagen^{®} NBP (N-(n-Butyl)-2-Pyrrolidon) oder Emulsogen^{®} EL 360 (Rhizinusölethoxylat) durchgeführt.

Der Wirkstoff wurde in einem Aceton/Wasser-Gemisch mit einer Konzentration von 2 oder 0,75 g/l gelöst. Die Penetration von Prothioconazole wurde für Blattkutikeln von Birne gemessen. Es wurden Versuche mit Additivsystemen durchgeführt, einerseits mit dem Emulgator Emulsogen^{®} EL 360 als Vergleich und andererseits mit Genagen^{®} NBP als erfindungsgemäßem Versuch mit einem Überschuß von Wirkstoff (Verhältnis Wirkstoff zu Additiv ca. 2 zu 1).

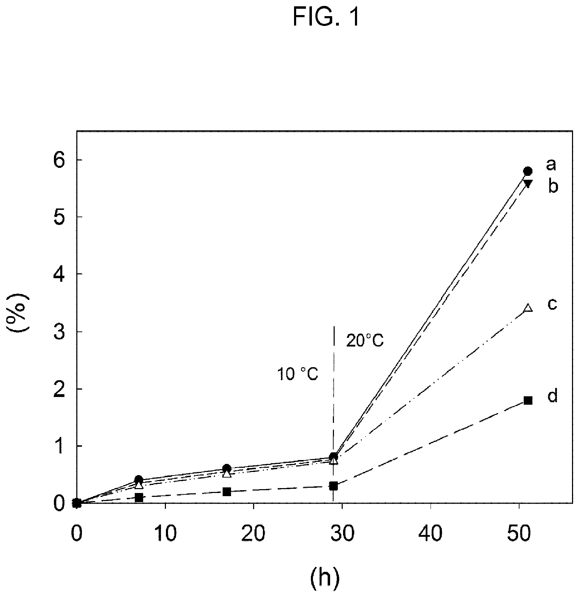

Die Ergebnisse der Penetrationsversuche von Beispiel 18 sind in der Figur "FIG. 1" dargestellt. Die angegebenen Ergebnisse stellen Mittelwerte aus den Messergebnissen von 5-7 Behandlungen dar.

In FIG. 1 bedeutet:
a Prothioconazole (0,75 g/l) + Genagen^{®} NBP (0,4 g/l)
b Prothioconazole (2 g/l) + Genagen^{®} NBP (1 g/l)
c Prothioconazole (0,75 g/l) + Emulsogen^{®} EL 360 (0,4 g/l)
d Prothioconazole (2 g/l) + Emulsogen^{®} EL 360 (1 g/l)

Auf der x-Achse von FIG. 1 ist die Zeit nach Applikation in Stunden (h) angegeben.

Auf der y-Achse von FIG. 1 ist der Anteil an Wirkstoff, der durch die Kutikula der Pflanze penetriert ist, bezogen auf die gesamte auf die Pflanze applizierte Menge an Wirkstoff, in Prozent (%) angegeben.

Die Penetration erfolgte zuerst für ca. einen Tag bei 10°C, danach wurde die Temperatur auf 20°C erhöht bei konstant ca. 60% relativer Luftfeuchte. Die Konzentration von Prothioconazole entsprach praxistypischen Werten (0,75 g/l bzw. 2 g/l Prothioconazole). Das Wasser der Applikationstropfen war makroskopisch vollständig nach spätestens einer Stunde von der Blattkutikula verdunstet. Mit dem Emulgatoradditiv Emulsogen^{®} EL 360, welches auf der Kutikula bzw. Blattoberfläche liegen bleibt, ergibt sich bei Erhöhung der Temperatur von 10°C auf 20°C eine signifikante Zunahme der Menge des in die Pflanze penetrierenden Wirkstoffs bzw. eine signifikante Zunahme der Penetrationsgeschwindigkeit um ein Mehrfaches. Das Genagen^{®} NBP war dabei mit gleichen Einsatzkonzentrationen noch wirksamer. Dies zeigt, dass das N-(n-Butyl)-2-Pyrrolidon auch bei kleinen Einsatzkonzentrationen nachhaltig und unabhängig von Lösungseigenschaften die Penetration fördern kann. Das ist sehr günstig für die Langzeitwirkung bzw. Langzeitverfügbarkeit, die sogenannte "Residual efficacy", insbesondere von Fungiziden und Insektiziden.

### Beispiel 19: Mikroskopische Untersuchungen

### Versuchsdurchführung:

### Es wurden folgende Lösungen 1) bis 6) hergestellt: Lösung 1)

Lösung von 1g Rynaxypyr in einem Liter eines Gemisches aus Aceton und destilliertem Wasser bei einem Gewichtsverhältnis von Aceton : destilliertem Wasser von 30 : 70.

### Lösung 2)

Lösung von 1g Rynaxypyr in einem Liter eines Gemisches aus N-(n-Butyl)-2-Pyrrolidon und destilliertem Wasser bei einem Gewichtsverhältnis von N-(n-Butyl)-2-Pyrrolidon : destilliertem Wasser von 30 : 70.

### Lösung 3)

Lösung von 1g Emamectinbenzoat in einem Liter eines Gemisches aus Aceton und destilliertem Wasser bei einem Gewichtsverhältnis von Aceton : destilliertem Wasser von 30 : 70.

### Lösung 4)

Lösung von 1g Emamectinbenzoat in einem Liter eines Gemisches aus N-(n-Butyl)-2-Pyrrolidon und destilliertem Wasser bei einem Gewichtsverhältnis von N-(n-Butyl)-2-Pyrrolidon : destilliertem Wasser von 30 : 70.

### Lösung 5)

Lösung von 1g Abamectin in einem Liter eines Gemisches aus Aceton und destilliertem Wasser bei einem Gewichtsverhältnis von Aceton : destilliertem Wasser von 30 : 70.

### Lösung 6)

Lösung von 1g Abamectin in einem Liter eines Gemisches aus N-(n-Butyl)-2-Pyrrolidon und destilliertem Wasser bei einem Gewichtsverhältnis von N-(n-Butyl)-2-Pyrrolidon : destilliertem Wasser von 30 : 70.

Mit den Lösungen 1) bis 6) wurde wie im Folgenden beschrieben verfahren (siehe Schritte A) bis C)):
A) Es wurden jeweils 1 µL der oben beschriebenen Lösungen 1) bis 6) auf Objektträger aus silanisiertem Glas appliziert.
B) Die Lösungen wurden auf den Objektträgern bei einer Temperatur von 25 °C und 53% relativer Luftfeuchte 18 Stunden stehen gelassen, wobei eine Trocknung stattfand.
C) Danach wurden die Objektträger begutachtet und Photos am ursprünglichen Rand der Tropfen mit 400-facher Vergrößerung aufgenommen.

Die Photos sind für den agrochemischen Wirkstoff Abamectin in den Figuren FIG. 2A und FIG. 2B, für den agrochemischen Wirkstoff Rynaxapyr in den Figuren FIG. 3A und FIG. 3B und für den agrochemischen Wirkstoff Emamectinbenzoat in den Figuren FIG. 4A und FIG. 4B dargestellt.

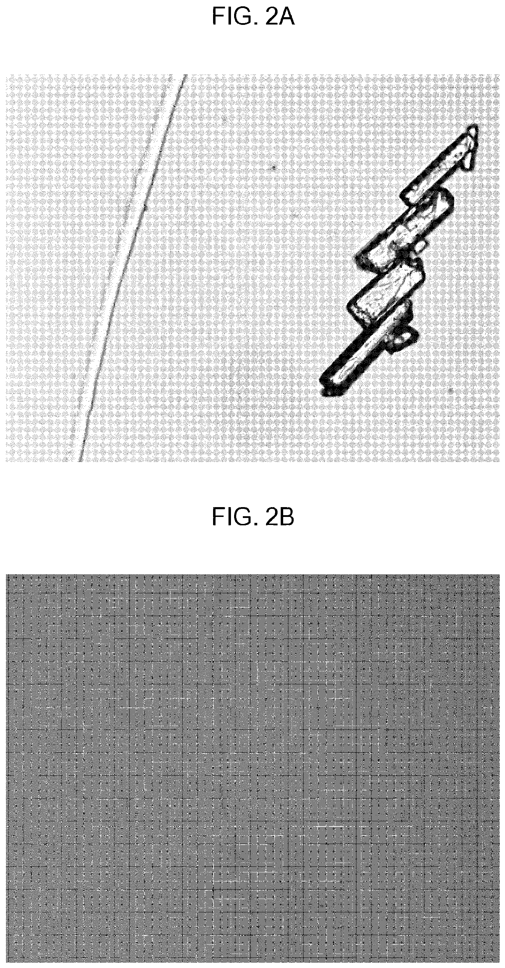

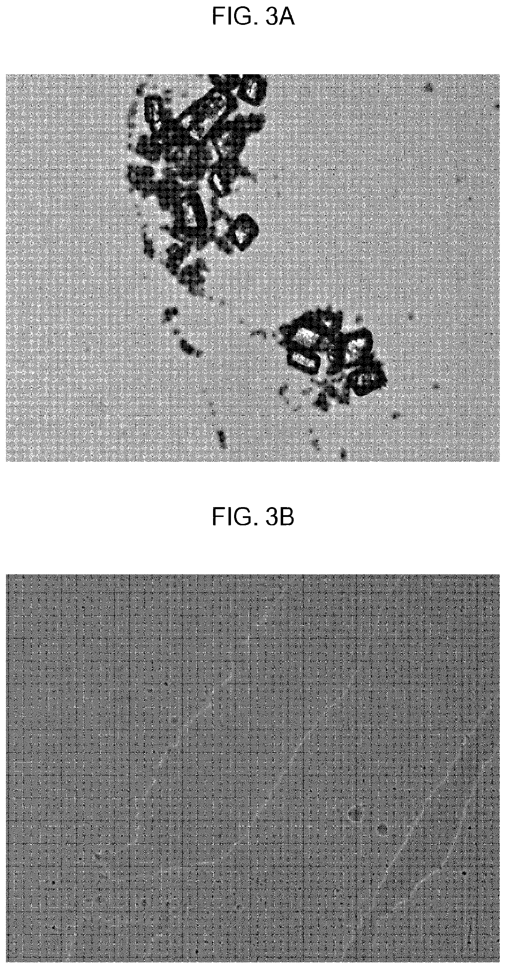

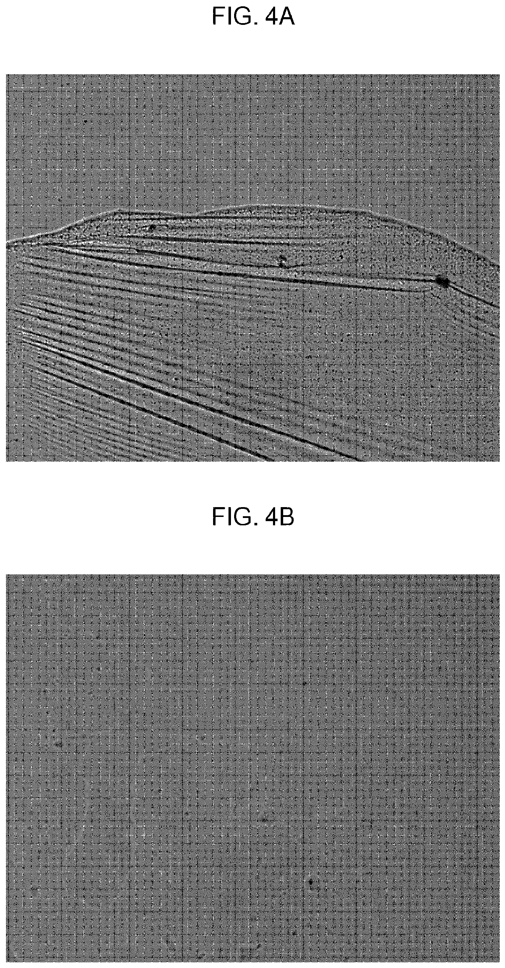

Es wurde gefunden, dass der jeweilige agrochemische Wirkstoff aus dem Gemisch aus Aceton und destilliertem Wasser auskristallisiert war (siehe Figuren FIG. 2A, FIG. 3A und FIG. 4A) und damit nicht mehr in einer biologisch verfügbaren Form vorlag. In dieser kristallinen Form kann der jeweilige agrochemische Wirkstoff nicht in nicht-pflanzliche Schadorganismen penetrieren.

Demgegenüber zeigte sich, dass der jeweilige agrochemische Wirkstoff auch nach 18 Stunden nicht aus dem Gemisch aus N-(n-Butyl)-2-Pyrrolidon und destilliertem Wasser auskristallisiert war, sondern weiterhin in gelöster Form in N-(n-Butyl)-2-Pyrrolidon vorlag (siehe Figuren FIG. 2B, FIG. 3B und FIG. 4B). In dieser gelösten Form kann der jeweilige agrochemische Wirkstoff in nicht-pflanzliche Schadorganismen penetrieren.

### Beispiel 20: Penetrationsversuche mit Abamectin bei 10 °C in Birne

**Tabelle 18: Ergebnisse der Penetration nach 1 Tag und nach 2 Tagen von Beispiel 20**

| Beispiel | Formulierung / Testsubstanz in der wässrigen Spritzbrühe (Gew.-%) auf 10°C | Wirkstoff | Abamectin Konzentration (g/l) in der wässrigen Spritzbrühe | % Penetration (+/-SE) Abamectin bei 10 °C in Birne nach 1 DAT // n = 5 - 7 | % Penetration (+/-SE) Abamectin bei 10 °C in Birne nach 2 DAT // n = 5 - 7 |
|---|---|---|---|---|---|
| 20-1 | EC 18 | Abamectin | 0,05 | 0 | 0,18 |
| 20-2 | EC 18 / (0,1) NMP | Abamectin | 0,05 | 0 | 1,26 |
| 20-3 | EC 18 / (0,3) NMP | Abamectin | 0,05 | 0 | 0,79 |
| 20-4 | EC 18 / (0,5) NMP | Abamectin | 0,05 | 0 | 1,21 |
| 20-5 | EC 18 / (0,1) NBP | Abamectin | 0,05 | 1,4 | 1,52 |
| 20-6 | EC 18 / (0,3) NBP | Abamectin | 0,05 | 1,2 | 1,64 |
| 20-7 | EC 18 / (0,5) NBP | Abamectin | 0,05 | 1,3 | 2,32 |

### Beispiel 21: Penetrationsversuche mit Rynaxypyr bei 10 °C in Birne

**Tabelle 19: Ergebnisse der Penetration nach 1 Tag und nach 2 Tagen von Beispiel 21**

| Beispiel | Formulierung / Testsubstanz in der wässrigen Spritzbrühe (Gew.-%) auf 10°C | Wirkstoff | Rynaxypyr Konzentration (g/l) in der wässrigen Spritzbrühe | % Penetration (+/-SE) Rynaxypyr bei 10 °C in Birne nach 6 h // n = 5 - 7 | % Penetration (+/-SE) Rynaxypyr bei 10 °C in Birne nach 2 DAT // n = 5 - 7 |
|---|---|---|---|---|---|
| 21-1 | SC 200 | Rynaxypyr | 0,1 | 1,17 | 1,36 |
| 21-2 | SC 200 / (0,1) NMP | Rynaxypyr | 0,1 | 0,98 | 1,1 |
| 21-3 | SC 200 / (0,5) NMP | Rynaxypyr | 0,1 | 1,06 | 1,25 |
| 21-4 | SC 200 / (0,1) DMSO | Rynaxypyr | 0,1 | 0,98 | 1,11 |
| 21-5 | SC 200 / (0,5) DMSO | Rynaxypyr | 0,1 | 1,05 | 1,14 |
| 21-6 | SC 200 / (0,1) Galaster BL 97 | Rynaxypyr | 0,1 | 1,42 | 1,47 |
| 21-7 | SC 200 / (0,5) Galaster BL 97 | Rynaxypyr | 0,1 | 1,33 | 1,26 |
| 21-8 | SC 200/ (0,1) Isophoron | Rynaxypyr | 0,1 | 1,1 | 1,15 |
| 21-9 | SC 200 / (0,5) Isophoron | Rynaxypyr | 0,1 | 1,14 | 1,53 |
| 21-10 | SC 200 / (0,1) NBP | Rynaxypyr | 0,1 | 1,34, | 2,35 |
| 21-11 | SC 200 / (0,3) NBP | Rynaxypyr | 0,1 | 6,71 | 11,53 |
| 21-12 | SC 200 / (0,5) NBP | Rynaxypyr | 0,1 | 6,04 | 10,41 |

### Beispiel 22: Penetrationsversuche mit Forchlorfenuron bei 10 °C in Birne

**Tabelle 20: Ergebnisse der Penetration nach 6 h, 1 Tag und nach 3 Tagen von Beispiel 22**

| Beispiel | Formulierung / Testsubstanz in der wässrigen Spritzbrühe (Gew.-%) auf 10°C | Wirkstoff | Forchlorfenuron Konzentration (g/l) in der wässrigen Spritzbrühe | % Penetration (+/-SE) Forchlofenuron bei 10 °C in Birne nach 6 h // n = 5 - 7 | % Penetration (+/-SE) Forchlofenuron bei 10 °C in Birne nach 1 DAT // n = 5-7 | % Penetration (+/-SE) Forchlofenuronb ei 10 °C in Birne nach 3 DAT // n =5-7 |
|---|---|---|---|---|---|---|
| 22-1 | Akzeptor medium | Forchlorfenuron | 0,03 | 2,98 | 8,22 | 12,77 |
| 22-2 | Akzeptor (0,01) medium / NBP | Forchlorfenuron | 0,03 | 9,67 | 23,2 | 33,79 |
| 22-3 | Akzeptor (0,05) medium / NBP | Forchlorfenuron | 0,03 | 21 | 40,88 | 53,39 |

Die Ergebnisse in Tabelle 20 demonstrieren, dass die Herstellung von hochwirksamen Spritzbrühen mit sehr geringem Wirkstoffgehalt (hier 0,03 g/L Forchorfenuron) und sehr geringem Gehalt an NBP möglich ist.

### Beispiel 23: Formulierungen mit Prothioconazole

Es wurden Formulierungen mit dem Wirkstoff Prothioconazole in Kombination mit unterschiedlichen Zusätzen hergestellt. Die Zusammensetzungen der einzelnen Formulierungen gehen aus der nachfolgenden Tabelle 21 hervor. Es zeigt sich, dass der Wirkstoff in allen Formulierungen in hoher Konzentration gelöst vorliegt.

**Tabelle 21**

| Bestandteil | Beispiel 23-1 | Beispiel 23-2 | Beispiel 23-3 | Beispiel 23-4 | Beispiel 23-5 | Beispiel 23-6 | Beispiel 23-7 | Beispiel 23-8 |
|---|---|---|---|---|---|---|---|---|
| Prothioconazole (98,5% RW) [g] | | | | | | | 28,88 | 28,88 |
| Prothioconazole (98% RW) [g] | | | 25,26 | 25,26 | 25,26 | | | |
| Prothioconazole (96% RW) [g] | 20,19 | 25,94 | | | | 30,9 | | |
| Genagen NBP (tel-quel) [g] | 65,51 | 15 | 21 | 44,74 | 27,49 | 34,07 | 32,17 | 32,11 |
| Genagen PA (tel-quel) [g] | | 7,5 | | | 14,7 | | 1,5 | |
| MSO (tel-quel) [g] | | | | | | | | 15 |
| Genagen 4296 (tel-quel) [g] | | | | | | | | 1,5 |
| Agsolex 08 (tel-quel) [g] | | | 26,24 | | | 20 | | |
| Solvesso 200 ND (tel-quel) [g] | | 31,56 | | | | | | |
| Rapsölmethyl- und -ethylester (tel-quel) [g] | | | 12,5 | | 15 | | | |
| Rapsölethylester [g] | | | | | | | 15 | |
| Emulsogen 3510 (tel-quel) [g] | 5 | | | | | | | 5 |
| Synergen 848 (tel-quel) [g] | | | | 10 | 5 | | 5 | |
| Synergen W03 (tel-quel) [g] | | 5 | | | | | | |
| Synergen W09 (tel-quel) [g] | 6,8 | | | | | | | |
| Genapol X 090 (tel-quel) [g] | 2,5 | 4,5 | | | | | | |
| Emulsogen MTP 070 (tel-quel) [g] | | | | 20 | | | | |
| Emulsogen EL 300 (tel-quel) [g] | | 10,5 | | | | | | |
| Emulsogen EL 360 (tel-quel) [g] | | | 15 | | 12,5 | 15 | 17,5 | 17,5 |
| Momentive SAG 1571 (tel-quel) [g] | | | | | 0,05 | 0,03 | 0,01 | 0,01 |
| Total [g] | 100 | 100 | 100 | 100 | 100 | 100 | 100 | 100 |
| Typ¹⁾ | 200 EC | 250 EC | 250 EC | 250 EC | 250 EC | 300 EC | 300 DC | 300 DC |
| 1) X EC = Emulsionskonzentrat mit x g/l Wirkstoffkonzentration; X DC = Dispersionskonzentrat mit x g/l Wirkstoffkonzentration | | | | | | | | |

In Tabelle 21 wird gezeigt, dass der Einsatz von N-substituierten Pyrrolidonen der Formel I die Herstellung von hochkonzentrierten Wirkstoffformulierungen ermöglicht. Die hergestellten Formulierungen waren stabil und erfüllten die gängigen FAO Tests bezüglich Emulgierbarkeit und Dispergierbarkeit. Die hergestellten Formulierungen waren z.B. bei zweiwöchiger Lagerung bei 0° und 54° C stabil, waren redispergierbar und konnten problemlos mit anderen Substanzen in der Spritzflüssigkeit gemischt werden.

Hohe Wirkstoffbeladungen von 300 g/l konnten in Emulsionskonzentraten und in Dispersionskonzentraten realisiert werden.

In Tabelle 21 wird weiterhin gezeigt, dass die N-substituierten Pyrrolidone der Formel I allein als Lösungsmittel verwendet werden können (Beispiel 23-1) oder in Kombination mit anderen Lösungsmitteln.

Die in Tabelle 21 beschriebenen Formulierungen zeigten eine hohe Aufnahmerate (Penetration) die höher als bei marktüblichen Produkten war.

Bei marktüblichen Produkten kommt häufig N,N-Dimethyldecanamid als Penetrations-förderer zum Einsatz. In Tabelle 21 wird gezeigt, dass diese Verbindung in vergleichs-weise niedriger Konzentration als Lösungsmittel und/oder als Kristallisationsinhiabitor in Kombination mit den erfindungsgemäß eingesetzten N-substituierten Pyrrolidonen der Formel I als Penetrationsförderer zu Wirkstoffformulierungen mit sehr hoher Penetrationswirkung eingesetzt werden kann.

### Beispiel 24: Formulierungen mitTrinexapac oder Abamectin und Acetamiprid

Es wurden Formulierungen mit dem Wirkstoff Trinexapac Ethyl bzw. mit Abamectin und Acetamiprid in Kombination mit unterschiedlichen Zusätzen hergestellt. Die Zusammensetzungen der einzelnen Formulierungen gehen aus der nachfolgenden Tabelle 22 hervor. Es zeigt sich, dass die Wirkstoffe in allen Formulierungen in hoher Konzentration gelöst vorliegen.

**Tabelle 22**

| Bestandteil | Beispiel 24-1 | Beispiel 24-2 | Beispiel 24-3 | Beispiel 24-4 |
|---|---|---|---|---|
| Trinexapac Ethyl (97.1% RW) [g | 19,44 | 19,51 | 25,84 | |
| Abamectin (95% RW) [g] | | | | 2,1 |
| Acetamiprid (95% RW) [g] | | | | 10,5 |
| Genagen NBP (tel-quel) [g] | 9,69 | 12,49 | 12,94 | 50,4 |
| Hostaphat 1306 (tel-quel) [g] | 24,42 | 26,55 | | |
| Synergen 848 (tel-quel) [g] | 5 | 5 | | |
| Synergen W03 (tel-quel) [g] | | | | 10 |
| Emulsogen MTP 070 (tel-quel) [g] | 29,02 | 31,5 | | |
| Emulsogen ELO 200 (tel-quel) [g] | | | 10 | 7 |
| Synergen SOC (tel-quel) [g] | | | 51,22 | |
| Triethanolamine (tel-quel) [g] | 7,43 | 4,95 | | |
| MSO (tel-quel) [g] | | | | 10 |
| Wasser (tel-quel) [g] | 5 | | | |
| Total [g] | 100 | 100 | 100 | 100 |
| Typ¹⁾ | 200 EW | 200 DC | 250 EC | 120 EC |
| 1) X EC = Emulsionskonzentrat mit x g/l Wirkstoffkonzentration; X DC = Dispersionskonzentrat mit x g/l Wirkstoffkonzentration; X EW = Öl-In-Wasser-Emulsion mit x g/l Wirkstoffkonzentration | | | | |

In Tabelle 22 wird gezeigt, dass der Einsatz von N-substituierten Pyrrolidonen der Formel I die Herstellung von weiteren hochkonzentrierten Wirkstoffformulierungen, ermöglicht. Die hergestellten Formulierungen waren stabil und erfüllten die gängigen FAO Tests bezüglich Emulgierbarkeit und Dispergierbarkeit. Die hergestellten Formulierungen waren z.B. bei zweiwöchiger Lagerung bei 0° und 54° C stabil, waren redispergierbar und konnten problemlos mit anderen Substanzen in der Spritzflüssigkeit gemischt werden.

Die in Tabelle 22 beschriebenen Formulierungen zeigten eine hohe Aufnahmerate (Penetration).

## Patentansprüche

1. Verwendung eines oder mehrerer N-substituierter Pyrrolidone der Formel (I) 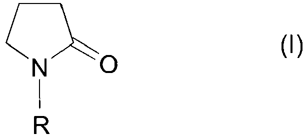 worin
R eine lineare oder verzweigte, gesättigte Alkylgruppe mit 3 bis 6, vorzugsweise 3 bis 5 und besonders bevorzugt 4 Kohlenstoffatomen, bedeutet, wobei in der Alkylgruppe ein Wasserstoff -H durch eine Methoxygruppe -OCH₃ ersetzt sein kann,
und wobei 1 bis 6 Wasserstoffe -H des Pyrrolidonrings durch Methyl -CH₃ ersetzt sein können,
zur Förderung der Penetration eines oder mehrerer agrochemischer Wirkstoffe in Pflanzen oder in nicht-pflanzliche Schadorganismen.

2. Verwendung gemäß Anspruch 1, **dadurch gekennzeichnet, dass** das eine oder die mehreren N-substituierten Pyrrolidone der Formel (I) ausgewählt sind aus der Gruppe bestehend aus N-(n-Butyl)-2-Pyrrolidon, N-(iso-Butyl)-2-Pyrrolidon, N-(tert.-Butyl)-2-Pyrrolidon, N-(n-Pentyl)-2-Pyrrolidon, N-(Methyl-substituiertes Butyl)-2-Pyrrolidon, Ring-Methyl-substituiertes N-(Propyl)-2-Pyrrolidon, Ring-Methyl-substituiertes N-(Butyl)-2-Pyrrolidon und N-(Methoxypropyl)-2-Pyrrolidon.

3. Verwendung gemäß Anspruch 1 oder 2, **dadurch gekennzeichnet, dass** das N-substituierte Pyrrolidon der Formel (I) N-(n-Butyl)-2-Pyrrolidon ist.

4. Verwendung gemäß einem oder mehreren der Ansprüche 1 bis 3, **dadurch gekennzeichnet, dass** das eine oder die mehreren N-substituierten Pyrrolidone der Formel (I) in einem Pflanzenschutzmittel enthaltend
a) 1 bis 90 Gew.-% und vorzugsweise 5 bis 70 Gew.-% an einem oder mehreren N-substituierten Pyrrolidonen der Formel (I) gemäß einem oder mehreren der Ansprüche 1 bis 3, und
b) 1 bis 90 Gew.-% und vorzugsweise 2,5 bis 70 Gew.-% an einem oder mehreren agrochemischen Wirkstoffeneingesetzt werden.

5. Verwendung gemäß einem oder mehreren der Ansprüche 1 bis 4, **dadurch gekennzeichnet, dass** das eine oder die mehreren N-substituierten Pyrrolidone der Formel (I) in einem Pflanzenschutzmittel enthaltend
a) 1 bis 50 Gew.-%, vorzugsweise 5 bis 40 Gew.-% und besonders bevorzugt 5 bis 30 Gew.-% an einem oder mehreren N-substituierten Pyrrolidonen der Formel (I) gemäß einem oder mehreren der Ansprüche 1 bis 3 und
b) 1 bis 90 Gew.-%, vorzugsweise 5 bis 60 Gew.-% und besonders bevorzugt 2,5 bis 50 Gew.-% an einem oder mehreren agrochemischen Wirkstoffeneingesetzt werden.

6. Verwendung gemäß einem oder mehreren der Ansprüche 1 bis 3, **dadurch gekennzeichnet, dass** das eine oder die mehreren N-substituierten Pyrrolidone der Formel (I) in einem Tankmixadditiv enthaltend 1 bis 90 Gew.-%, vorzugsweise 5 bis 50 Gew.-% und besonders bevorzugt 5 bis 20 Gew.-% an einem oder mehreren N-substituierten Pyrrolidonen der Formel (I) gemäß einem oder mehreren der Ansprüche 1 bis 3, und zusätzlich ein oder mehrere Zusatzstoffe und gegebenenfalls Wasser eingesetzt werden.

7. Verwendung gemäß einem oder mehreren der Ansprüche 1 bis 6, **dadurch gekennzeichnet, dass** das eine oder die mehreren N-substituierten Pyrrolidone der Formel (I) in einem Pflanzenschutzmittel in der Form einer wässrigen Spritzbrühe eingesetzt werden.

8. Verwendung gemäß Anspruch 7, **dadurch gekennzeichnet, dass** das eine oder die mehreren N-substituierten Pyrrolidone der Formel (I) in einem Pflanzenschutzmittel in der Form einer wässrigen Spritzbrühe enthalten
a) 0,001 bis 99 Gew.-%, vorzugsweise 0,01 bis 50 Gew.-% und besonders bevorzugt 0,02 bis 1 Gew.-% an einem oder mehreren N-substituierten Pyrrolidonen der Formel (I) gemäß einem oder mehreren der Ansprüche 1 bis 3 und
b) 0,001 bis 10 Gew.-%, vorzugsweise 0,002 bis 5 Gew.-% und besonders bevorzugt 0,0025 bis 3 Gew.-% an einem oder mehreren agrochemischen Wirkstoffeneingesetzt werden.

9. Verwendung gemäß einem oder mehreren der Ansprüche 1 bis 8, vorzugsweise zur Förderung der Penetration in Pflanzen, **dadurch gekennzeichnet, dass** der eine oder die mehreren agrochemischen Wirkstoffe aus systemischen agrochemischen Wirkstoffen ausgewählt werden.

10. Verwendung gemäß einem oder mehreren der Ansprüche 1 bis 9, vorzugsweise zur Förderung der Penetration in Pflanzen, **dadurch gekennzeichnet, dass** der eine oder die mehreren agrochemischen Wirkstoffe aus agrochemischen Wirkstoffen mit einem Log P Wert ≤ 4,5 ausgewählt werden.

11. Verwendung gemäß einem oder mehreren der Ansprüche 1 bis 10 vorzugsweise zur Förderung der Penetration in Pflanzen, **dadurch gekennzeichnet, dass** der eine oder die mehreren agrochemischen Wirkstoffe ausgewählt werden aus der Gruppe bestehend aus Strobilurin Fungiziden, vorzugsweise Azoxystrobin, Pyraclostrobin, Pycoxystrobin, Fluoxastrobin, Oryzastrobin, Picoxystrobin, Trifloxystrobin, Azol Fungiziden, vorzugsweise Prothioconazol, Tebuconazol, Cyproconazol, Difeconazol, Metconazol, Propiconazol, Tetraconazol, Tricyclazol und weiteren Wirkstoffen, vorzugsweise Fluxapyroxad, Boscalid, Bitertanol, Prochloraz, Thiophanate, Chlorothalonil, Dimethomorph, Fenpropimorph, Spiroxamin, Trifluralin, Metribuzin, Saflufenacil, Fenoxaprop-ethyl, Acetolachlor, S-Metolachlor, Pendimethalin, Pinoxaden, Fluroxypyr, Imidacloprid, Thiacloprid, Thiamethoxam, Clothianidin, Acetamiprid, Emamectin benzoat, Lamda-cyhalothrin, Pymetrozine, Chloantraniliprole, Gibberellinsäure, Benzylaminopyrin, Trinexapac-ethyl, Etephon, Thidiazuron.

12. Verwendung gemäß Anspruch 11, vorzugsweise zur Förderung der Penetration in Pflanzen, **dadurch gekennzeichnet, dass** der eine oder die mehreren agrochemischen Wirkstoffe ausgewählt werden aus der Gruppe bestehend aus Strobilurin Fungiziden, vorzugsweise Azoxystrobin, Pyraclostrobin, Fluoxastrobin, Picoxystrobin, Trifloxystrobin, Azol Fungiziden, vorzugsweise Prothioconazol, Tebuconazol, Cyproconazol, Propiconazol,und weiteren Wirkstoffen, vorzugsweise Fluxapyroxad, Bitertanol, Prochloraz, Chlorothalonil, Fenpropimorph, Trifluralin, Metribuzin, Saflufenacil, Fenoxaprop-ethyl, Acetolachlor, S-Metolachlor, Pendimethalin, Pinoxaden, Fluroxypyr, Imidacloprid, Thiacloprid, Thiamethoxam, Clothianidin, Acetamiprid, Gibberellinsäure, Benzylaminopyrin.

13. Verwendung gemäß Anspruch 12, vorzugsweise zur Förderung der Penetration in Pflanzen, **dadurch gekennzeichnet, dass** der eine oder die mehreren agrochemischen Wirkstoffe ausgewählt werden aus der Gruppe bestehend aus Azoxystrobin, Pyraclostrobin, Fluoxastrobin, Trifloxystrobin, Prothioconazol, Tebuconazol, Fluxapyroxad, Bitertanol, Prochloraz, Chlorothalonil, Fenpropimorph, Trifluralin, Metribuzin, Saflufenacil, Fenoxaprop-ethyl, Pendimethalin, Imidacloprid, Thiacloprid, Thiamethoxam, Acetamiprid, Gibberellinsäure, Benzylaminopyrin.

14. Verwendung gemäß einem oder mehreren der Ansprüche 1 bis 8, vorzugsweise zur Förderung der Penetration in nicht-pflanzliche Schadorganismen, **dadurch gekennzeichnet, dass** der eine oder die mehreren agrochemischen Wirkstoffe ausgewählt werden aus der Gruppe bestehend aus Insektiziden der Pyrethroid-Familie, vorzugsweise Cypermethrin, Deltamethrin, Permethrin, Cyfluthrin, Bifenthrin, Lambda Cyhalothrin, Gamma Cyhalothrin; Organophosphat-Insektiziden, vorzugsweise Chlorpyrifos; Benzoylharnstoff-Insektiziden, vorzugsweise Diflubenzuron, lufenuron; anderen Insektiziden, vorzugsweise Abamectin, Emamectinbenzoat, Flubendiamid, Fipronil, Rynaxypyr, Spiromesifen, Spirodiclofen, Fipronil, Indoxacarb; Amid-Fungiziden, vorzugsweise Prochloraz; anderen Fungiziden, vorzugsweise Trifloxystrobin, Mancozeb, Chlorothalonil; Herbiziden, vorzugsweise Acetochlor, Propanil, Glufosinate

15. Verwendung gemäß einem oder mehreren der Ansprüche 1 bis 10, vorzugsweise zur Förderung der Penetration in nicht-pflanzliche Schadorganismen, **dadurch gekennzeichnet, dass** der eine oder die mehreren agrochemischen Wirkstoffe ausgewählt werden aus der Gruppe bestehend aus Fenpicoxamid, Bixafen, Isopyrazam Fluopyram, Penthiopyrad und Abamectin.

16. Verfahren zur Förderung der Penetration agrochemischer Wirkstoffe in Pflanzen oder in nicht-pflanzliche Schadorganismen, wobei ein oder mehrere agrochemische Wirkstoffe gleichzeitig oder sequentiell mit einem oder mehreren N-substituierten Pyrrolidonen der Formel (I) gemäß einem oder mehreren der Ansprüche 1 bis 3 auf die Pflanzen aufgebracht werden.

17. Verwendung gemäß einem oder mehreren der Ansprüche 1 bis 15 oder Verfahren gemäß Anspruch 16, **dadurch gekennzeichnet, dass** die Penetration des einen oder der mehreren agrochemischen Wirkstoffe in die Pflanzen oder in die nicht-pflanzlichen Schadorganismen, und vorzugsweise in die Pflanzen, zumindest zeitweise bei einer Temperatur kleiner oder gleich 25°C, vorzugsweise zumindest zeitweise bei einer Temperatur kleiner oder gleich 20°C, besonders bevorzugt zumindest zeitweise bei einer Temperatur kleiner oder gleich 15°C und insbesondere bevorzugt zumindest zeitweise bei einer Temperatur kleiner oder gleich 10°C stattfindet.

## Claims

1. Use of one or more N-substituted pyrrolidones of the formula (I) 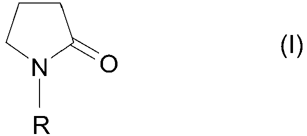 in which
R is a linear or branched, saturated alkyl group having 3 to 6, preferably 3 to 5 and more preferably 4 carbon atoms, where one hydrogen -H in the alkyl group may be replaced by a methoxy group -OCH₃,
and where 1 to 6 hydrogens -H in the pyrrolidone ring may be replaced by methyl -CH₃,
for promotion of the penetration of one or more active agrochemical ingredients into plants or into non-plant harmful organisms.

2. Use according to Claim 1, **characterized in that** the one or more N-substituted pyrrolidones of the formula (I) are selected from the group consisting of N-(n-butyl)-2-pyrrolidone, N-(isobutyl)-2-pyrrolidone, N-(tert-butyl)-2-pyrrolidone, N-(n-pentyl)-2-pyrrolidone, N-(methyl-substituted butyl)-2-pyrrolidone, ring methyl-substituted N-(propyl)-2-pyrrolidone, ring methyl-substituted N-(butyl)-2-pyrrolidone and N-(methoxypropyl)-2-pyrrolidone.

3. Use according to Claim 1 or 2, **characterized in that** the N-substituted pyrrolidone of the formula (I) is N-(n-butyl)-2-pyrrolidone.

4. Use according to one or more of Claims 1 to 3, **characterized in that** the one or more N-substituted pyrrolidones of the formula (I) are used in a crop protection composition comprising
a) 1% to 90% by weight and preferably 5% to 70% by weight of one or more N-substituted pyrrolidones of the formula (I) according to one or more of Claims 1 to 3, and
b) 1% to 90% by weight and preferably 2.5% to 70% by weight of one or more active agrochemical ingredients.

5. Use according to one or more of Claims 1 to 4, **characterized in that** the one or more N-substituted pyrrolidones of the formula (I) are used in a crop protection composition comprising
a) 1% to 50% by weight, preferably 5% to 40% by weight and more preferably 5% to 30% by weight of one or more N-substituted pyrrolidones of the formula (I) according to one or more of Claims 1 to 3 and
b) 1% to 90% by weight, preferably 5% to 60% by weight and more preferably 2.5% to 50% by weight of one or more active agrochemical ingredients.

6. Use according to one or more of Claims 1 to 3, **characterized in that** the one or more N-substituted pyrrolidones of the formula (I) are used in a tankmix additive containing 1% to 90% by weight, preferably 5% to 50% by weight and more preferably 5% to 20% by weight of one or more N-substituted pyrrolidones of the formula (I) according to one or more of Claims 1 to 3, and additionally one or more additives and optionally water.

7. Use according to one or more of Claims 1 to 6, **characterized in that** the one or more N-substituted pyrrolidones of the formula (I) are used in a crop protection composition in the form of an aqueous spray liquor.

8. Use according to Claim 7, **characterized in that** the one or more N-substituted pyrrolidones of the formula (I) are used in a crop protection composition in the form of an aqueous spray liquor comprising a) 0.001% to 99% by weight, preferably 0.01% to 50% by weight and more preferably 0.02% to 1% by weight of one or more N-substituted pyrrolidones of the formula (I) according to one or more of Claims 1 to 3 and
b) 0.001 % to 10% by weight, preferably 0.002% to 5% by weight and more preferably 0.0025% to 3% by weight of one or more active agrochemical ingredients.

9. Use according to one or more of Claims 1 to 8, preferably for promotion of penetration into plants, **characterized in that** the one or more active agrochemical ingredients are selected from systemic active agrochemical ingredients.

10. Use according to one or more of Claims 1 to 9, preferably for promotion of penetration into plants, **characterized in that** the one or more active agrochemical ingredients are selected from active agrochemical ingredients having a log P value ≤ 4.5.

11. Use according to one or more of Claims 1 to 10, preferably for promotion of penetration into plants, **characterized in that** the one or more active agrochemical ingredients are selected from the group consisting of strobilurin fungicides, preferably azoxystrobin, pyraclostrobin, pycoxystrobin, fluoxastrobin, oryzastrobin, picoxystrobin, trifloxystrobin, azole fungicides, preferably prothioconazole, tebuconazole, cyproconazole, difeconazole, metconazole, propiconazole, tetraconazole, tricyclazole and further active ingredients, preferably fluxapyroxad, boscalid, bitertanol, prochloraz, thiophanate, chlorothalonil, dimethomorph, fenpropimorph, spiroxamine, trifluralin, metribuzin, saflufenacil, fenoxaprop-ethyl, acetolachlor, S-metolachlor, pendimethalin, pinoxaden, fluroxypyr, imidacloprid, thiacloprid, thiamethoxam, clothianidin, acetamiprid, emamectin benzoate, lambda-cyhalothrin, pymetrozine, chloantraniliprole, gibberellic acid, benzylaminopyrin, trinexapac-ethyl, etephon, thidiazuron.

12. Use according to Claim 11, preferably for promotion of penetration into plants, **characterized in that** the one or more active agrochemical ingredients are selected from the group consisting of
strobilurin fungicides, preferably azoxystrobin, pyraclostrobin, fluoxastrobin, picoxystrobin, trifloxystrobin,
azole fungicides, preferably prothioconazole, tebuconazole, cyproconazole, propiconazole, and
further active ingredients, preferably fluxapyroxad, bitertanol, prochloraz, chlorothalonil, fenpropimorph, trifluralin, metribuzin, saflufenacil, fenoxaprop-ethyl, acetolachlor, S-metolachlor, pendimethalin, pinoxaden, fluroxypyr, imidacloprid, thiacloprid, thiamethoxam, clothianidin, acetamiprid, gibberellic acid, benzylaminopyrin.

13. Use according to Claim 12, preferably for promotion of penetration into plants, **characterized in that** the one or more active agrochemical ingredients are selected from the group consisting of azoxystrobin, pyraclostrobin, fluoxastrobin, trifloxystrobin, prothioconazole, tebuconazole, fluxapyroxad, bitertanol, prochloraz, chlorothalonil, fenpropimorph, trifluralin, metribuzin, saflufenacil, fenoxaprop-ethyl, pendimethalin, imidacloprid, thiacloprid, thiamethoxam, acetamiprid, gibberellic acid, benzylaminopyrin.

14. Use according to one or more of Claims 1 to 8, preferably for promotion of penetration into non-plant harmful organisms, **characterized in that** the one or more active agrochemical ingredients are selected from the group consisting of
insecticides from the pyrethroid family, preferably cypermethrin, deltamethrin, permethrin, cyfluthrin, bifenthrin, lambda-cyhalothrin, gamma-cyhalothrin; organophosphate insecticides, preferably chlorpyrifos; benzoylurea insecticides, preferably diflubenzuron, lufenuron;
other insecticides, preferably abamectin, emamectin benzoate, flubendiamide, fipronil, rynaxypyr, spiromesifen, spirodiclofen, fipronil, indoxacarb;
amide fungicides, preferably prochloraz;
other fungicides, preferably trifloxystrobin, mancozeb, chlorothalonil; herbicides, preferably acetochlor, propanil, glufosinate.

15. Use according to one or more of Claims 1 to 10, preferably for promotion of penetration into non-plant harmful organisms, **characterized in that** the one or more active agrochemical ingredients are selected from the group consisting of fenpicoxamid, bixafen, isopyrazam, fluopyram, penthiopyrad and abamectin.

16. Method of promoting the penetration of active agrochemical ingredients into plants or into non-plant harmful organisms, wherein one or more active agrochemical ingredients are applied to the plants simultaneously or sequentially together with one or more N-substituted pyrrolidones of the formula (I) according to one or more of Claims 1 to 3.

17. Use according to one or more of Claims 1 to 15 or method according to Claim 16, **characterized in that** the penetration of the one or more active agrochemical ingredients into the plants or into the non-plant harmful organisms, and preferably into the plants, takes place at least at times at a temperature of not more than 25°C, preferably at least at times at a temperature of not more than 20°C, more preferably at least at times at a temperature of not more than 15°C and especially preferably at least at times at a temperature of not more than 10°C.

## Revendications

1. Utilisation d'une ou plusieurs pyrrolidones N-substituées de formule (I) 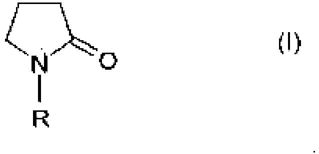 dans laquelle
R signifie un groupe alkyle saturé, linéaire ou ramifié comportant 3 à 6, de préférence 3 à 5 et particulièrement préférablement 4 atomes de carbone, où dans le groupe alkyle, un hydrogène -H peut être remplacé par un groupe méthoxy -OCH₃,
et 1 à 6 hydrogènes -H du cycle pyrrolidone peuvent être remplacés par méthyle -CH₃,
pour la promotion de la pénétration d'un ou plusieurs principes actifs agrochimiques dans des végétaux ou dans des organismes nuisibles non végétaux.

2. Utilisation selon la revendication 1, **caractérisée en ce que** le ou les pyrrolidones N-substituées de formule (I) sont choisies dans le groupe constitué par la N-(n-butyl)-2-pyrrolidone, la N-(iso-butyl)-2-pyrrolidone, la N-(tert.-butyl)-2-pyrrolidone, la N-(n-pentyl)-2-pyrrolidone, la N-(butyle substitué par méthyle)-2-pyrrolidone, la N-(propyl)-2-pyrrolidone substituée par méthyle sur le cycle, la N-(butyl)-2-pyrrolidone substituée par méthyle sur le cycle et la N-(méthoxypropyl)-2-pyrrolidone.

3. Utilisation selon la revendication 1 ou 2, **caractérisée en ce que** la pyrrolidone N-substituée de formule (I) est la N-(n-butyl)-2-pyrrolidone.

4. Utilisation selon l'une ou plusieurs des revendications 1 à 3, **caractérisée en ce que** la ou les pyrrolidones N-substituées de formule (I) sont utilisées dans un produit phytosanitaire contenant
a) 1 à 90 % en poids et de préférence 5 à 70 % en poids d'une ou plusieurs pyrrolidones N-substituées de formule (I) selon l'une ou plusieurs des revendications 1 à 3, et
b) 1 à 90 % en poids et de préférence 2,5 à 70 % en poids d'un ou plusieurs principes actifs agrochimiques.

5. Utilisation selon l'une ou plusieurs des revendications 1 à 4, **caractérisée en ce que** la ou les pyrrolidones N-substituées de formule (I) sont utilisées dans un produit phytosanitaire contenant
a) 1 à 50 % en poids, de préférence 5 à 40 % en poids et particulièrement préférablement 5 à 30 % en poids d'une ou plusieurs pyrrolidones N-substituées de formule (I) selon l'une ou plusieurs des revendications 1 à 3 et
b) 1 à 90 % en poids, de préférence 5 à 60 % en poids et particulièrement préférablement 2,5 à 50 % en poids d'un ou plusieurs principes actifs agrochimiques.

6. Utilisation selon l'une ou plusieurs des revendications 1 à 3, **caractérisée en ce que** la ou les pyrrolidones N-substituées de formule (I) sont utilisées dans un additif de mélange de cuve contenant 1 à 90 % en poids, de préférence 5 à 50 % en poids et particulièrement préférablement 5 à 20 % en poids d'une ou plusieurs pyrrolidones N-substituées de formule (I) selon l'une ou plusieurs des revendications 1 à 3, et de plus un ou plusieurs adjuvants et éventuellement de l'eau.

7. Utilisation selon l'une ou plusieurs des revendications 1 à 6, **caractérisée en ce que** la ou les pyrrolidones N-substituées de formule (I) sont utilisées dans un produit phytosanitaire sous forme d'une bouillie de pulvérisation aqueuse.

8. Utilisation selon la revendication 7, **caractérisée en ce que** la ou les pyrrolidones N-substituées de formule (I) sont utilisées dans un produit phytosanitaire sous forme d'une bouillie de pulvérisation aqueuse contenant
a) 0,001 à 99 % en poids, de préférence 0,01 à 50 % en poids et particulièrement préférablement 0,02 à 1 % en poids d'une ou plusieurs pyrrolidones N-substituées de formule (I) selon l'une ou plusieurs des revendications 1 à 3 et
b) 0,001 à 10 % en poids, de préférence 0,002 à 5 % en poids et particulièrement préférablement 0,0025 à 3 % en poids d'un ou plusieurs principes actifs agrochimiques.

9. Utilisation selon l'une ou plusieurs des revendications 1 à 8, de préférence pour la promotion de la pénétration dans des végétaux, **caractérisée en ce que** le ou les principes actifs agrochimiques sont choisis parmi les principes actifs agrochimiques systémiques.

10. Utilisation selon l'une ou plusieurs des revendications 1 à 9, de préférence pour la promotion de la pénétration dans des végétaux, **caractérisée en ce que** le ou les principes actifs agrochimiques sont choisis parmi des principes actifs agrochimiques présentant une valeur de Log P ≤ 4,5.

11. Utilisation selon l'une ou plusieurs des revendications 1 à 10, de préférence pour la promotion de la pénétration dans des végétaux, **caractérisée en ce que** le ou les principes actifs agrochimiques sont choisis dans le groupe constitué par les fongicides de type strobilurine, de préférence l'azoxystrobine, la pyraclostrobine, la picoxystrobine, la fluoxastrobine, l'oryzastrobine, la picoxystrobine, la trifloxystrobine, les fongicides de type azole, de préférence le prothioconazole, le tébuconazole, le cyproconazole, le diféconazole, le metconazole, le propiconazole, le tétraconazole, le tricyclazole et d'autres principes actifs, de préférence le fluxapyroxad, le boscalid, le bitertanol, le prochloraze, le thiophanate, le chlorothalonil, le diméthomorphe, le fenpropimorphe, la spiroxamine, la trifluraline, la métribuzine, le saflufenacil, le fénoxaprop-éthyl, l'acétolachlor, le S-métolachlore, la pendiméthaline, le pinoxaden, le fluroxypyr, l'imidaclopride, le thiaclopride, le thiaméthoxame, la clothianidine, l'acétamipride, l'émamectine benzoate, la lambda-cyhalothrine, la pymétrozine, le chloranthraniliprole, l'acide gibbérellique, la benzylaminopyrine, le trinexapac-éthyl, l'éthéphon, le thidiazuron.

12. Utilisation selon la revendication 11, de préférence pour la promotion de la pénétration dans des végétaux, **caractérisée en ce que** le ou les principes actifs agrochimiques sont choisis dans le groupe constitué par
les fongicides de type strobilurine, de préférence l'azoxystrobine, la pyraclostrobine, la fluoxastrobine, la picoxystrobine, la trifloxystrobine,
les fongicides de type azole, de préférence le prothioconazole, le tébuconazole, le cyproconazole, le propiconazole, et
d'autres principes actifs, de préférence le fluxapyroxad, le bitertanol, le prochloraze, le chlorothalonil, le fenpropimorphe, la trifluraline, la métribuzine, le saflufenacil, le fénoxaprop-éthyl, l'acétolachlor, le S-métolachlore, la pendiméthaline, le pinoxaden, le fluroxypyr, l'imidaclopride, le thiaclopride, le thiaméthoxame, la clothianidine, l'acétamipride, l'acide gibbérellique, la benzylaminopyrine.

13. Utilisation selon la revendication 12, de préférence pour la promotion de la pénétration dans des végétaux, **caractérisée en ce que** le ou les principes actifs agrochimiques sont choisis dans le groupe constitué par l'azoxystrobine, la pyraclostrobine, la fluoxastrobine, la trifloxystrobine, le prothioconazole, le tébuconazole, le fluxapyroxad, le bitertanol, le prochloraze, le chlorothalonil, le fenpropimorphe, la trifluraline, la métribuzine, le saflufenacil, le fénoxaprop-éthyl, la pendiméthaline, le pinoxaden, le fluroxypyr, l'imidaclopride, le thiaclopride, le thiaméthoxame, l'acétamipride, l'acide gibbérellique, la benzylaminopyrine.

14. Utilisation selon l'une ou plusieurs des revendications 1 à 8, de préférence pour la promotion de la pénétration dans des organismes nuisibles non végétaux, **caractérisée en ce que** le ou les principes actifs agrochimiques sont choisis dans le groupe constitué par des insecticides de la famille des pyréthroïdes, de préférence la cyperméthrine, la deltaméthrine, la perméthrine, la cyfluthrine, la bifenthrine, la lambda-cyhalothrine, la gamma-cyhalothrine ; les insecticides de type organophosphate, de préférence le chlorpyrifos ;
les insecticides de type benzoylurée, de préférence le diflubenzuron, le lufénuron ;
d'autres insecticides, de préférence l'abamectin, l'émamectine benzoate, le flubendiamide, le fipronil, le rynaxypyr, le spiromésifène, le spirodiclofène, le fipronil, l'indoxacarbe ;
des fongicides de type amide, de préférence le prochloraze ; d'autres fongicides, de préférence la trifloxystrobine, le mancozèbe, le chlorothalonil ;
des herbicides, de préférence l'acétochlore, le propanil, le glufosinate.

15. Utilisation selon l'une ou plusieurs des revendications 1 à 10, de préférence pour la promotion de la pénétration dans des organismes nuisibles non végétaux, **caractérisée en ce que** le ou les principes actifs agrochimiques sont choisis dans le groupe constitué par le fenpicoxamide, le bixafène, l'isopyrazame, le fluopyrame, le penthiopyrad et l'abamectine.

16. Procédé pour la promotion de la pénétration de principes actifs agrochimiques dans des végétaux ou dans des organismes nuisibles non végétaux, un ou plusieurs principes actifs agrochimiques étant appliqués sur les plantes, simultanément ou en séquence avec une ou plusieurs pyrrolidones N-substituées de formule (I) selon l'une ou plusieurs des revendications 1 à 3.

17. Utilisation selon l'une ou plusieurs des revendications 1 à 15 ou procédés selon la revendication 16, caractérisé(e) en ce que la pénétration du ou des principes actifs agrochimiques dans les végétaux ou dans les organismes nuisibles non végétaux, et préférentiellement dans les végétaux, a lieu au moins temporairement à une température inférieure ou égale à 25 °C, de préférence au moins temporairement à une température inférieure ou égale à 20 °C, particulièrement préférablement au moins temporairement à une température inférieure ou égale à 15 °C et en particulier préférablement au moins temporairement à une température inférieure ou égale à 10 °C.
